# EUROPEAN PATENT APPLICATION

(11) **EP 1 376 394 A1**
(43) Date of publication of application: **02.01.2004**
(21) Application number: 02013583.6
(22) Date of filing: 20.06.2002
(51) Int. Cl.: G06F 17/27

(54) **Methods and systems for processing text elements**

(71) Applicant: SUN MICROSYSTEMS, INC., Palo Alto, California 94303 (US)
(72) Inventor: Lange, Thomas, 22041 Hamburg (DE); Breuer, Matthias, 21220 Seevetal (DE); Pingel, Jürgen, 21502 Geesthacht (DE)
(74) Representative: HOFFMANN - EITLE

(57) **Abstract**

Methods, systems, and articles of manufacture consistent with the present invention process text elements of a document using a check manager program. The check manager program receives at least one text element from a text manipulation program, and sends the at least one text element to a text element checking program to identify whether the at least one text element conforms to predetermined linguistic rules.
Each of the check manager program, the text manipulation program, and the text element checking program are separate from the others.

## Description

### CROSS-REFERENCE TO RELATED APPLICATIONS

### FIELD OF THE INVENTION

The present invention relates to processing text elements of electronic documents, such as by spell checking or grammar checking, and in particular, the invention relates to using a separate module to perform the text element processing.

### BACKGROUND OF THE INVENTION

As is known, a variety of computer programs can be used to manipulate electronic text, such as text contained in documents. Examples of such computer programs include word processing, email, and spreadsheet programs. The text can be checked to determine whether it conforms to linguistic rules, such as, rules for spelling, grammar, hyphenation, language translation, and synonyms. During the check, text elements, such as words can be identified as requiring modification, and then modified. For example, during a spell checking operation, a word that is checked and determined to be misspelled can be replaced with a correctly spelled word.
The process of checking and, as required, modifying text elements within a document is referred to as "processing text elements" for purposes of this disclosure.

Typically, the computer program code for processing text elements is implemented either in the text manipulation program itself (e.g., the word processing or spreadsheet program) or in a separate module that can be used by multiple text manipulation programs. In the first case, the text manipulation program typically has code for iterating from one text portion to the next through the document, and other code for text checking. These code sections can be implemented, for example, as the iterating code calling the text checking code. The size of a text portion being processed can be, for example, a letter, a word, a sentence, a paragraph, or any fraction or combination thereof. During the text element processing, the text manipulation program evaluates output from the text checking code and then modifies a text element as required using text modifying code of the text manipulation program.

Thus, the code required for processing text elements is implemented within the text manipulation program, which has disadvantages. For example, if the text checking code or the text manipulation program's application programming interface ("API") is to be changed, then each text manipulation program would need to be modified and tested. Also, the text manipulation programs require enough memory for code and data processing and enough processing resources to perform the text element processing.

One typical approach to avoid these disadvantages is to implement the text element checking code as a separate program (or module) that is used by multiple text manipulation programs. For example, a word processing program and a spreadsheet program each access a common text element checking program when required. In this case, each text manipulation program has iterating code, as described above, for iterating from one text portion to the next through the document, but they do not have text element checking code. Instead, the text manipulation programs call the separate text element checking program. While this approach saves memory by implementing a common text element checking program for multiple text manipulation programs, it also has disadvantages. For example, if different programs need to call the text element checking program, its API cannot be hidden, which may be necessary if the program has been licensed from a third party and the program or its API is not permitted to be disclosed or made usable by other users.

Also, the text manipulation programs have to identify themselves to the text element checking program each time they invoke an API to call it. This is typically done by the programs providing a token, such as an identifier or a pointer to a data block or an object. The text element checking program must also present data in a format that the program requires, such as data in the proper language. One way of achieving this is to transfer settings for the text checking as parameters from the programs to the text element checking program when it is called. Typically, these settings are stored by the text element checking program and the text element checking program returns a pointer to the data block where the setting is stored.

### SUMMARY OF THE INVENTION

Based on the above-described problems of implementations of text element processing, it is an object to improve them and to provide a text element processing environment with improved flexibility and with reduced memory and processing requirements.

According to an embodiment of the invention, a method in a data processing system for processing text elements may be provided, the data processing system having three programs, a text manipulation program, a check manager program, and a text element checking program, each program being separate from the others, the method being performed by the check manager program comprising the steps of: receiving at least one text element from the text manipulation program; and sending the at least one text element to the text element checking program to identify whether the at least one text element conforms to predetermined linguistic rules.

A program may be provided having instructions adapted to cause data processing means to carry out at least one of the above operations. Further, a computer readable medium may be provided in which a the program is embodied.

According to another embodiment, a data processing system for processing text elements may be provided, the data processing system having three programs, a text manipulation program, a check manager program, and a text element checking program, each program being separate from the others, the check manager program comprising: means for receiving at least one text element from the text manipulation program; and means for sending the at least one text element to the text element checking program to identify whether the at least one text element conforms to predetermined linguistic rules.

According to another embodiment, a data processing client for processing text elements may be provided, including a check manager program cooperating with a text manipulation program and a text element checking program, each program being separate from the others, the data processing client comprising: means for receiving at least one text element from the text manipulation program; and means for sending the at least one text element to the text element checking program to identify whether the at least one text element conforms to predetermined linguistic rules.

Advantageous features of the invention are disclosed in the dependent claims.

The features, utilities, and advantages of the invention will become apparent from the following detailed description of the preferred embodiments of the invention together with the accompanying drawings.

Other systems, methods, features, and advantages of the invention will become apparent to one with skill in the art upon examination of the following figures and detailed description. It is intended that all such additional systems, methods, features, and advantages be included within this description, be within the scope of the invention, and be protected by the accompanying drawings.

### BRIEF DESCRIPTION OF THE DRAWINGS

The accompanying drawings, which are incorporated in and constitute a part of this specification, illustrate an implementation of the invention and, together with the description, serve to explain the advantages and principles of the invention. In the drawings,
- Fig. 1: depicts a block diagram of a data processing system suitable for use with methods and systems consistent with the present invention;

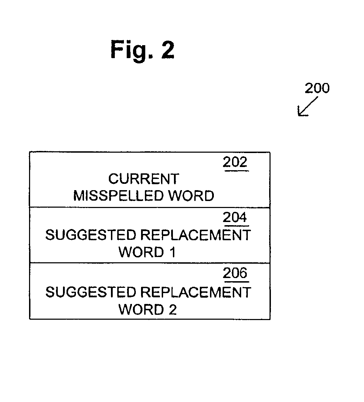

- Fig. 2: depicts a block diagram of a data structure suitable for use with methods and systems consistent with the present invention;
- Fig. 3: depicts a block diagram of a client-server based data processing system suitable for use with methods and systems consistent with the present invention;
- Fig. 4: depicts a flow diagram illustrating the steps performed by a text manipulation program for requesting a check manager program to perform text element processing;
- Fig. 5: depicts a flow diagram illustrating the steps performed by the check manager program for manual text element processing;
- Fig. 6: depicts a video display screen image illustrating user input during manual text element processing;
- Fig. 7: depicts a flow diagram illustrating the steps performed by the check manager program for automatic text element processing; and
- Fig. 8: depicts a video display screen image illustrating user input after automatic text element processing.

### DETAILED DESCRIPTION OF THE INVENTION

Reference will now be made in detail to an implementation consistent with the present invention as illustrated in the accompanying drawings. Wherever possible, the same reference numbers will be used throughout the drawings and the following description to refer to the same or like parts.

Methods, systems, and articles of manufacture consistent with the present invention provide for performing text element processing (such as spell checking) on a document using a check manager program as an intermediary between a text manipulation program (such as a word processing program) and a text element checking program (such as a spell checking program). Accordingly, the text manipulation program is not required to have text element processing capability. Further, the text manipulation program does not has to directly interact with one ore a plurality of text element processing modules or programs and thus be specifically adapted for this interaction. Instead, it only interacts with the check manager program, e.g. it notifies the check manager program when text element processing is required and provides the document to the check manager program, and then the check manager program works with the text element checking program to perform the text element processing. The check manager program creates a check manager object that is used to iterate through the document and effect any modifications to the text elements as required. The check manager object uses an API provided by the text manipulation program to retrieve the document starting position and to modify text elements. This allows text element processing functionality to be removed from the text manipulation program, thus lowering the memory and processing requirements of the text manipulation program and also allows the text element checking program to be modified without affecting the text manipulation program. Further, the check manager program can create multiple simultaneous check manager objects to concurrently process multiple documents.

For example, when a word processing program needs to spell check a document, instead of performing the spell check itself and instead of communicating with a separate spell checking program, the word processing program requests the check manager program to perform the spell check. The check manager program receives the document from the word processing program when the check is requested. The check manager program then creates an object for spell checking the document. The object passes the first paragraph of the document to a spell checking program, which performs a spell check. When the spell checking program notifies the object that a word requires modification, the object requests the word processing program to modify the word in the document by calling an appropriate function from the word processing program's API. Then, the object then iterates through the remaining paragraphs of the document, repeating this process for each remaining paragraph.

In accordance with methods, systems, and articles of manufacture consistent with the present invention, text element processing (such as spell checking) is performed, for example, on a document with the use of a check manager program that is an intermediary between a text manipulation program (such as a word processing program) and a text element checking program (such as a spell checking program).

Accordingly, the text manipulation program is not required to have text element processing capability. Instead, it notifies the check manager program when text element processing is required and provides the document to the check manager program, and then the check manager program works with the text element checking program to perform the text element processing. The check manager program creates a check manager object that is used to iterate through the document and effect any modifications to the text elements as required. The check manager object uses an API provided by the text manipulation program to retrieve the document starting position and to modify text elements. This allows text element processing functionality to be removed from the text manipulation program, thus lowering the memory and processing requirements of the text manipulation program and also allows the text element checking program to be modified without affecting the text manipulation program. Further, the check manager program can create multiple simultaneous check manager objects for a document, thereby allowing multiple text element processing functions to be concurrently performed either on the same document or different documents.

For example, when a word processing program needs to spell check a document, instead of performing the spell check itself and instead of communicating with a separate spell checking program, the word processing program requests the check manager program to perform the spell check. The check manager program receives the document from the word processing program when the check is requested. The check manager program then creates an object for spell checking the document. The object passes the first paragraph of the document to a spell checking program, which performs a spell check. When the spell checking program notifies the object that a word requires modification, the object requests the word processing program to modify the word in the document by calling an appropriate function from the word processing program's API. Then, the object then iterates through the remaining paragraphs of the document, repeating this process for each remaining paragraph.

If the word processing program also needs to perform a grammar check, then the check manager program can create an object for grammar checking the document, which is similar to the object that was created for spell checking, or the spell checking object can also be used to perform the grammar check. The object for grammar checking interacts with a grammar checking program to check the document's grammar, and effects changes to the document via the word processing program's API. Accordingly, the grammar check can be performed concurrently with the spell check.

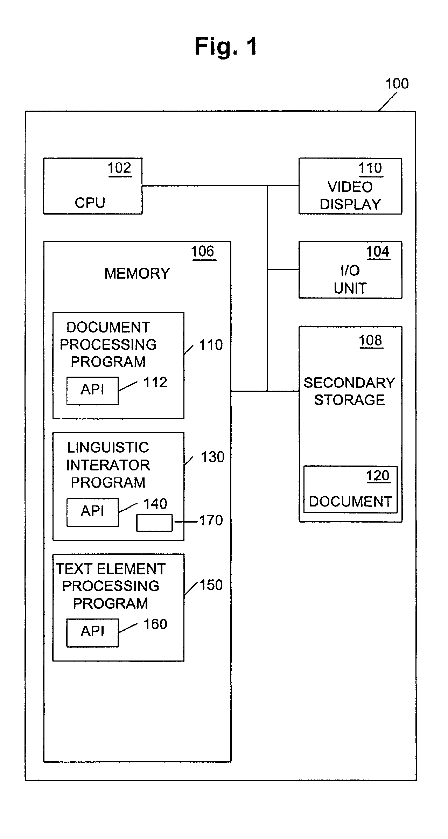

Fig. 1 depicts a block diagram of a data processing system 100 suitable for use with methods and systems consistent with the present invention. Data processing system 100 comprises a central processing unit (CPU) 102, an input output I/O unit 104, a memory 106, a secondary storage device 108, and a video display 110. Data processing system 100 may further comprise standard input devices such as a keyboard, a mouse or a speech processing means (each not illustrated).

Memory 106 contains a text manipulation program 130, such as a word processing or spreadsheet program, for processing, for example, a document 120 that may contain at least one text element (e.g., a word). The text manipulation program 130 has a text manipulation program API 112. The memory also contains a check manager program 130, for iterating through the text elements of the document and for effecting modification of the text elements as required. The check manager program comprises a check manager program API 140. The memory also contains a text element checking program 150 for checking the text elements. The text element checking program checks a text element to determine whether it conforms to linguistic rules, such as, for example, spelling, grammar, hyphenation, translation, or synonym rules, and provides recommended modifications when necessary. The text element checking program comprises a text element checking program API 160.

The text manipulation program can be any type of program that processes documents containing text elements. For example, the text manipulation program can be a word processing program, a spreadsheet program, an email program, or virtually any program that utilizes text. As an illustrative example, the text manipulation program can be the StarOffice® Writer word processing program manufactured by Sun Microsystems, Inc. Sun Microsystems, Sun, the Sun logo, and StarOffice are trademarks or registered trademarks of Sun Microsystems, Inc. in the United States and other countries. StarOffice® Writer has an API, which is known to one having skill in the art, and is described in the StarOffice® Writer API documentation in the attached Appendix A, which is incorporated herein by reference."

The text checking program can be any type of program that checks whether text conforms to predetermined linguistic rules, such as spelling, grammar, hyphenation, language translation, and synonyms. As an illustrative example, the text checking program can be the Ditect spell checking program, which is manufactured by Unternehmensberatung Dieckmann, Hannover, Germany. The Dieckmann spell checking program has an API, which is known to one having skill in the art, and is described in the Dieckmann Ditect API documentation in the attached Appendix B, which is incorporated herein by reference."

The text manipulation program, the check manager program, and the text element checking program are three separate programs. Three separate programs, in this context, means three separate processes communicating across process boundaries using any known communication mechanism, such as, for example, Universal Network Objects (UNO). One having skill in the art will appreciate that the communication mechanism is not limited to inter-process communications and can also be, for example, inter-process communications, remote procedure calls, Common Object Request Broker Architecture (CORBA), or Component Object Model (COM), or any combination of these between the various programs. UNO is manufactured by OpenOffice.org. CORBA is a registered trademark of the Object Management Group, Inc. COM is manufactured by Microsoft Corporation. All product names described herein may be trademarks or registered trademarks of their respective owners. As described herein, the check manager program communicates with the text manipulation program and the text element checking program, but the text manipulation program and the text element checking program do not communicate with each other.

Each of the programs in the memory, as well as their respective APIs, will be described in more detail below. The programs may comprise or may be included in one or more code sections containing instructions for performing their respective operations. While the programs are described as being implemented as software, the present implementation may be implemented as a combination of hardware and software or hardware alone. Also, one of skill in the art will appreciate that programs may comprise or may be included in a data processing device, which may be a server, communicating with data processing system 100.

The check manager program includes a data structure 170 having a plurality of entries, each entry reflecting a first storage area 202 that stores a current word in a document received by the check manager program from the text manipulation program, and a plurality of second storage areas 204 and 206 that each store one of a plurality of suggested replacement words corresponding to the current word received by the check manager program from the text element checking program.

Referring back to Fig. 1, although aspects of one implementation are depicted as being stored in memory, one skilled in the art will appreciate that all or part of systems and methods consistent with the present invention may be stored on or read from other computer-readable media, such as secondary storage devices, like hard disks, floppy disks, and CD-ROM; a carrier wave received from a network such as the Internet; or other forms of ROM or RAM either currently known or later developed. Further, although specific components of data processing system 100 have been described, one skilled in the art will appreciate that a data processing system suitable for use with methods, systems, and articles of manufacture consistent with the present invention may contain additional or different components.

According to another embodiment, a method in a data processing system for processing text elements may be provided, the data processing system having a text manipulation program, a check manager program, and a text element checking program, each program being separate from the others, the method being performed by the check manager program comprising the steps of: receiving at least one text element from the text manipulation program; and sending the at least one text element to the text element checking program to identify whether the at least one text element conforms to predetermined linguistic rules.

Each of the three programs may run as a separate process and may communicate across process boundaries to the other of the three programs and/or at least two of the programs may communicate to each other using inter-process communications.

The predetermined linguistic rules may comprise at least one element of the group consisting of: - spell checking rules; - grammar checking rules; - hyphenation checking rules; - rules for translating the text element to another language; and - rules for finding a synonym for the text element.

A result from the text element checking program may be received, indicating whether or not the text element conforms to the predetermined linguistic rules. The result may indicate that the text element requires modification and may comprise at least one suggestion for modifying the text element. For example, a list of alternatives may be provided for selection. The selection may be performed by any suitable means, e.g. cursor and mouse, a keyboard entry and similar.

Responsive to the received result the text manipulation program may be requested to modify the text element. The modification preferably includes replacing a portion of a text document with the selected modification.

Moreover, a request from the text manipulation program may be received to perform automatic text element processing, wherein the check manager program requests the text manipulation program to modify the text element responsive to a received result from the text element checking program without requiring a user input to approve the modification. Alternatively or in addition thereto a request may be received from the text manipulation program to perform manual text element processing, wherein the check manager program requests the text manipulation program to modify the text element responsive to a result received from the text element checking program and to a user input approving the modification.

The at least one text element may comprise a plurality of paragraphs each having at least one text element; and sending the at least one text element to the text element checking program may comprise sending one paragraph at a time to the text element checking program to identify whether the at least one text element of the paragraph conforms to predetermined linguistic rules.

Alternatively, the at least one text element may comprise a plurality of sentences each having at least one text element; and sending the at least one text element to the text element checking program may comprise sending one sentence at a time to the text element checking program to identify whether the at least one text element of the sentence conforms to predetermined linguistic rules.

Finally, the at least one text element may also be a single word.

Further, the check manager program may receive information on a required type of linguistic rules to be applied from the text manipulation program; and may select at least one of a plurality of text checking programs based on the required type of linguistic rules. The information on the required type of processing further may include at least one of: - a language identifier; - a request for automatic processing; and - a request for interactive processing of text elements.

The text checking program may also handle a user dialogue for controlling an interactive processing of text elements.

Since the text manipulation program only interacts with the check manager program, and the check manager program interacts with the text element checking program, the text manipulation program only needs one API and modifications of the text manipulation program do not entail modifications of a the text element checking program and vice versa.

According to another embodiment, a program is provided having instructions adapted to cause data processing means to carry out at least one of the above outlined operations, and a computer readable medium may be provided, in which the program is embodied.

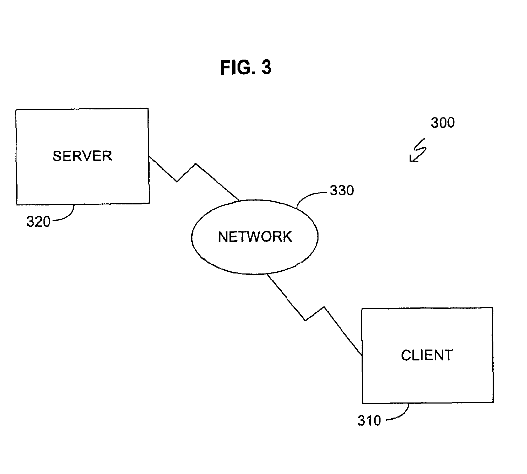

One skilled in the art will appreciate that methods, systems, and articles of manufacture consistent with the present invention may also be implemented in a client-server environment, like the one depicted in Fig. 3. Fig. 3 depicts a block diagram of a client-server based data processing system 300 with which methods, systems, and articles of manufacture consistent with the present invention may be implemented. A client computer system 310 and a server computer system 320 are each connected to a network 330, such as a Local Area Network, Wide Area Network, or the Internet. At least a portion of, for example, the check manager program can be stored on client computer system 310 while some or all steps of the processing as described below can be carried out on server computer system 320, which is accessed by client computer system 310 over network 330. Client computer system 310 and server computer system 320 can each comprise components similar to those described above with respect to data processing system 100, such as a CPU, an I/O, a memory, a secondary storage, and a video display.

In another embodiment, a data processing client for processing text elements includes a check manager program cooperating with a text manipulation program and a text element checking program, each program being separate from the others, the data processing client comprising: means for receiving at least one text element from the text manipulation program; and means for sending the at least one text element to the text element checking program to identify whether the at least one text element conforms to predetermined linguistic rules.

Each of the three programs may run as a separate process and communicates across process boundaries to the other of the three programs and/or at least two of the programs communicate to each other using inter-process communications.

As outlined above, the predetermined linguistic rules comprise: spell checking rules; grammar checking rules; hyphenation checking rules; rules for translating the text element to another language; and rules for finding a synonym for the text element.

The data processing client may further include means for receiving a result from the text element checking program indicating that the text element conforms or does not conform to the predetermined linguistic rules. The result may also comprise an indication that the text element requires modification and, in another example, at least one suggestion for modifying the text element may be provided with the result. The data processing client may instruct the text manipulation program to modify the text element responsive to the received result.

In another example, the data processing client may be adapted to receive a request from the text manipulation program to perform automatic text element processing, and the check manager program may request the text manipulation program to modify the text element responsive to a received result from the text element checking program without requiring a user input to approve the modification.

Alternatively or in addition thereto, the data processing client may further comprise means for receiving a request from the text manipulation program to perform manual text element processing, and the check manager program may request the text manipulation program to modify the text element responsive to a result received from the text element checking program and to a user input approving the modification.

The text elements may comprise a plurality of paragraphs, sentences or words, each having at least one element, and sending the at least one element to the text element checking program may comprise sending one paragraph, sentence or word at a time to the text element checking program to identify whether the at least one element of the paragraph, the sentence or word conforms to predetermined linguistic rules.

Further to the check manager program, the data processing client may also include the text manipulation program, either as separate application programs or as modules communicating with a single handling application.

The data processing client may include a data structure, wherein the check manager program accesses the data structure and wherein the data structure has a plurality of entries, each entry comprising: a first storage area that stores a current text element received from the text manipulating program; and a plurality of second storage areas that each store one of a plurality of suggested replacement text elements corresponding to the current text element, the plurality of suggested replacement text elements received from the text element checking program responsive to the current text element not conforming to predetermined linguistic rules.

Still further, the data processing client may include means for receiving information on a required type of linguistic rules to be applied from the text manipulation program; and means for selecting at least one of a plurality of text checking programs based on the required type of linguistic rules. Individual text checking programs may be provided for different languages and/or different linguistic rules. The information on the required type of processing further may include at least one of: a language identifier; a request for automatic processing; and a request for interactive processing of text elements.

At least some of the above operations and elements may be controlled by user, for example the text checking program may be adapted to handle a user dialogue for controlling an interactive processing of text elements.

Further, a data processing server may be adapted to cooperate with the data processing client as outlined above, and may include a text element checking program cooperating with the text manipulation program and the check manager program, comprising: means for receiving at least one text element from the check manager program; and means for identifying whether the at least one text element conforms to predetermined linguistic rules.

Based on the identification, a result from the text element checking program may be transmitted to the client, indicating whether or not the text element conforms to the predetermined linguistic rules.

The identification operation may be performed employing any suitable process.

The server may be handling a plurality of clients, e.g. through a network or any other communication link.

The data processing server may include means for receiving information on a required type of linguistic rules and/or a language identifier to be applied from the check manager program and may correspondingly select a text element checking program and/or language specific version thereof.

While in the above example the text processing functionality of the text manipulation program and/or the check manager program is allocated to the client and the text element checking program is located at the server, according to further embodiments, the functions and elements may be differently allocated to the server and the client, e.g. the check manager program may be located at least partially at the server, interacting with a user through the client.

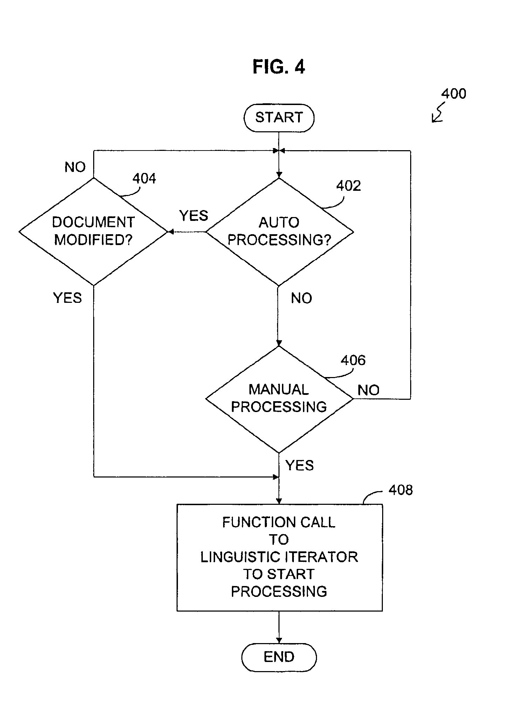

Fig. 4 depicts a flow diagram 400 illustrating exemplary steps performed by the text manipulation program for processing text elements in accordance with methods, systems, and articles of manufacture consistent with the present invention.

It is assumed that the document is stored in the secondary storage or in the memory and is any type of text element containing document that can be processed by the text manipulation program. For example, the document can be a text file or a spreadsheet file that can be processed by a word processing program or a spreadsheet program, respectively.

As briefly described above, the text manipulation program is not required to have text element processing capability. Instead, the text manipulation program notifies the check manager program when text element processing needs to be performed. The text manipulation program, however, comprises the text manipulation program API, which is used by the check manager object to effect text element processing.

The text manipulation program API provides, for example, the following functionalities, which are used by the check manager object during text element processing:
- determining a starting text portion in the document, where the starting text portion can be, for example, at the current cursor position, at the top of the visible area, or at the beginning of the document;
- changing the direction of iteration;
- advancing to the next text portion;
- determining whether all of the text portions have already been processed;
- retrieving the text from the current text portion;
- allowing to modify the text of the current text portion; and
- allowing to modify text attributes of the current text portion, such as highlighting a misspelled word or changing the text language.

These capabilities will be described in more detail below. One of skill in the art will appreciate that the text manipulation program API can provide other functionalities in addition to those listed above. If a known text manipulation program, such as Star Office® Writer is used, its API may need to be expanded to include the above-described functionality. Accordingly, the API will provide one or more functions for each of the above-described functionalities.

The text portions may be characters, words, sentences, or paragraphs. When the text portions are paragraphs, they are large enough to be used for grammar checking. Although the illustrative examples presented herein are described relative to the English language, an embodiment of the present invention can be used with another language. For example, when the text portions are paragraphs, they can be used with Asian-language spell checking programs that require complete sentences.

The text manipulation program is capable of initiating either manual or automatic text element processing. In manual text element processing, the processing is done in one loop over the complete document and the user will be informed when an individual word requires modification, as identified by the text element checking program. In automatic text element processing, the processing is done in the background, while the user is editing the document, and words that require modification will be marked on the video display.

In Fig. 4, first, the text manipulation program determines whether automatic text element processing is enabled, for example, by analyzing a configuration setting that is stored with the text manipulation program (step 402). The text manipulation program can enable automatic text element processing, for example, upon receiving a user input to initiate automatic text element processing.

If the text manipulation program determines in step 402 that automatic text element processing is enabled, then the text manipulation program determines whether the document has been modified (step 404). If the text manipulation program determines in step 404 that the document has not been modified, then the program flow returns to step 402.

In step 402, if the text manipulation program determines that automatic text element processing is not enabled, then the text manipulation program determines whether manual text element processing is enabled (step 406). The text manipulation program can determine whether manual text element processing is enabled, for example, by analyzing a configuration setting that is stored with the text manipulation program. If manual text element processing is not enabled, then the program flow returns to step 402.

When the text manipulation program determines that the document has been modified in step 404 or that manual text element processing is enabled in step 406, then the text manipulation program notifies the check manager program to initiate text element processing and provides the document name to the check manager program (step 408). The text manipulation program does this by function call to the check manager program API, where the function call contains the document and a parameter for automatic or manual text element processing. The function call can also contain a parameter identifying whether the initial direction of the iteration is to be forward or backward through the document.

At this point, the text manipulation program performs no further text element processing, instead the text element processing is managed by the check manager program. As will be described below, however, the check manager program uses the text manipulation program API to retrieve information about the relevant text portions and to modify the text as required.

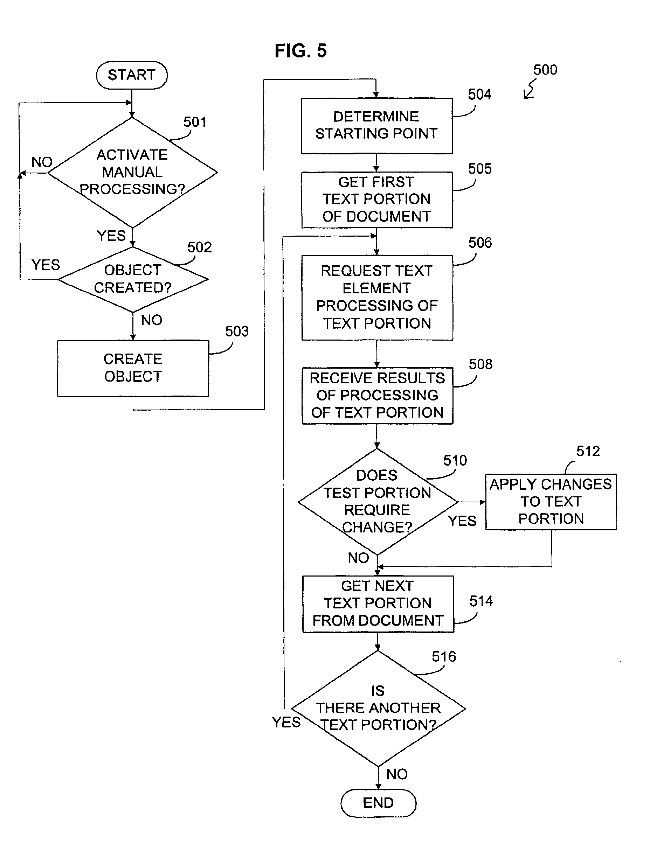

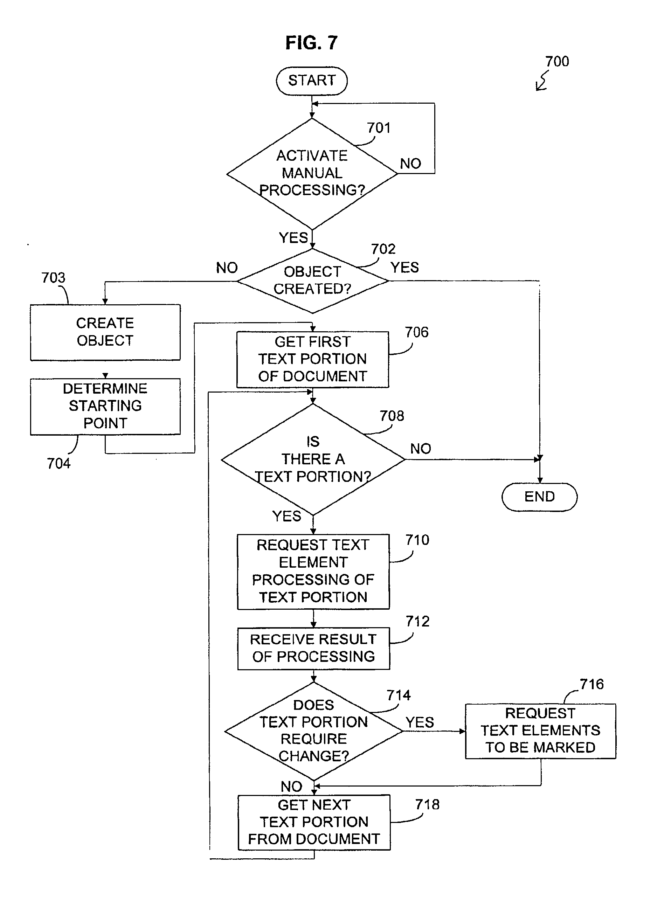

Referring to Fig. 5, Fig. 5 depicts a flow diagram 500 illustrating exemplary steps performed by the check manager program for manually processing text elements in accordance with methods, systems, and articles of manufacture consistent with the present invention. As will be described below, Fig. 7 illustrates the exemplary steps performed by the check manager program for automatic text element processing.

In Fig. 5, first, the check manager program determines whether it has received a request to initiate manual text element processing (step 501). The check manager program receives this request via its check manager program API from the text manipulation program API, as discussed above with reference to Fig. 4. As described above, the request contains the document and a parameter indicating whether the text element processing is to be manually or automatically performed. In step 501, if the check manager program determines that manual text element processing is not to be performed, then the program flow returns to step 501.

If the check manager program determines in step 501 that manual text element processing is to be initiated, then the check manager program determines whether a check manager object has already been created to perform the manual text element processing (step 502). The check manager object comprises the following functionality:
- retrieving a starting text portion in the document from the text manipulation program;
- iterating through the text portions of the document;
- sending text portions to the text checking program;
- requesting the text manipulation program to modify the text of the current text portion; and
- requesting the text manipulation program to modify text attributes of the current text portion.

The check manager object effects these functionalities by invoking respective functions in the text manipulation program and in the text checking program via, respectively, the text manipulation program API or the text checking program API. One having skill in the art will appreciate that the check manager object can provide functionalities in addition to those listed above.

If the check manager program determines in step 502 that a corresponding check manager object has already been created, then program flow returns to step 501. Otherwise, the check manager program creates the check manager object (step 503). When the check manager program creates the check manager object, it also provides the check manager object with the document.

The check manager program can create multiple check manager objects that can perform their various functionalities simultaneously. Accordingly, the check manager program can concurrently perform a plurality of text element processing functions on the document. For example, the text manipulation program can request that the check manager program initiate spell checking and grammar checking. In this case, the check manager program can create two objects, a first object to effect the spell checking and a second object to effect the grammar check. Alternatively, the check manager program can perform simultaneous text element processing on multiple documents, which may be manipulated by different text manipulation programs.

After the check manager object is created in step 503, the check manager object identifies the starting point of the first text portion to be processed (step 504). The text portion can comprise a character, word, sentence, or paragraph. For manual text element processing, the starting point may be the paragraph in which the cursor is located. Alternatively, the starting point may be the first paragraph at the top of the visible area in the active view of the document or the beginning of the document. To identify the starting point, the check manager invokes a function call to the text manipulation program API requesting the starting point. Accordingly, the text manipulation program API returns the starting point of the first text portion, which starting point is received by the check manager object.

Then, the check manager object retrieves, from the document that has been provided to the object, the text portion beginning at the starting point (step 505). For example, the check manager object retrieves the paragraph in which the cursor is currently located. As will be described below, the check manager object will also iterate through and retrieve the remaining paragraphs of the document, if there are any more paragraphs. This functionality of iterating through the document can also be performed by an iterating object that is created by the check manager program, instead of by the check manager object.

Once the text portion is retrieved, the check manager object sends the text portion to the text element checking program for checking (step 506). Prior to doing so, the check manager object may break the text portion into individual text elements, such as words, as required by the text element checking program. Methods for breaking a text portion, such as a paragraph, into words are known to one having skill in the art and will not be described herein. The text portion or the text element is received by the text element checking program through its API. The text element checking program then determines whether a text element needs to be modified. As described above, the text element checking program can check the text element for, for example, spelling, grammar, hyphenation, language translation, or synonyms. Text element checking programs, such as the one described herein are known to one having skill in the art and will not be described in more detail herein.

After the text element checking program checks each text element of the text portion, it returns a result to the check manager object, where the result is received (step 508). The result comprises information on each text element that requires modification. Additionally, the result can comprise suggested modifications for the text elements that require modification. For example, the result can comprise a list of each misspelled word of the text portion and, for each misspelled word, a list of recommended replacement words.

The check manager object then examines the received result to determine whether the text portion requires any modifications (step 510). The check manager object will determine that modifications are required if the result comprises at least one text element that requires modification.

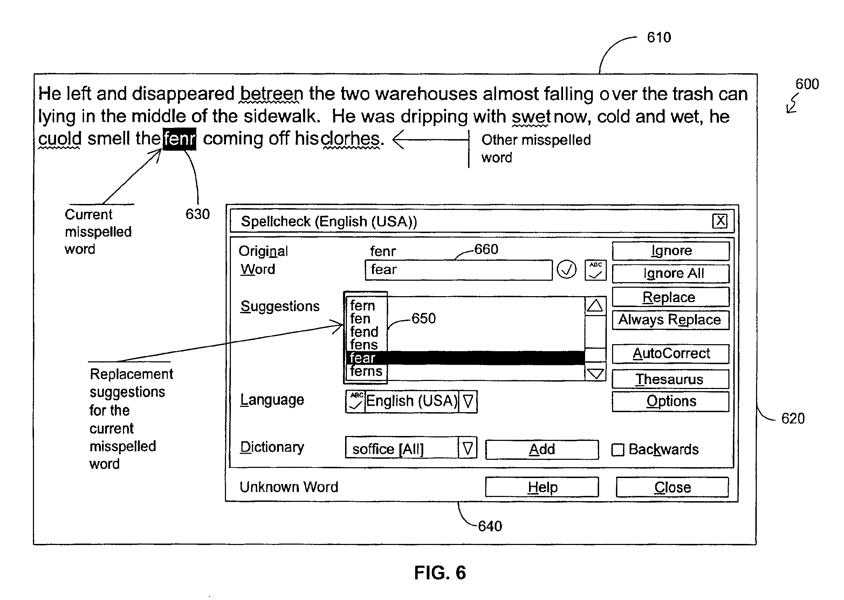

If the check manager object determines in step 510 that changes are required, then the check manager program marks the text requiring modification on the video display and prompts the user for input on whether to implement a modification (step 512). As an example, consider the video display screen image 600 of Fig. 6. The illustrative image 600 depicts a user interface for a word processing program with a text portion 610 of a document 620 displayed at the top of the image. As illustrated, the text portion comprises a paragraph of text. The check manager object requests the text manipulation program API (i.e., the word processing program API in the illustrative example of Fig. 6) to modify the text attributes of each misspelled word that is identified in the text element processing result. The text attributes can be modified in a suitable manner that will notify a user that a word is misspelled. For example, the word's text attributes can be changed to a bold-face or underline font. As shown in Fig. 6, there are five misspelled words, and the text attributes of the misspelled words have been modified to display a wavy underline, indicating that the words are misspelled.

The check manager program then iterates through each misspelled word in the text portion, prompting the user for input on whether to implement a modification to the misspelled word. When the check manager program requires user input for a current word in the iteration, the check manager object requests the word processing program API to modify the text attributes of the current misspelled word to indicate that it is the current misspelled word. In the illustrative example, the current word 630 is "fenr", and the check manager object has requested the word processing program API to display the current word in white on a black background. Alternatively, the check manager object can request to modify other text attributes of the current word, such as its font, color, or font size.

For each misspelled word, the check manager program displays a dialog box 640, prompting the user to make a modification to the misspelled word. As shown in the example of Fig. 6, the dialog box presents the original word "fenr" and a list of suggested replacement words 650. The user can select a suggested replacement word from list 650 or type in a replacement word in a text entry line 660. The replacement word, as well as other inputs made by the user in the dialog box, is received by the check manager program. If the user wants to replace the current word with a chosen replacement word, then the user selects "Replace" to replace the current word in one instance or "Always Replace" to replace the current word in all instances of the document.

Alternatively, the user can select "Ignore" to ignore the current word in one instance, thus leaving the current word misspelled. The user can also select "Ignore All", which will leave each instance of the current word misspelled in the document. Also, if the user selects "Close" then the manual spell checking procedure will be terminated.

As shown, the dialog box also contains an "AutoCorrect" entry for initiating automatic spell checking, which is described below. When the user selects the "Add" entry, the check manager program requests the text element checking program to add the current misspelled word to the current dictionary of the text element checking program. Also, when the user selects the "Language" drop-down menu, the check manager program displays, on the video display, the language dictionaries that can be used by the text element checking program. Accordingly, the user can select an appropriate language dictionary.

The dialog box also contains a "Backwards" entry for reversing direction of the iteration by the check manager program.

The "Options" entry permits the user to change set-up parameters of the check manager program. The "Help" entry permits the user to access a help file, which provides documentation for using the check manager program.

After the check manager program has received user input relating to whether to modify each text element that requires modification, the check manager object requests the text manipulation program API to modify the text of those text elements by replacing the text portion in the document including the modified words.

Referring back to Fig. 5, if the check manager object determines in step 510 that the current text portion does not require modification or after the modification has been completed in step 512, then the check manager object advances to the next text portion, if it exists (step 514). If the check manager object determines that there is not a further text portion (step 516), then the text element processing is terminated.

When the check manager object determines that there is another text portion in step 516, then the program flow returns to step 506, where the check manager program uses the text element checking program to perform text element processing on the next text portion.

Thus, methods, systems, and articles of manufacture consistent with the present invention provide a check manager program for text element processing that is separate from a text manipulation program. This allows text element processing functionality to be removed from the text manipulation program, thus lowering the memory and processing requirements of the text manipulation program and also allows the text element checking program to be modified without affecting the text manipulation program.

It is noted that while the steps depicted in the flow diagrams of this disclosure are illustrated in a particular sequence, the sequences may be varied, for example steps may be interchanged or omitted.

As stated above, the check manager program can also perform automatic text element processing on a document. Automatic text element processing is similar to manual text element processing, however, the check manager does not prompt the user for input during the text element processing. Instead, the check manager object automatically requests the text manipulation program API to mark text elements that require modification by requesting their text attributes to be changed, as described above.

Fig. 7 depicts a flow diagram 700 illustrating exemplary steps performed by the check manager program for automatically processing text elements in accordance with methods, systems, and articles of manufacture consistent with the present invention. In Fig. 7, first, the check manager program determines whether it has received a request to initiate automatic text element processing (step 701). The check manager program receives this request via its check manager program API from the text manipulation program API, as discussed above with reference to Fig. 4. Similar to the request for manual text element processing described above with reference to Fig. 5, the request contains the document and a parameter indicating whether the text element processing is to be manually or automatically performed. In step 701, if the check manager program determines that automatic text element processing is not to be performed, then the program flow returns to step 701.

If the check manager program determines in step 701 that automatic text element processing is to be initiated, then the check manager program determines whether a check manager object for automatic text element processing of the document has already been created (step 702). When a check manager object has already been created, indicating that automatic spell checking is already in progress, the check manager program takes no further action for starting another automatic spell checking operation. Otherwise, the check manager program creates a check manager object, similar to the check manager object described above with reference to Fig. 5 (step 703).

The check manager object identifies the starting point of the first text portion to be processed (step 704). The operation performed in step 704 is similar to the operation described above with reference to step 504 of Fig. 5.

Then, the check manager object retrieves the first text portion from the document (step 706). The operation performed in step 706 is similar to the operation described above with reference to step 505 of Fig. 5.

If the check manager object determines that there is no text portion (step 708), then the text element processing is terminated. This may occur, for example, when automatic text element processing is enabled and the user edits the document by deleting all of its contents. Since, the document has been edited, the text manipulation program will request the check manager program to initiate automatic text element processing, but there will be no text portion to process.

When the check manager object determines that there is a text portion in step 708, then the check manager object sends the text portion to the text element checking program for checking (step 710). The operation performed in step 710 is similar to the operation described above with reference to step 506 of Fig. 5.

Similar to step 508, which was described above with reference to Fig. 5, after the text element checking program checks each text element of the text portion, it returns a result to the check manager object, where the result is received (step 712).

The check manager object then examines the received result to determine whether the text portion requires any modifications (step 714). The check manager object will determine that modifications are required if the result comprises at least one text element that requires modification.

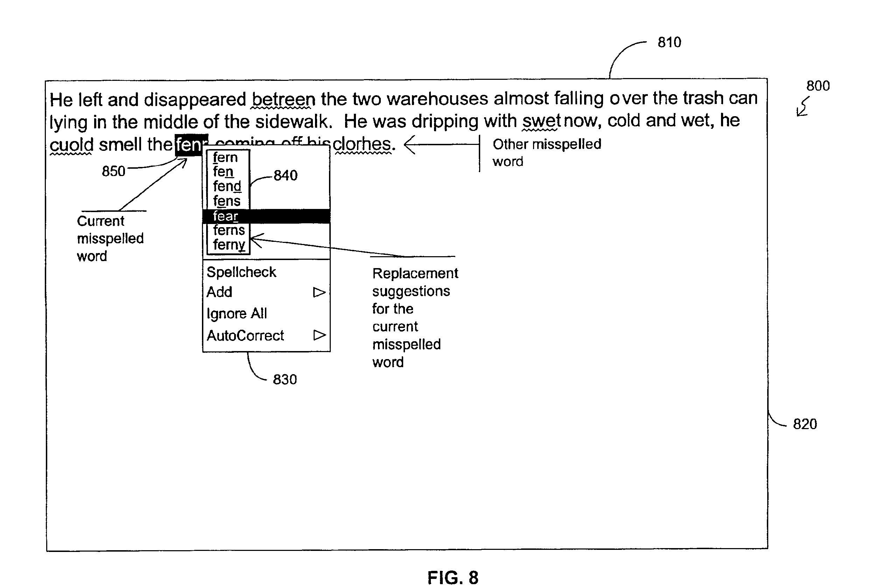

If the check manager object determines in step 714 that modifications are required, then the check manager marks the text elements requiring modification on the video display (step 716). Referring to Fig. 8 as an illustrative example, a video display screen image 800 depicts a user interface for a word processing program with a text portion 810 of a document 820 displayed at the top of the image. Similar to the example depicted above with reference to Fig. 6, the check manager object requests the text manipulation program API (i.e., the word processing program API in the illustrative example of Fig. 8) to modify the text attributes of each misspelled word that is identified in the text element processing result. In this example, there are five misspelled words, and the text attributes of the misspelled words have been modified to display a wavy underline, indicating that the words are misspelled.

Alternatively, the check manager object can request the text manipulation program API to replace the misspelled words with corresponding replacement words that are provided in the processing result from the text element checking program.
The replacement of text in the document is described above with reference to step 512 of Fig. 5. In summary, the check manager makes a separate request to the text manipulation program API for each text element that requires modification. Accordingly, the text manipulation program then modifies the corresponding text element to contain the text of the requested modification. That is, the word is replaced with a replacement word in the document.

Referring back to Fig. 7, if the check manager object determines in step 714 that the current text portion does not require modification or after the text elements have been marked in step 716, then the check manager object advances to the next text portion, if it exists (step 718). Accordingly, the program flow returns to step 708 for the check manager object to determine whether a further text portion exists.

In an embodiment, the check manager program provides a context menu on the user interface that allows the user to modify words that were identified as requiring modification during automatic text element processing. In other words, after automatic text element processing is completed, the user can replace, for example, misspelled words using the check manager program context menu. An illustrative example of a context menu 830 is depicted in Fig. 8. As shown, the context menu displays a list of suggested replacement words for the current misspelled word 850. The check manager program displays the context menu when the user selects the misspelled word, for example, by clicking a right button on a mouse while the mouse's pointer is on top of the misspelled word. The user then selects a desired replacement word from the list, which is received as an input by the check manager program. The check manager object will then request the text manipulation program API to modify the current word by replacing it with the user selected replacement word.

The illustrative context menu also has selections for "Spellcheck," "Add," "Ignore All," and "Auto Correct". When the user selects "Spellcheck," the check manager program will initiate manual spell check processing for the current word. The check manager program performs functions for "Add," "Ignore All," and "Auto Correct", which are similar to their respective functions described above with reference to Figs. 5 and 6.

Thus, methods, systems, and articles of manufacture consistent with the present invention provide a check manager program for automatic and manual text element processing that is separate from a text manipulation program. Also, the text element checking program is separate from the text manipulation program. Thus, since the text element processing functionality is removed from the text manipulation program, the text element checking program can be modified independently of the text manipulation program. Further, the text manipulation program requires lower memory and processing resources.

While the above described examples relate to spell checking, the present invention is not limited thereto. As described above, the text element checking program can check for, for example, grammar, hyphenation, language translation, or synonyms. Further, the check manager program can access multiple text element processing modules, wherein each module checks for different linguistic rules, such as grammar or hyphenation. Also, one of skill in the art will appreciate that the text element checking program is not limited to checking the above-listed linguistic rules, but can check other criteria, such as antonyms. One of skill in the art will also appreciate that the check manager program and the text element checking program can be separate modules of the same program.

According to another embodiment, a method in a data processing system for processing text elements of a document may be provided, the data processing system having three programs, a word processing program, a check manager program, and a spell checking program, each program being separate from the others, the method being performed by the check manager program comprising the steps of: receiving a request from the word processing program to perform spell checking on the document; receiving at least one text element from the word processing program; sending the at least one text element to the spell checking program to identify whether the at least one text element conforms to predetermined spell checking rules; receiving a result of the spell checking from the spell checking program, the result identifying that the at least one text element does not conform to predetermined spell checking rules; and requesting the word processing program to modify the at least one text element responsive to the received result.

According to another embodiment, a computer-readable medium may be provided containing instructions that cause a data processing system to perform a method for processing text elements, the data processing system having three programs, a text manipulation program, a check manager program, and a text element checking program, each program being separate from the others, the method being performed by the check manager program comprising the steps of receiving at least one text element from the text manipulation program; and sending the at least one text element to the text element checking program to identify whether the at least one text element conforms to predetermined linguistic rules.

The three programs may run as a separate process and may communicate across process boundaries to the other of the three programs. Further, at least two of the programs may communicate to each other using inter-process communications.

The predetermined linguistic rules may comprise spell checking rules and/or grammar checking rules and/or hyphenation checking rules and/or rules for translating the text element to another language and/or rules for finding a synonym for the text element.

The computer-readable medium may further be adapted to cause the data processing system to receive a result from the text element checking program indicating that the text element conforms or does not conform to the predetermined linguistic rules. The result may comprise an indication that the text element requires modification and/or at least one suggestion for modifying the text element.

The computer-readable medium may further be adapted to cause the data processing system to request the text manipulation program to modify the text element responsive to the received result.

The computer-readable medium may further be adapted to cause the data processing system to receive a request from the text manipulation program to perform automatic text element processing, wherein the check manager program requests the text manipulation program to modify the text element responsive to a received result from the text element checking program without requiring a user input to approve the modification.

The computer-readable medium may further be adapted to cause the data processing system to receive a request from the text manipulation program to perform manual text element processing, wherein the check manager program requests the text manipulation program to modify the text element responsive to a result received from the text element checking program and to a user input approving the modification.

The at least one text element may comprise a plurality of paragraphs each having at least one text element; and the computer-readable medium may further be adapted to cause the data processing system to send one paragraph or one sentence or one word at a time to the text element checking program to identify whether the at least one text element of the paragraph conforms to predetermined linguistic rules.

In accordance with articles of manufacture consistent with the present invention, a computer-readable medium may be provided containing instructions that cause a data processing system to perform a method for processing text elements, the data processing system having three programs, a word processing program, a check manager program, and a spell checking program, each program being separate from the others, the method being performed by the check manager program comprising the steps of: receiving a request from the word processing program to perform spell checking on the document; receiving at least one text element from the word processing program; sending the at least one text element to the spell checking program to identify whether the at least one text element conforms to predetermined spell checking rules; receiving a result of the spell checking from the spell checking program, the result identifying that the at least one text element does not conform to predetermined spell checking rules; and requesting the word processing program to modify the at least one text element responsive to the received result.

According to still another embodiment, a computer-readable memory device may be provided, encoded with a data structure, a check manager program that accesses the data structure, a text manipulation program, and a text element checking program, each program being separate from the others and being run by a processor in a data processing system, the data structure having a plurality of entries, each entry comprising: a first storage area that stores a current text element received from the text manipulating program; and a plurality of second storage areas that each store one of a plurality of suggested replacement text elements corresponding to the current text element, the plurality of suggested replacement text elements received from the text element checking program responsive to the current text element not conforming to predetermined linguistic rules.

In accordance with methods consistent with the present invention, a method in a data processing system for processing text elements is provided. The data processing system has three programs, a text manipulation program, a check manager program, and a text element checking program, each program being separate from the others. The method, which is performed by the check manager program, comprises the steps of: receiving at least one text element from the text manipulation program; and sending the at least one text element to the text element checking program to identify whether the at least one text element conforms to predetermined linguistic rules.

In accordance with methods consistent with the present invention, a method in a data processing system for processing text elements of a document is provided. The data processing system has three programs, a word processing program, a check manager program, and a spell checking program, each program being separate from the others. The method, which is performed by the check manager program, comprises the steps of: receiving a request from the word processing program to perform spell checking on the document; receiving at least one text element from the word processing program; sending the at least one text element to the spell checking program to identify whether the at least one text element conforms to predetermined spell checking rules; receiving a result of the spell checking from the spell checking program, the result identifying that the at least one text element does not conform to predetermined spell checking rules; and requesting the word processing program to modify the at least one text element responsive to the received result.

In accordance with systems consistent with the present invention, a data processing system is provided. The data processing system comprises: a secondary storage device having at least one text element; a memory comprising three programs, a text manipulation program, a check manager program, and a text element checking program, each program being separate from the others, wherein the check manager program receives the at least one text element from the text manipulation program, and sends the at least one text element to the text element checking program to identify whether the at least one text element conforms to predetermined linguistic rules; and a processing unit that runs the three programs.

In accordance with systems consistent with the present invention, a data processing system for processing text elements is provided. The data processing system has three programs, a text manipulation program, a check manager program, and a text element checking program, each program being separate from the others. The check manager program comprises: means for receiving at least one text element from the text manipulation program; and means for sending the at least one text element to the text element checking program to identify whether the at least one text element conforms to predetermined linguistic rules.

In accordance with systems consistent with the present invention, a data processing system for processing text elements of a document is provided. The data processing system has three programs, a word processing program, a check manager program, and a spell checking program, each program being separate from the others. The check manager program comprises: means for receiving a request from the word processing program to perform spell checking on the document; means for receiving at least one text element from the word processing program; means for sending the at least one text element to the spell checking program to identify whether the at least one text element conforms to predetermined spell checking rules; means for receiving a result of the spell checking from the spell checking program, the result identifying that the at least one text element does not conform to predetermined spell checking rules; and means for requesting the word processing program to modify the at least one text element responsive to the received result.

In accordance with articles of manufacture consistent with the present invention, a computer-readable memory device is provided. The computer-readable memory device is encoded with a data structure, a check manager program that accesses the data structure, a text manipulation program, and a text element checking program, each program being separate from the others and being run by a processor in a data processing system. The data structure has a plurality of entries, each entry comprising: a first storage area that stores a current text element received from the text manipulating program; and a plurality of second storage areas that each store one of a plurality of suggested replacement text elements corresponding to the current text element, the plurality of suggested replacement text elements received from the text element checking program responsive to the current text element not conforming to predetermined linguistic rules.

The foregoing description of an implementation of the invention has been presented for purposes of illustration and description. It is not exhaustive and does not limit the invention to the precise form disclosed. Modifications and variations are possible in light of the above teachings or may be acquired from practicing the invention. For example, the described implementation includes software but the present implementation may be implemented as a combination of hardware and software or hardware alone. The invention may be implemented with both object-oriented and non-object-oriented programming systems. The scope of the invention is defined by the claims and their equivalents.

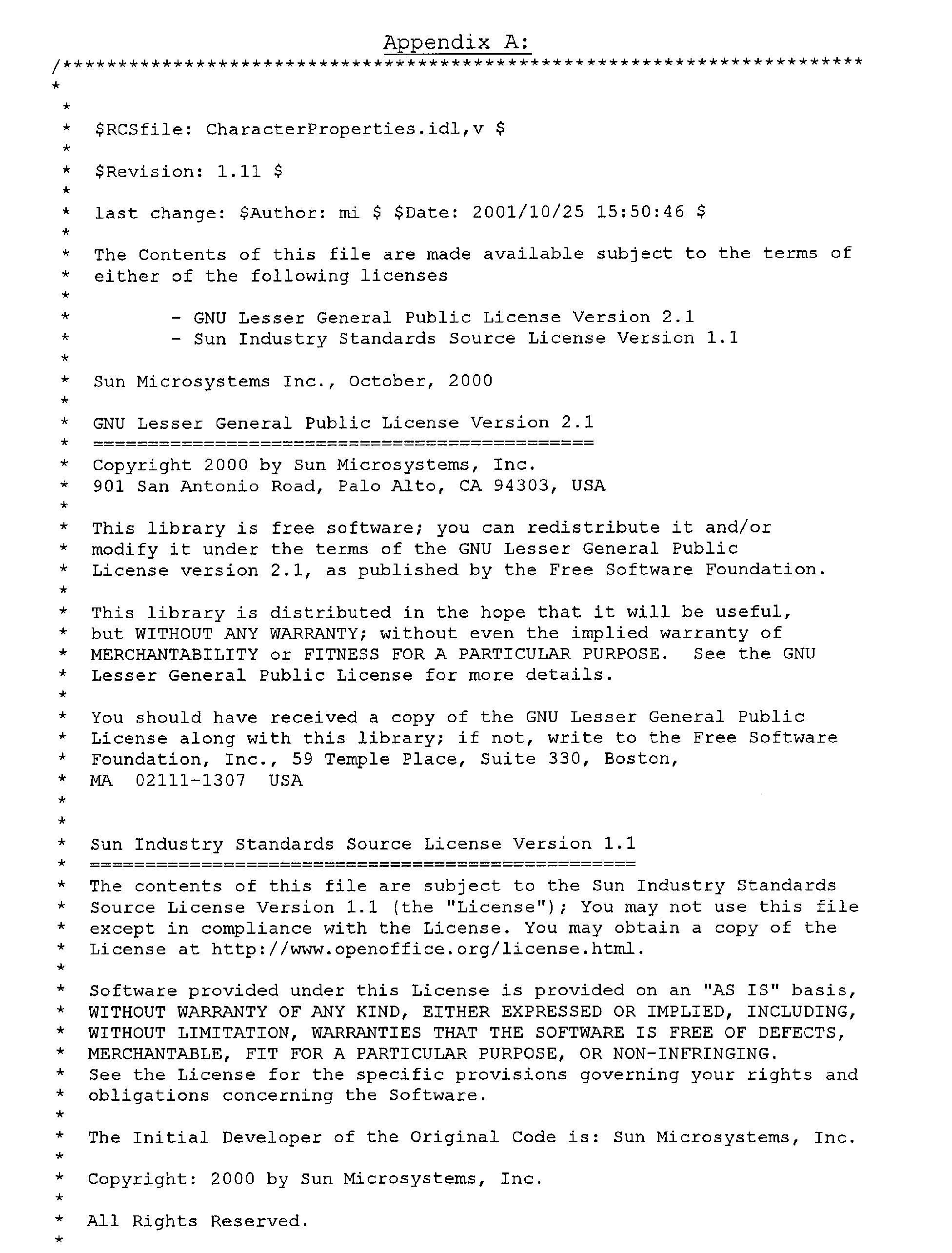

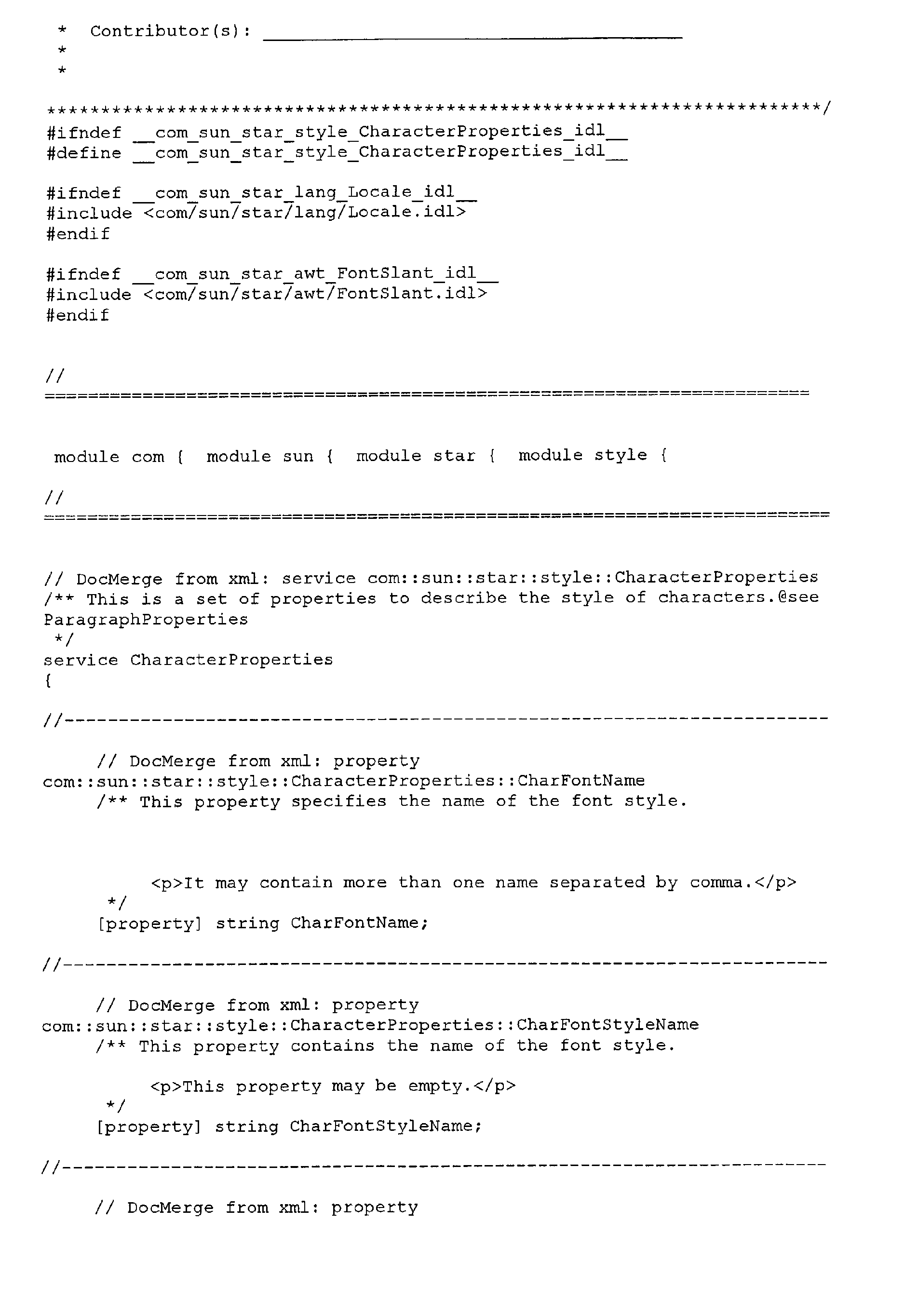

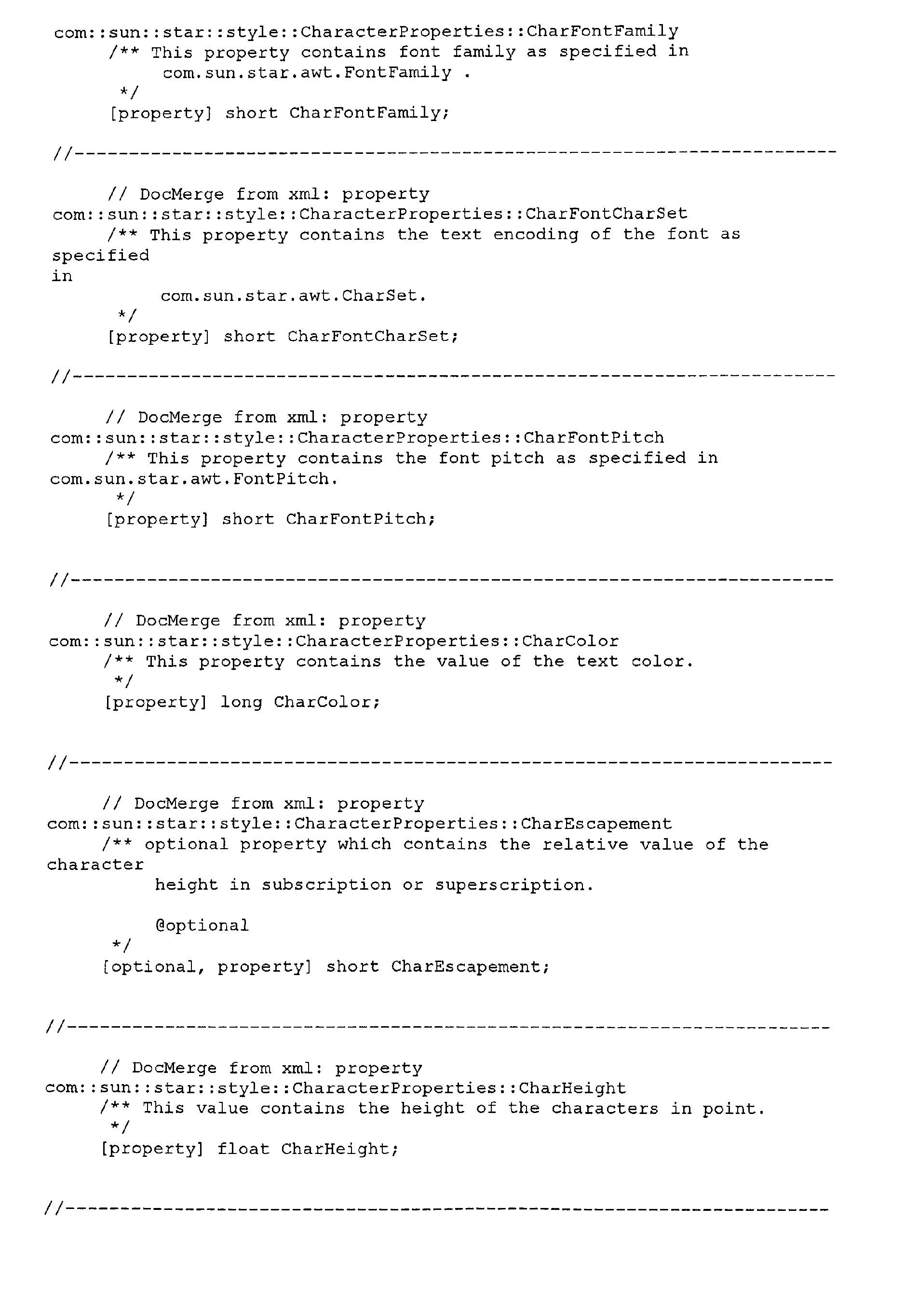

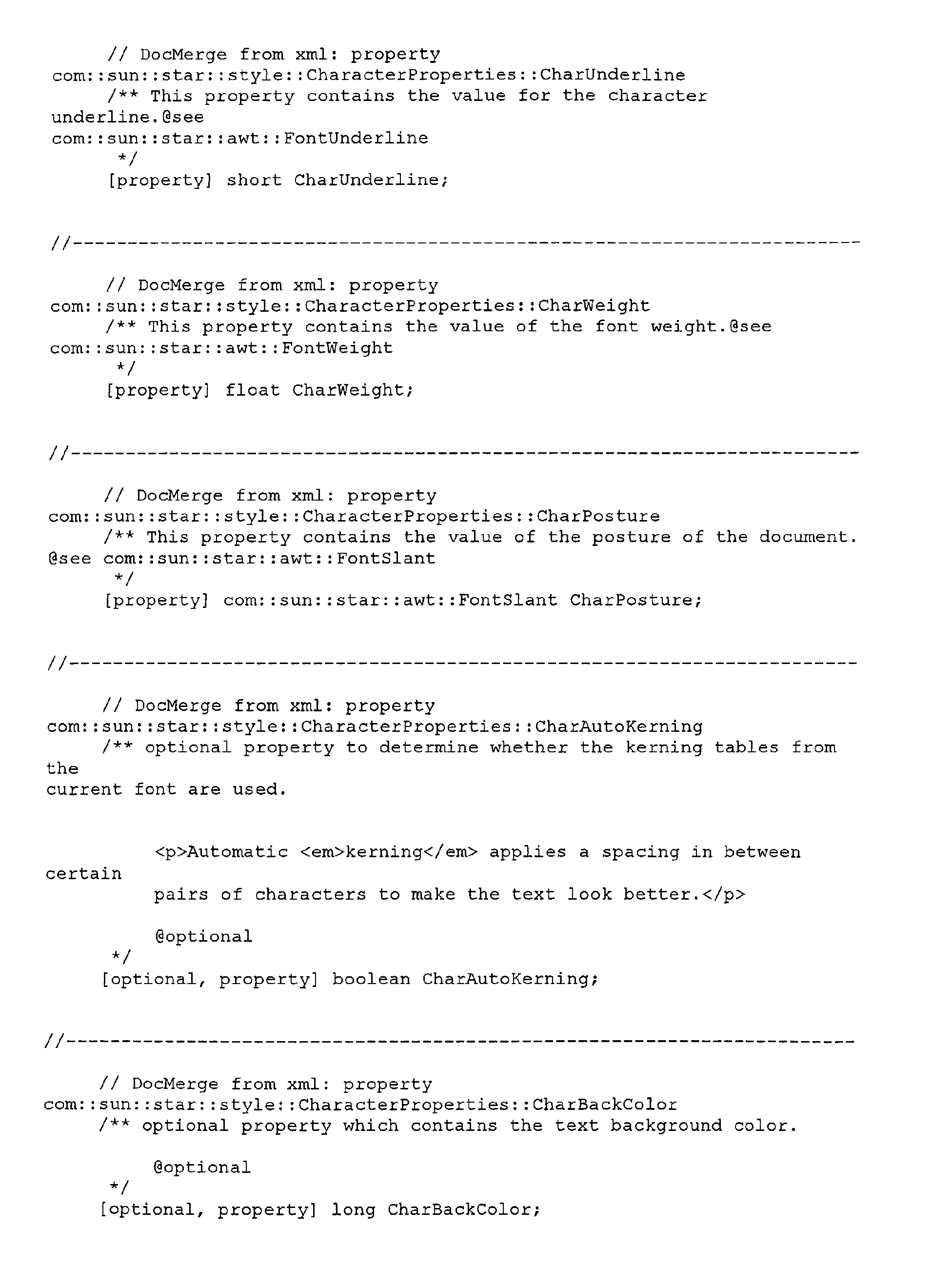

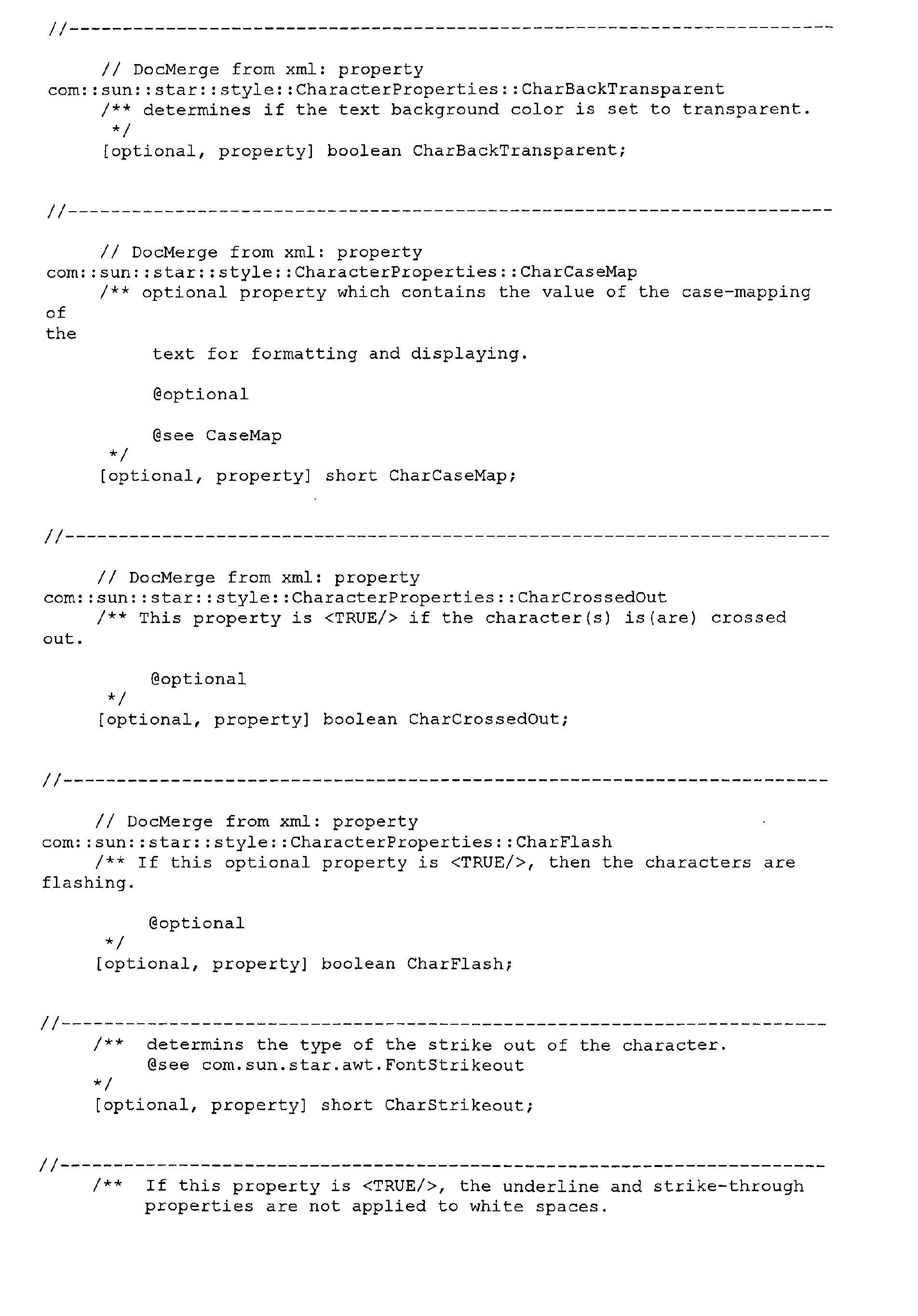

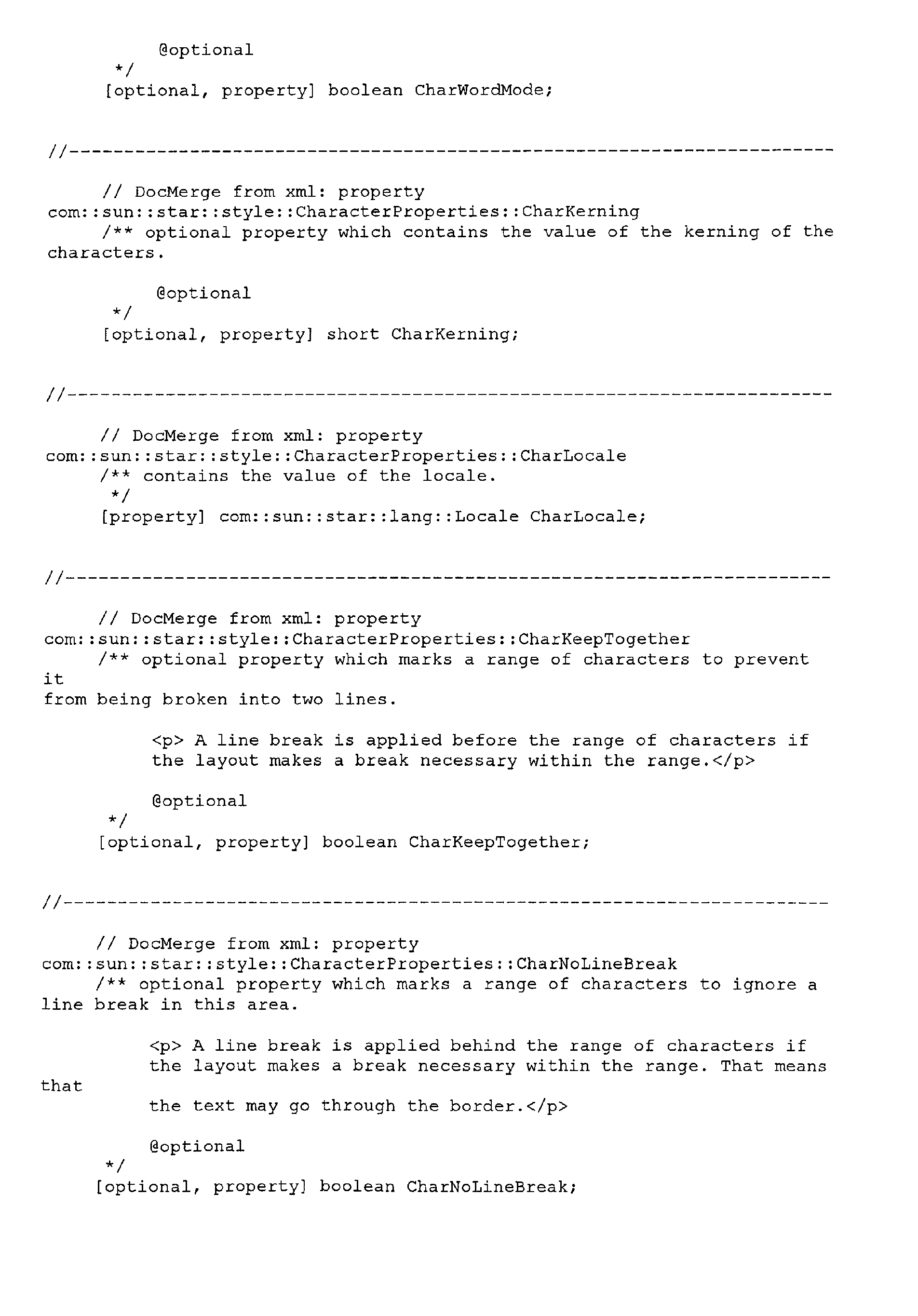

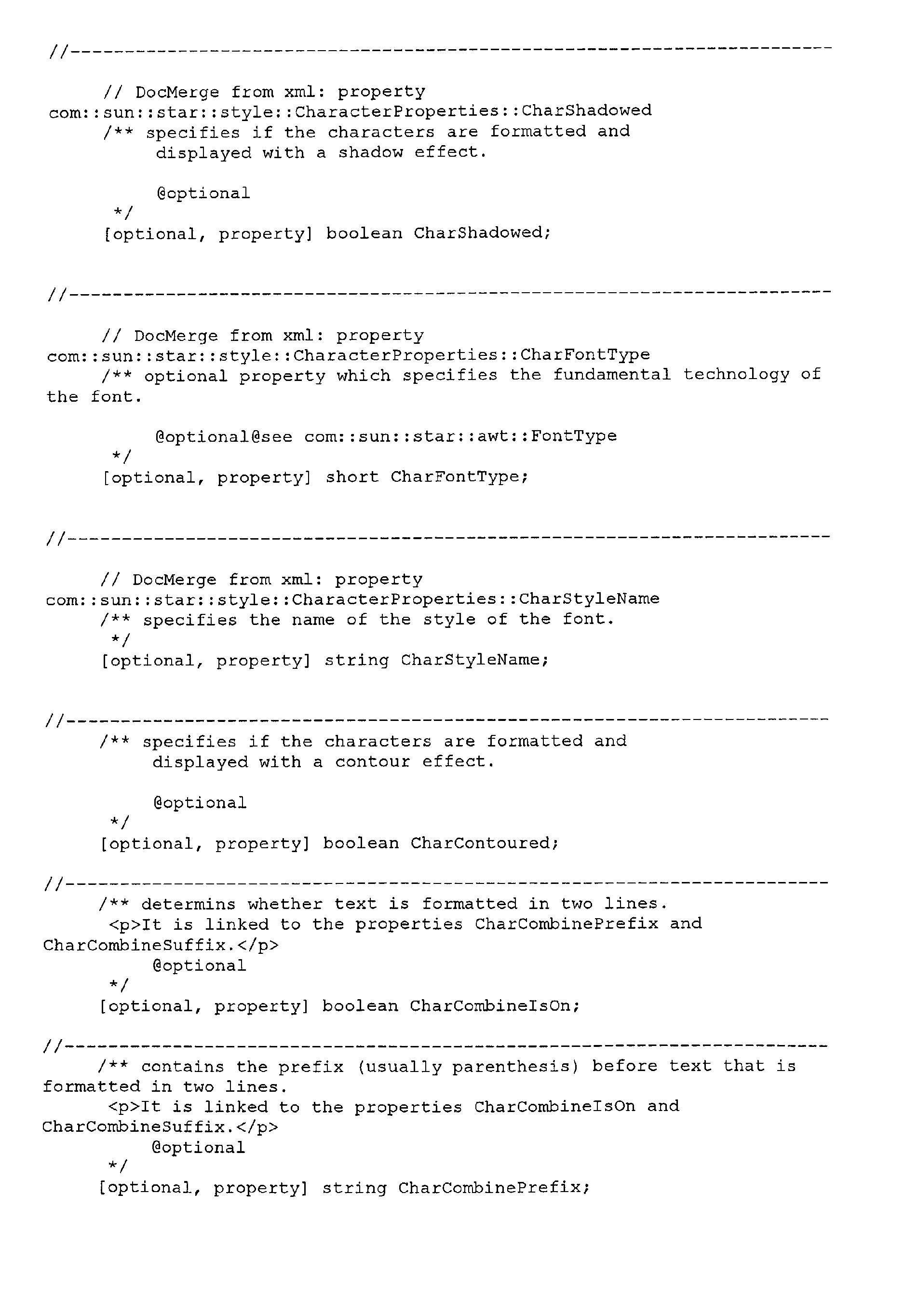

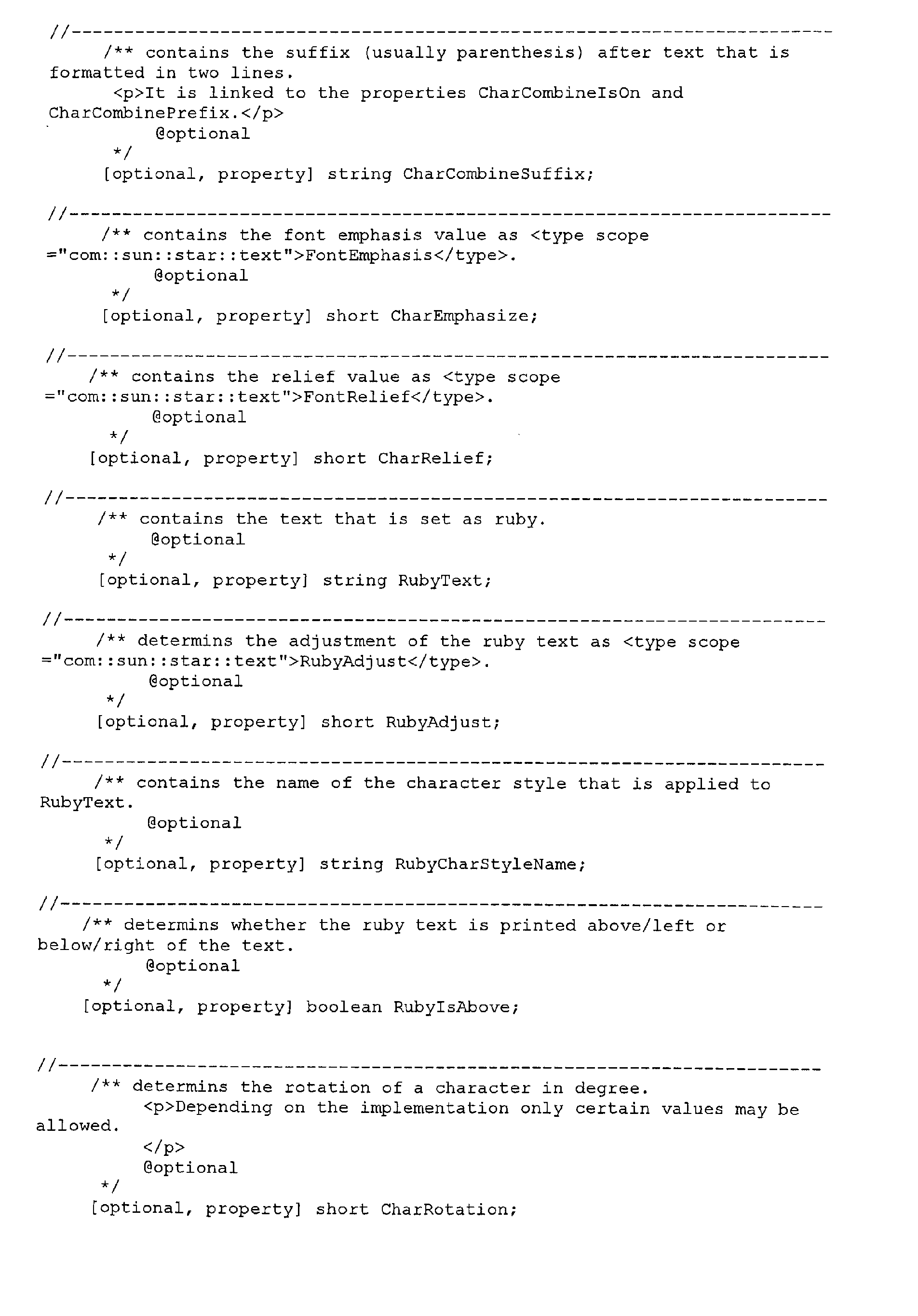

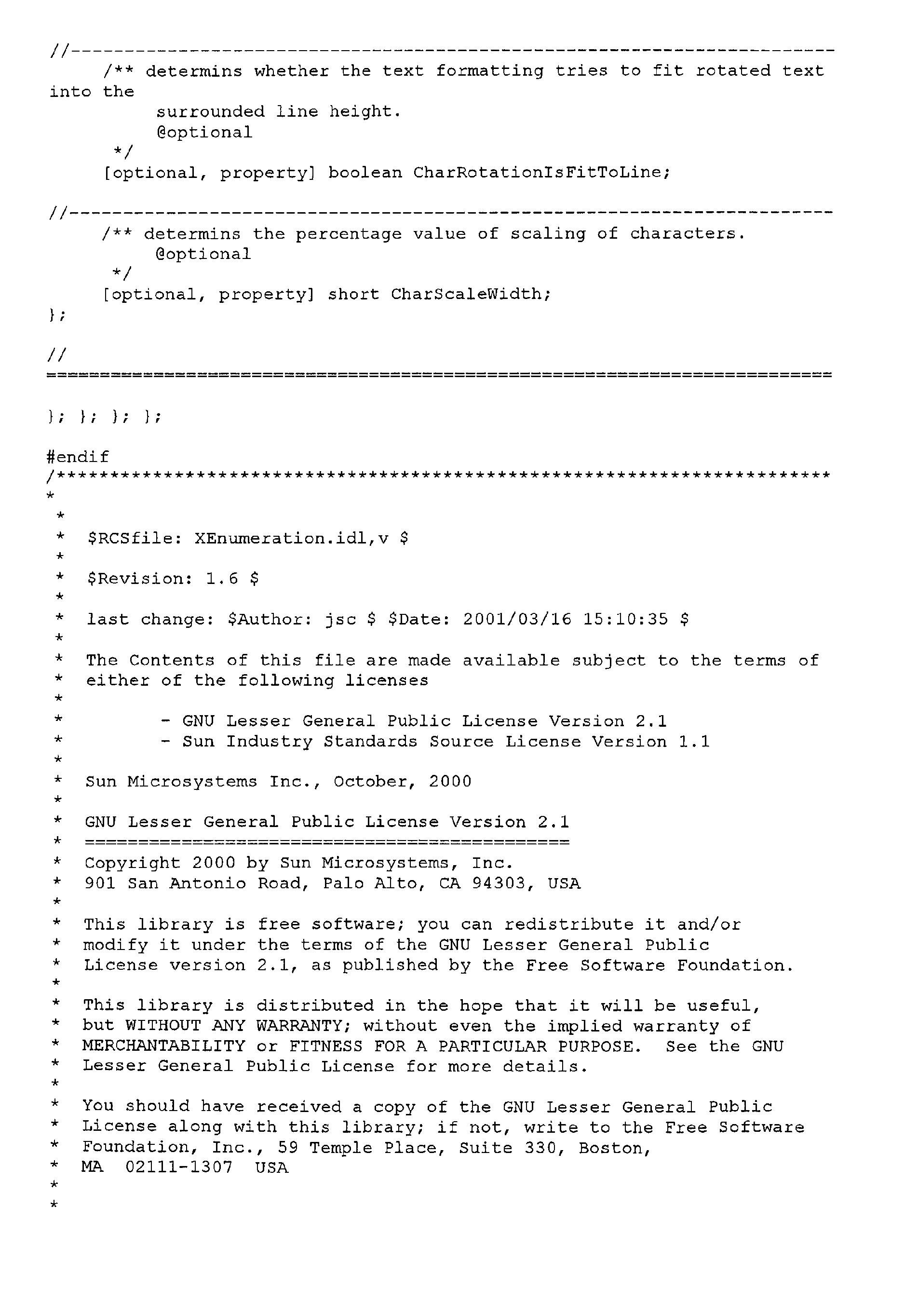

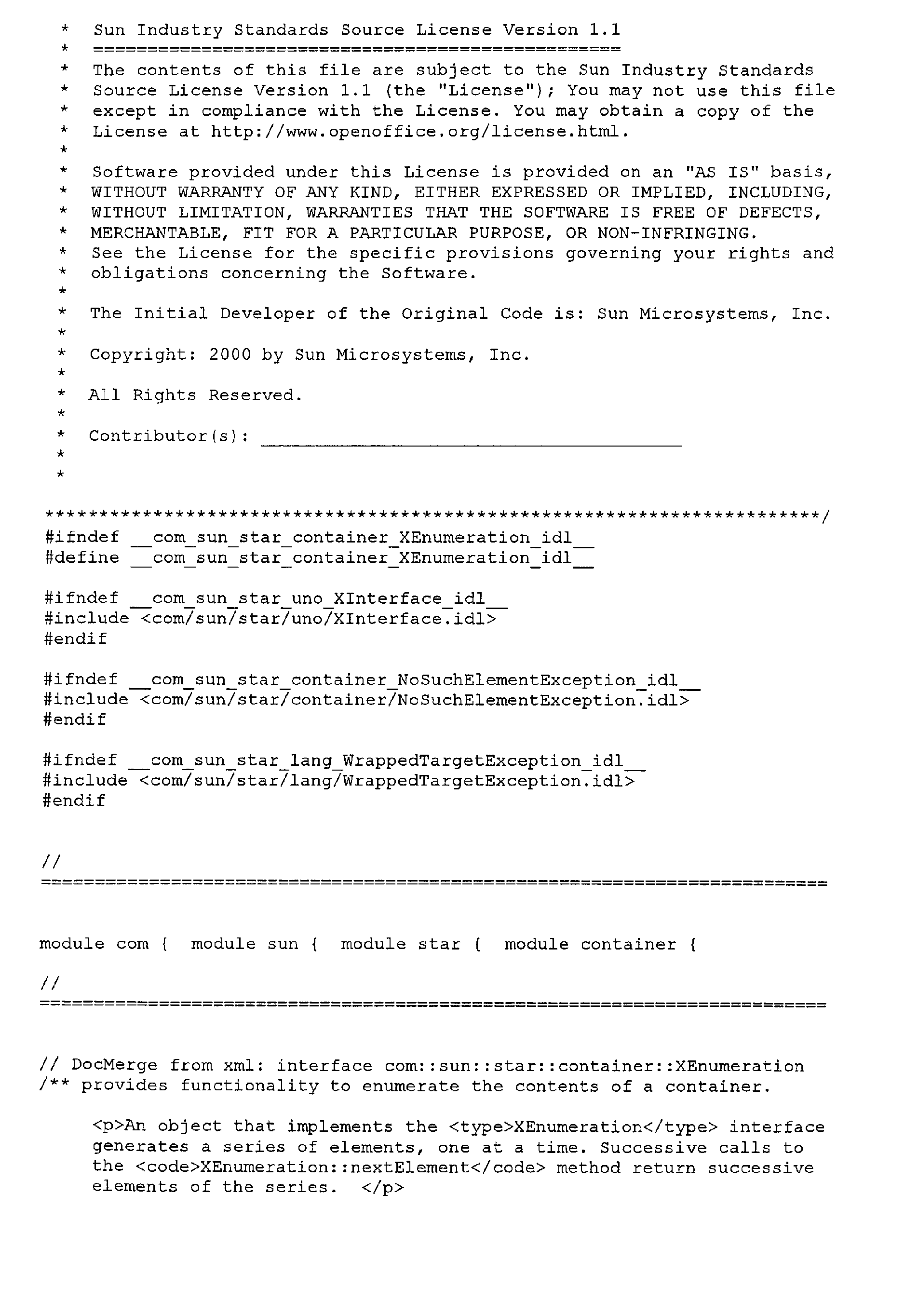

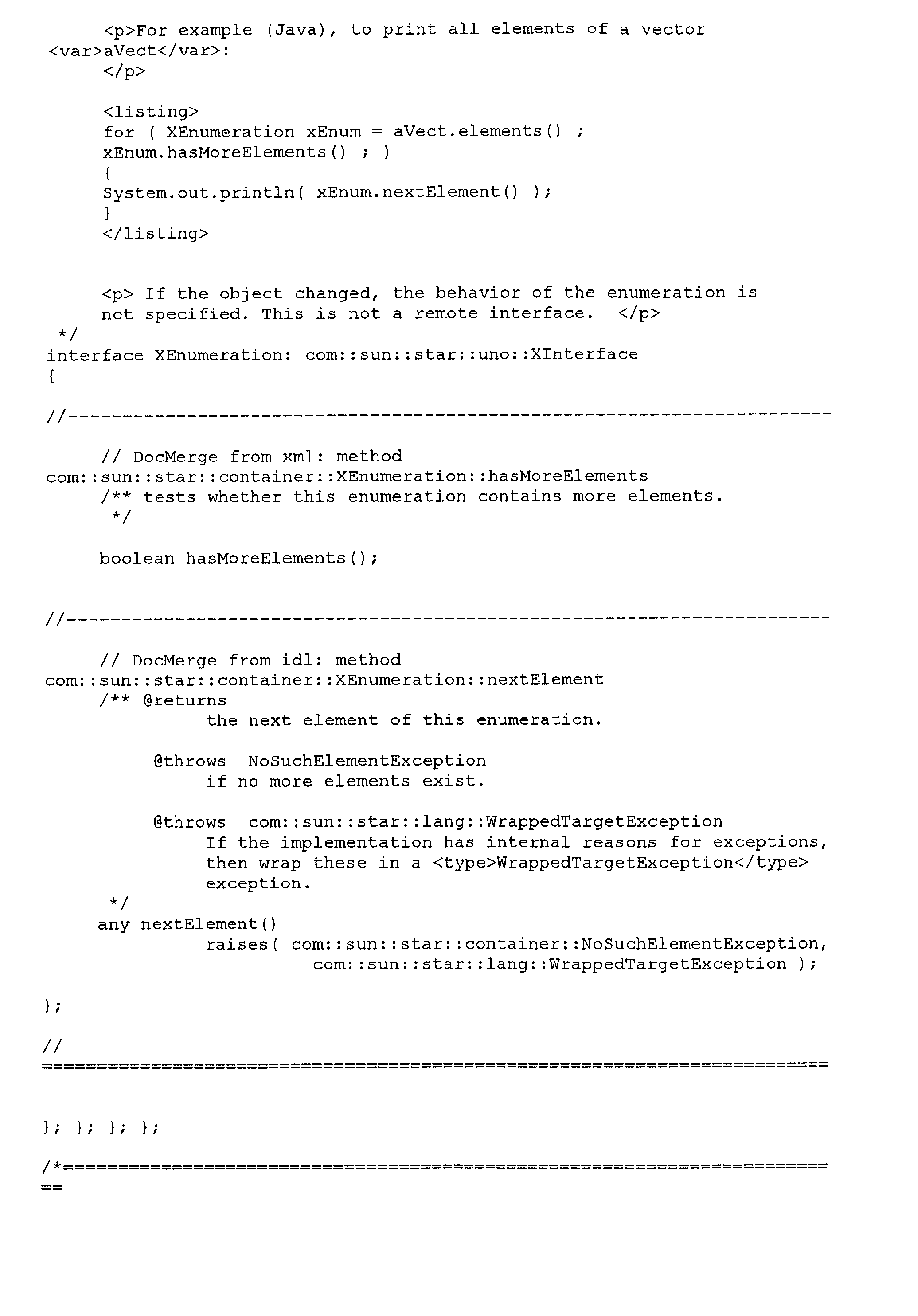

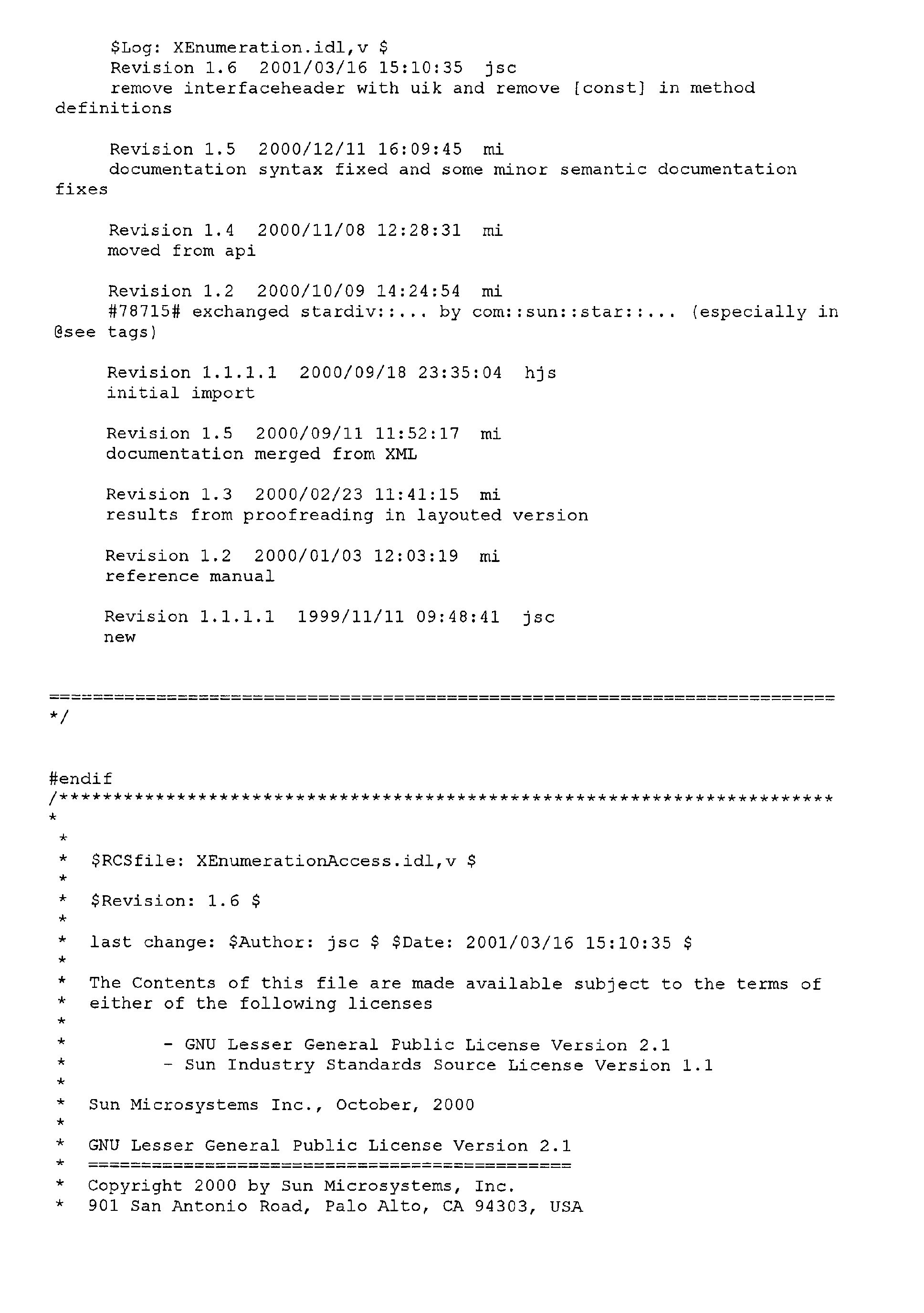

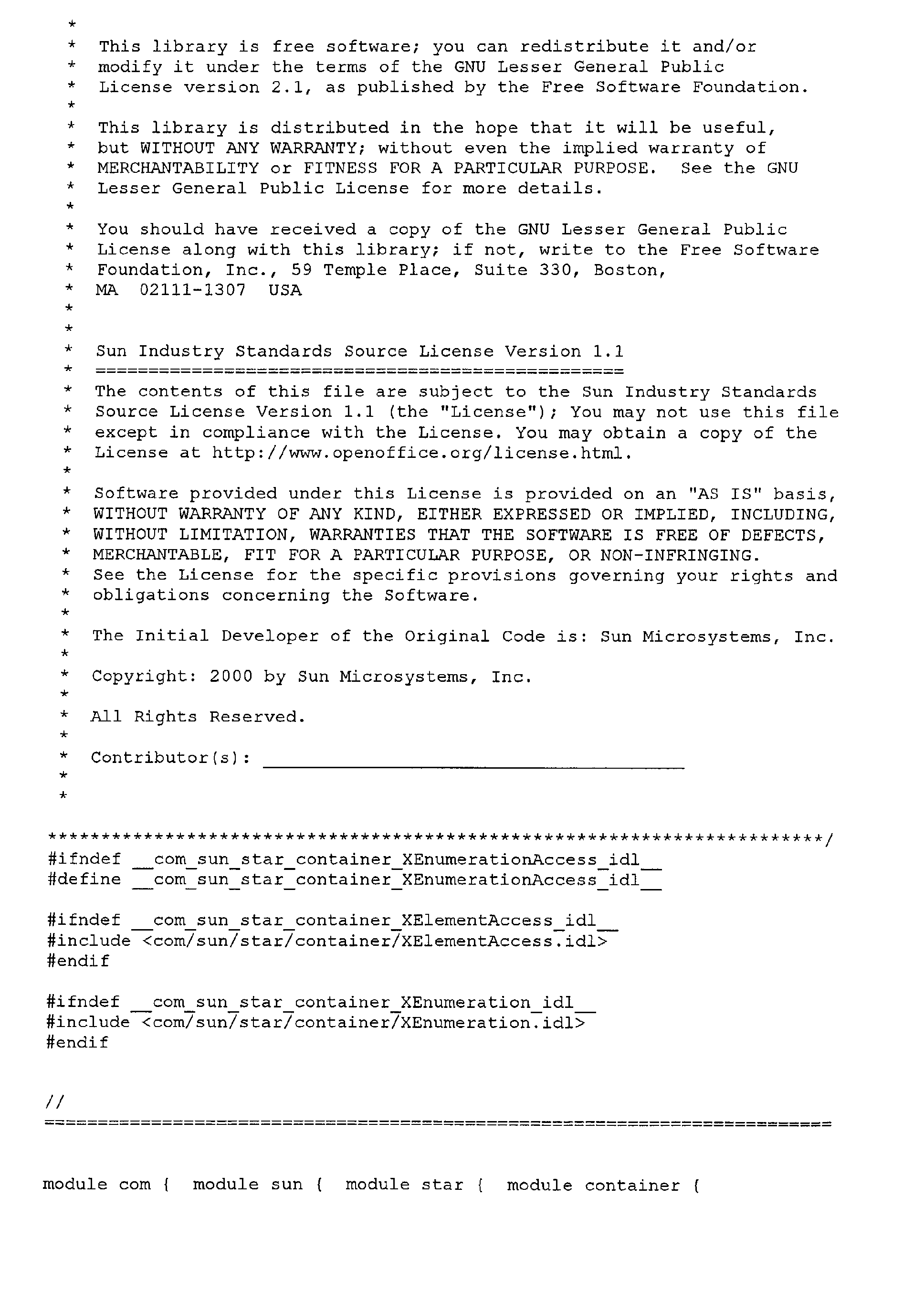

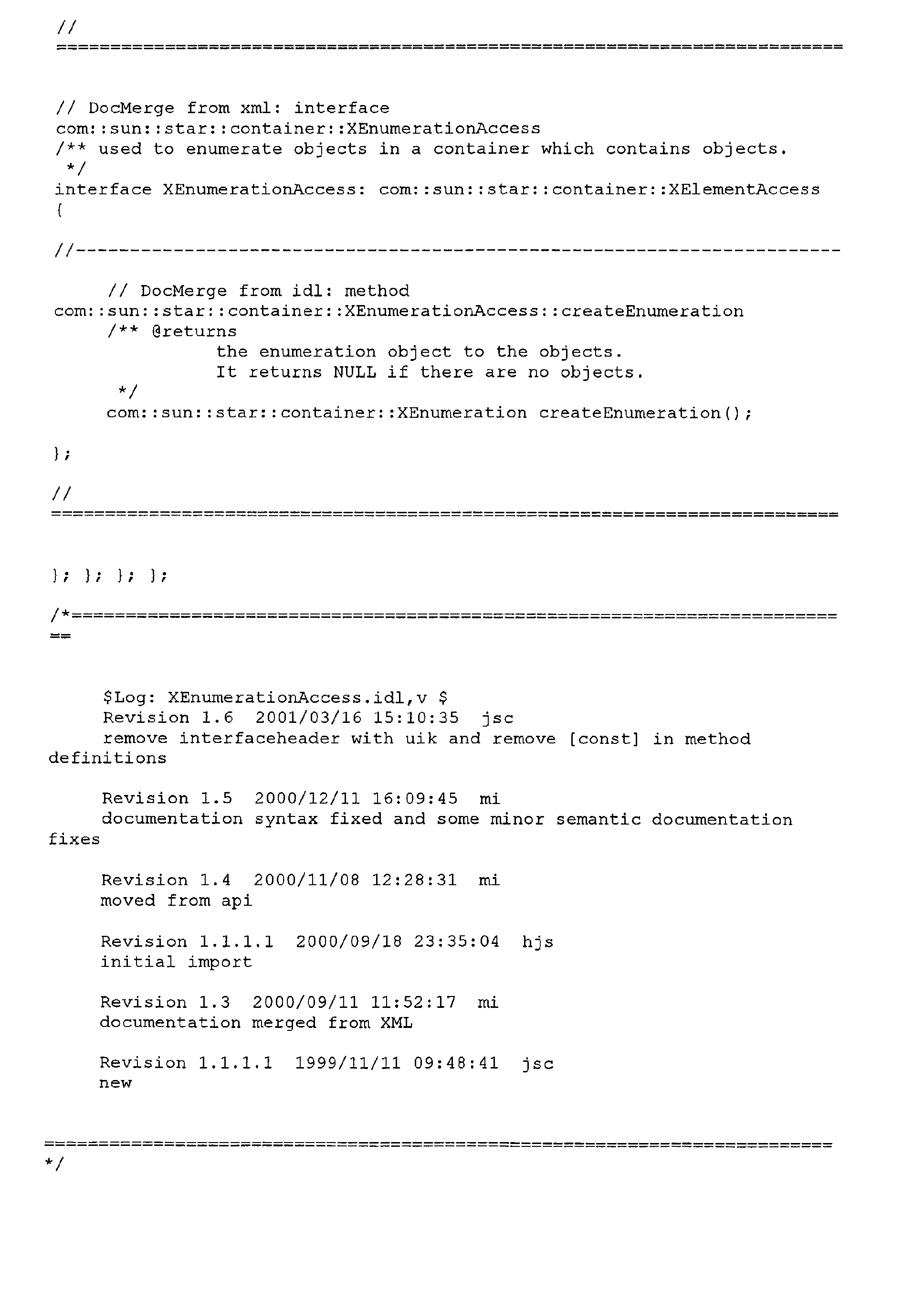

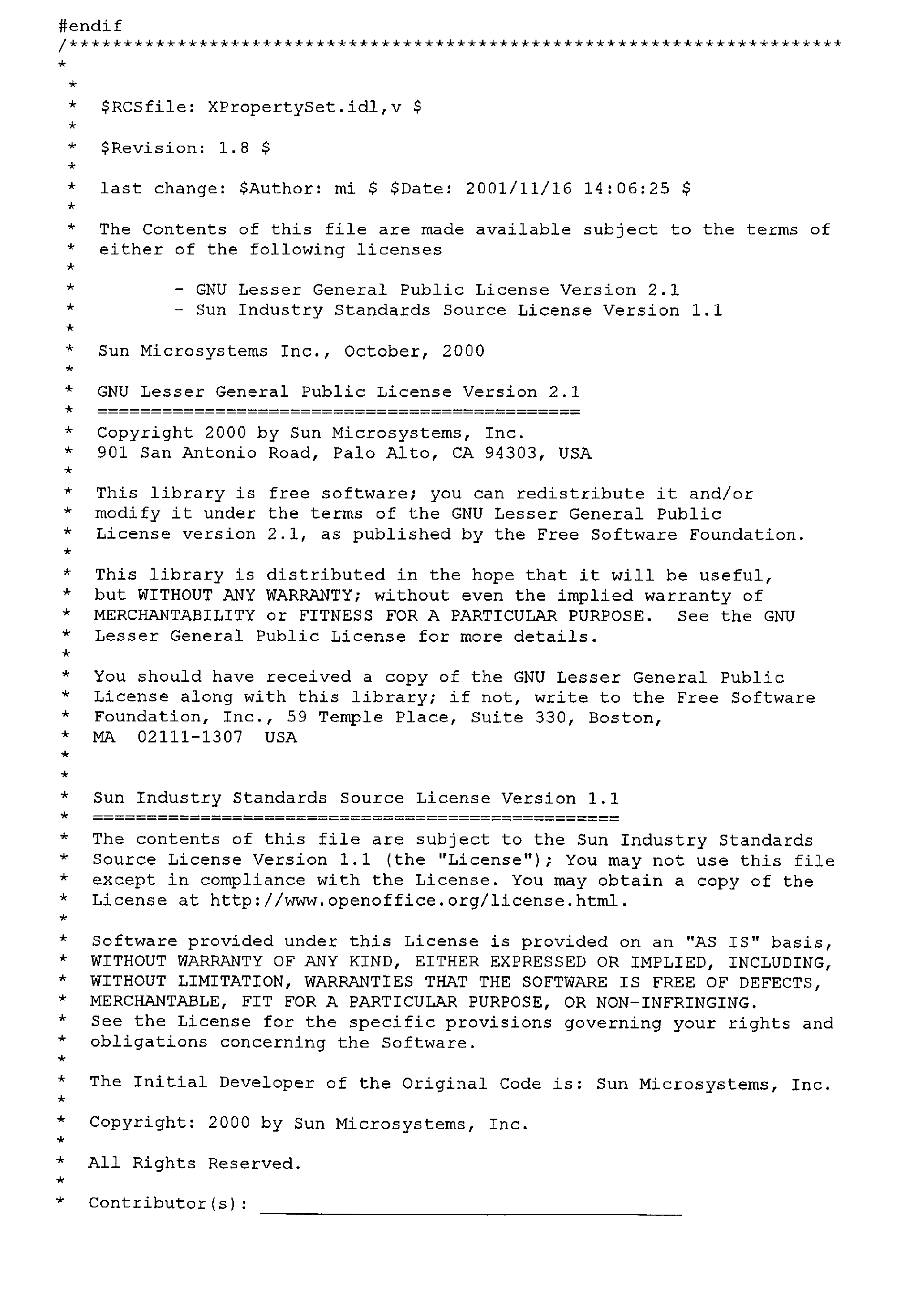

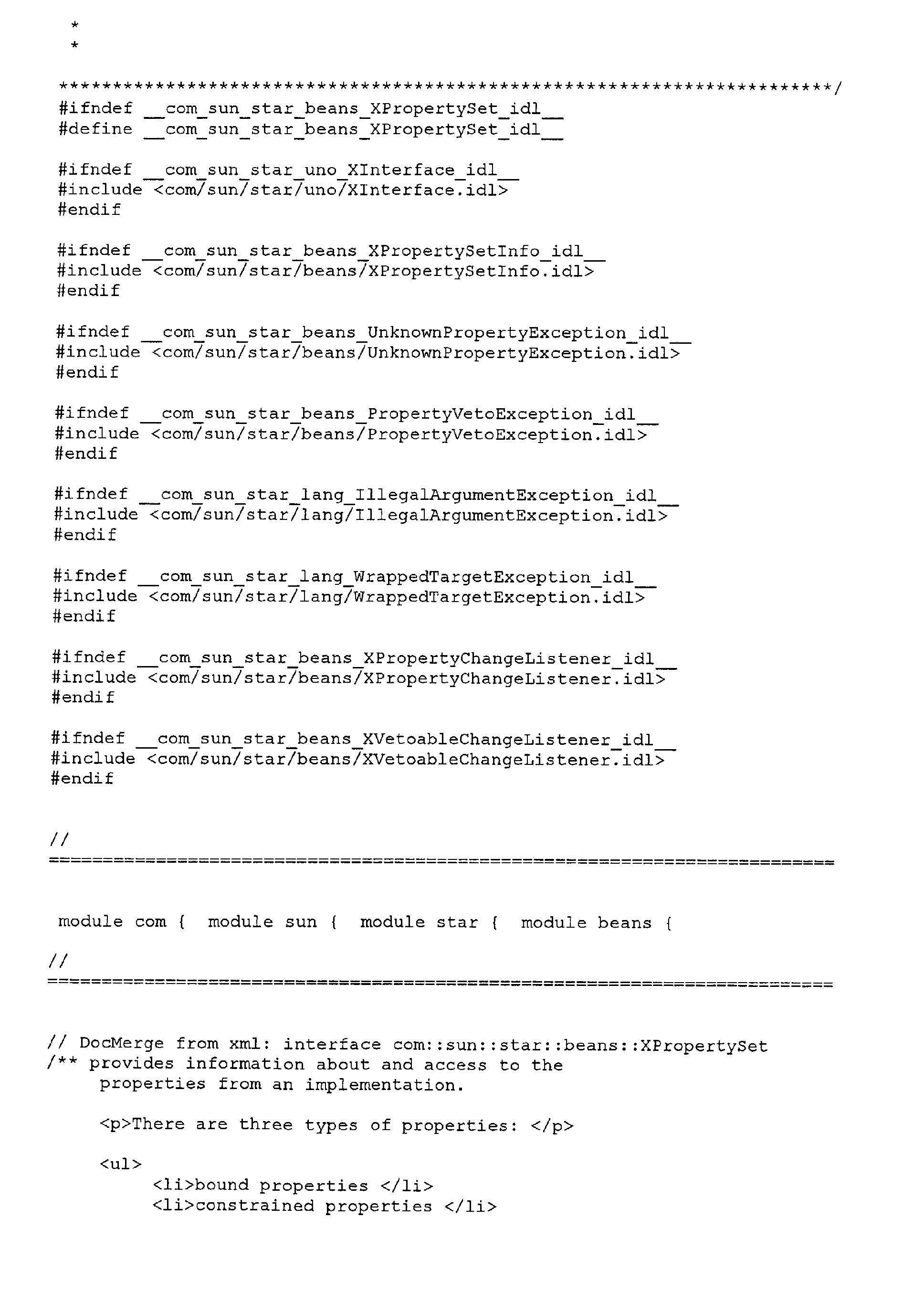

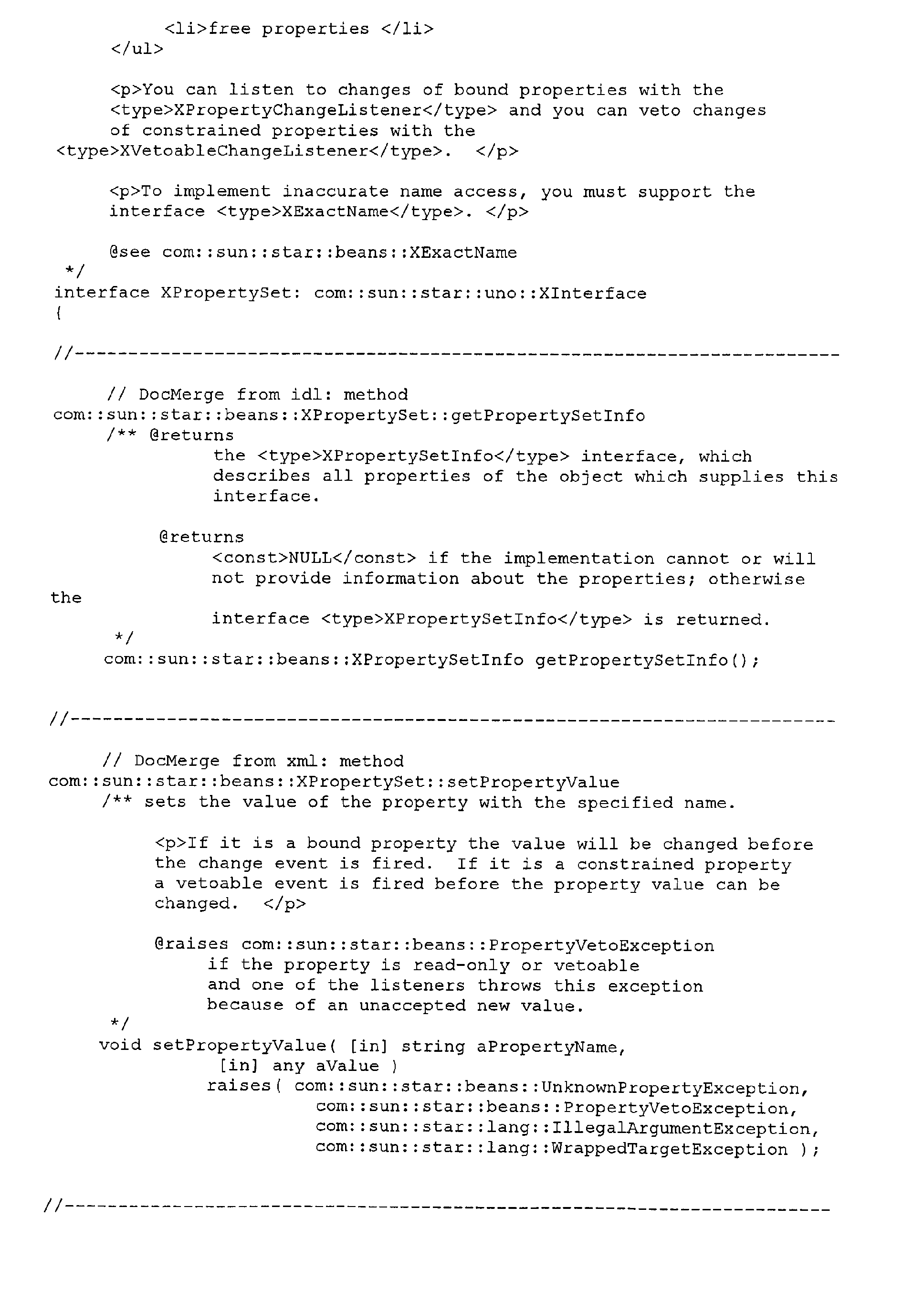

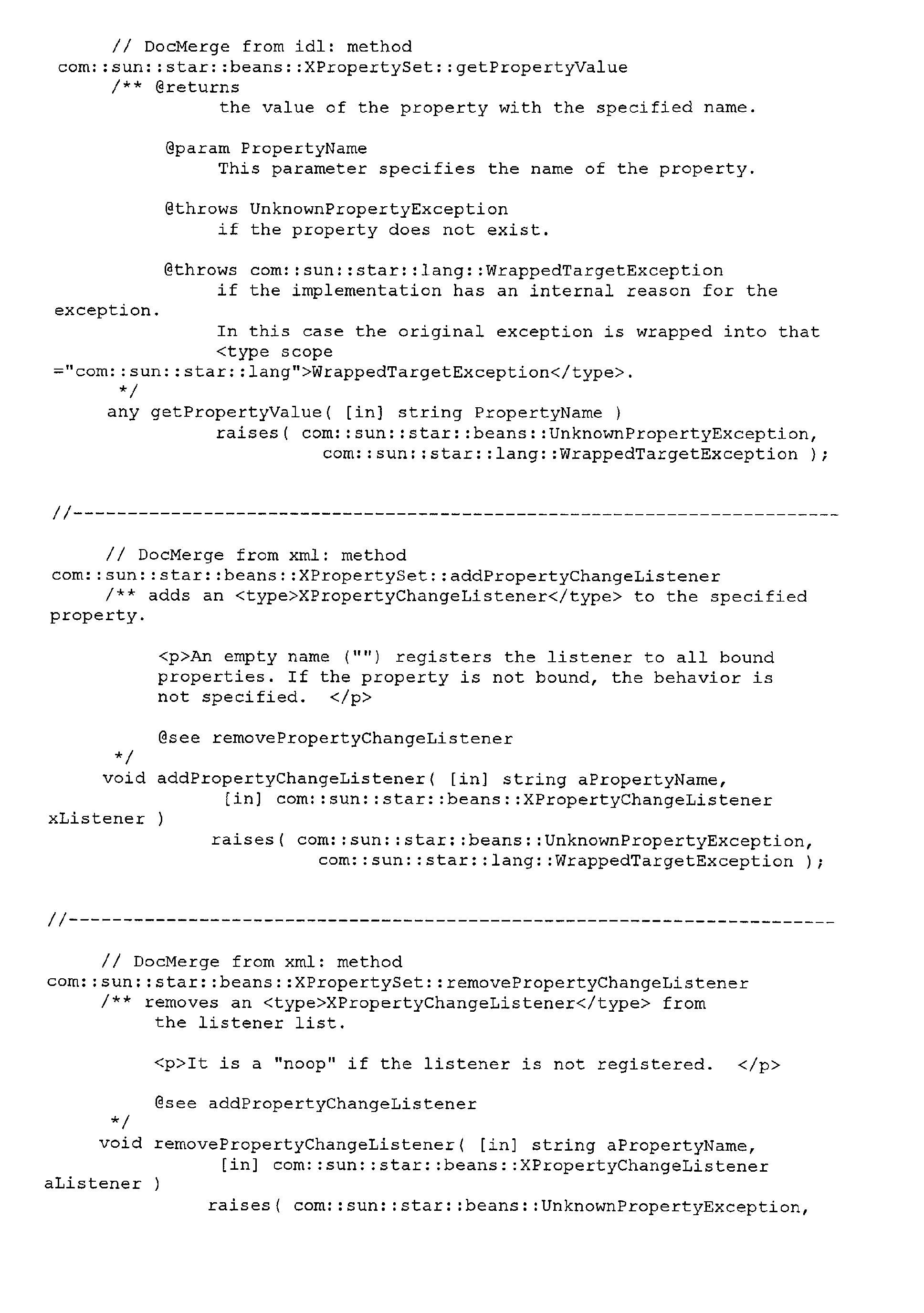

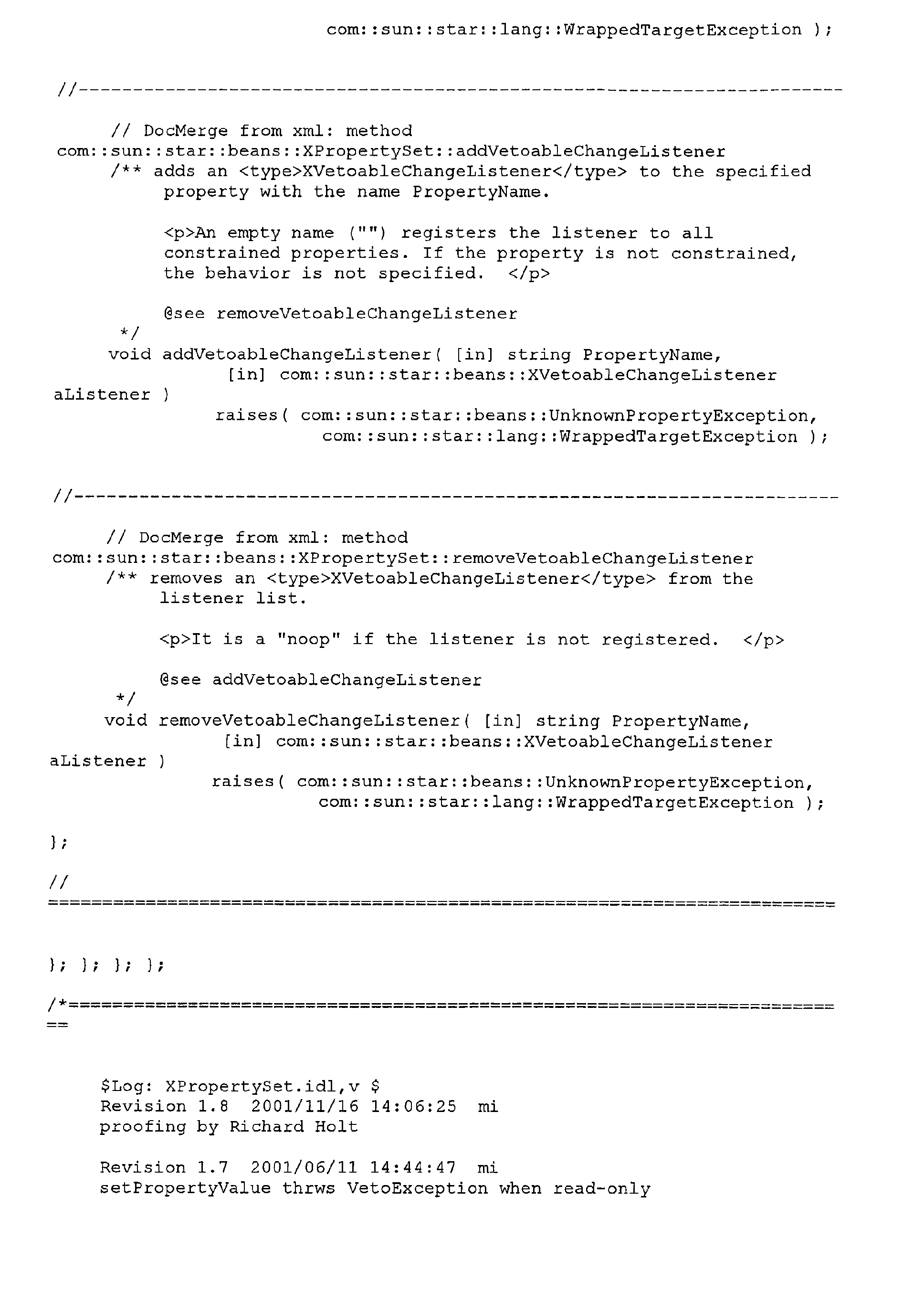

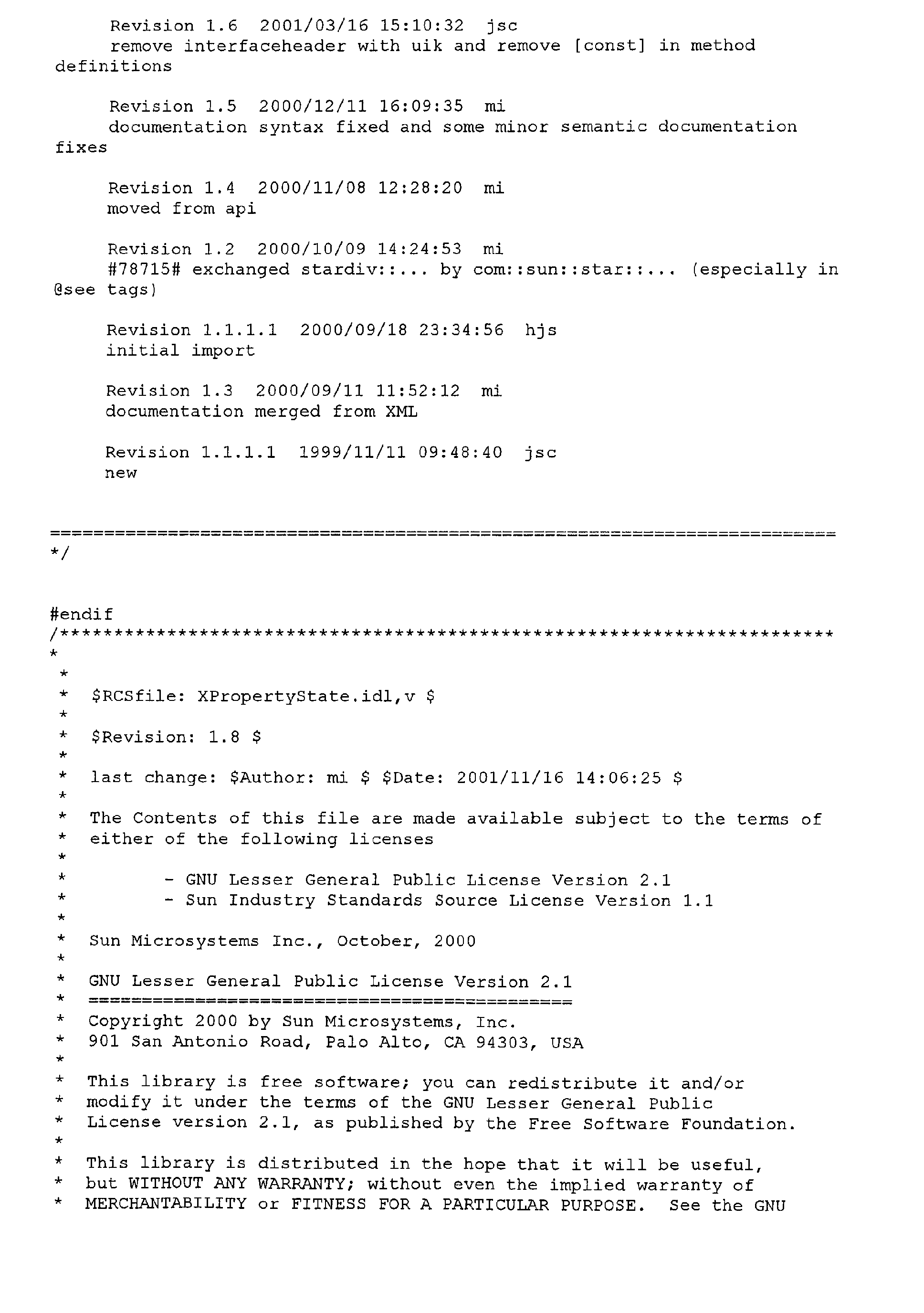

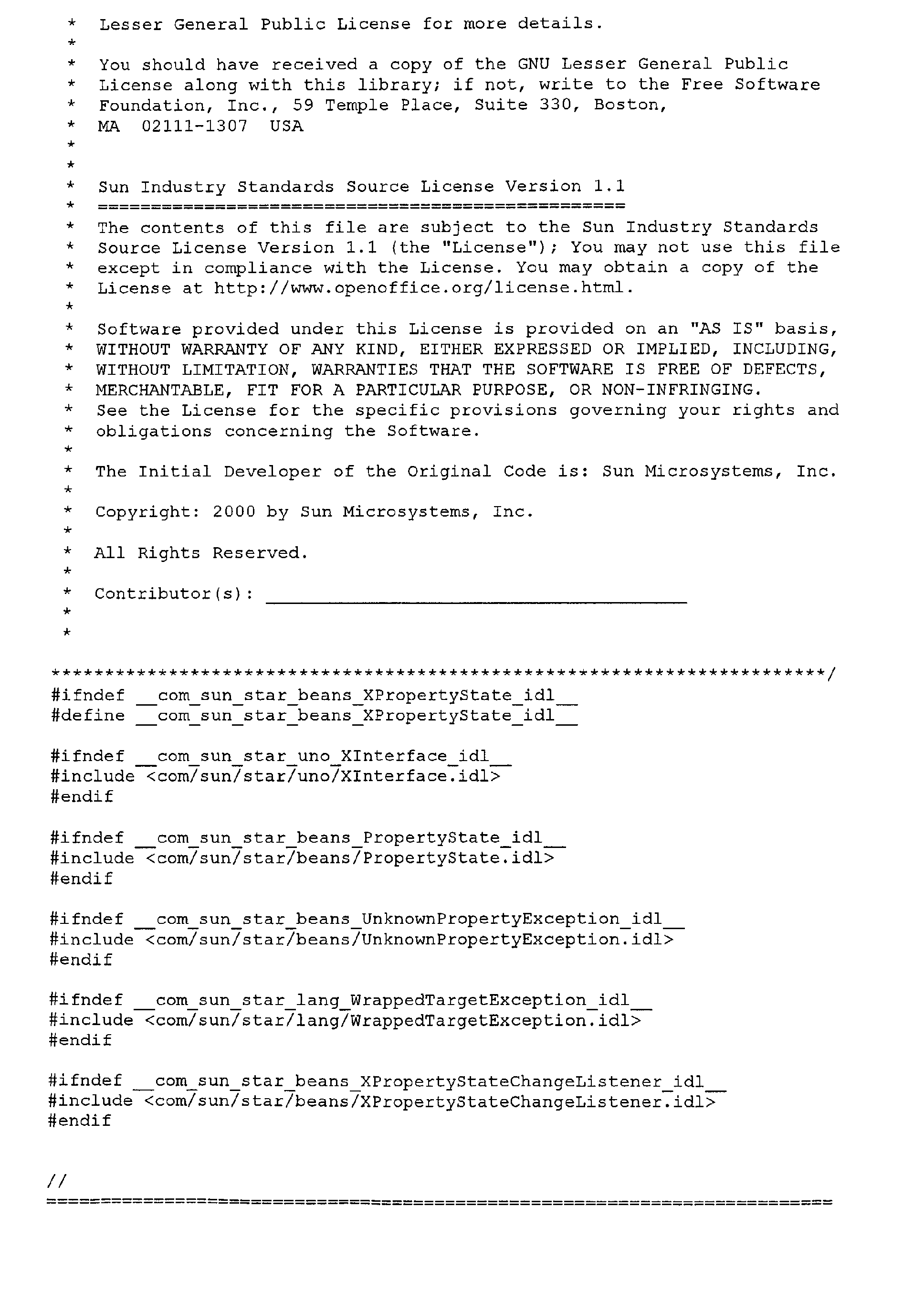

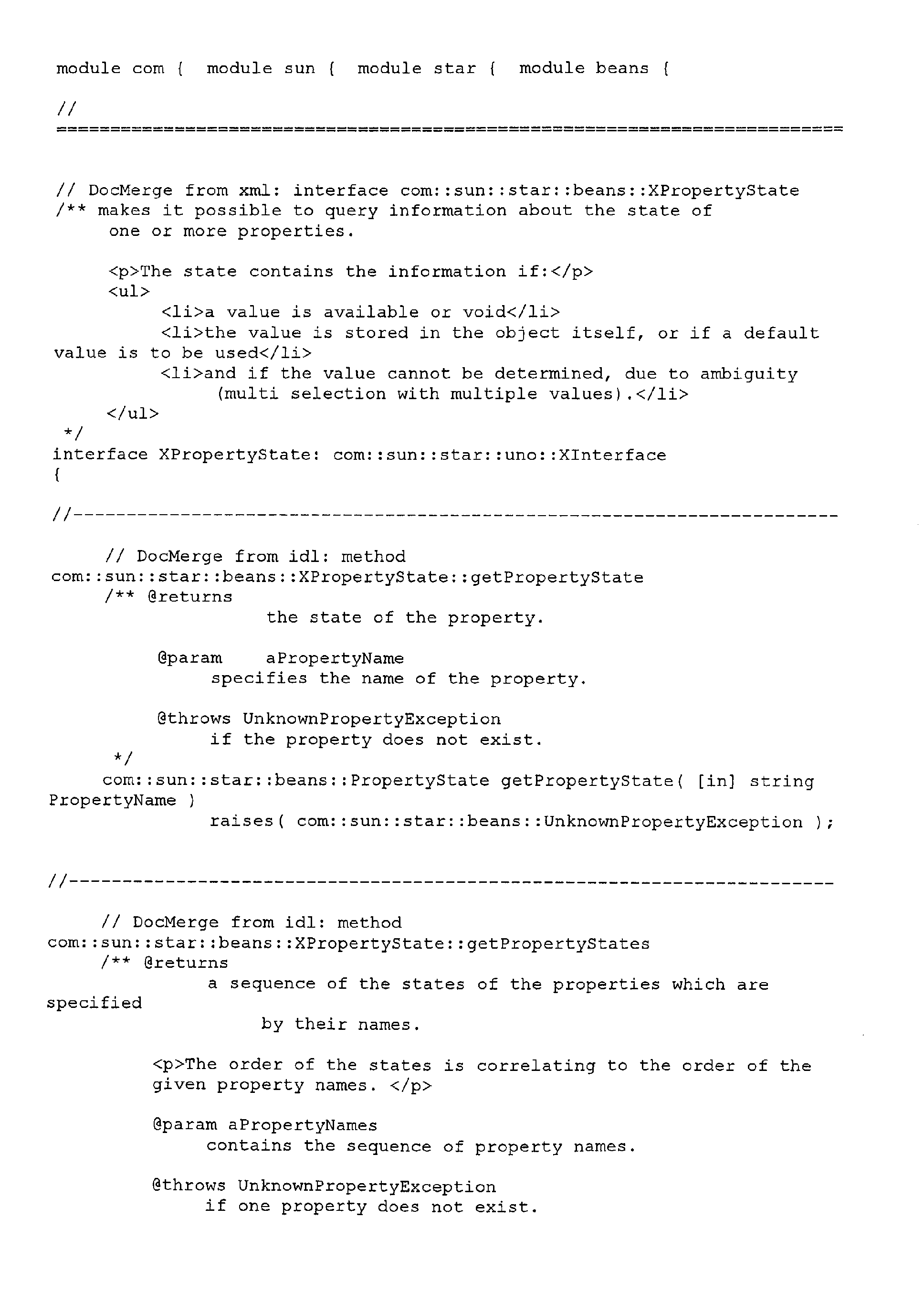

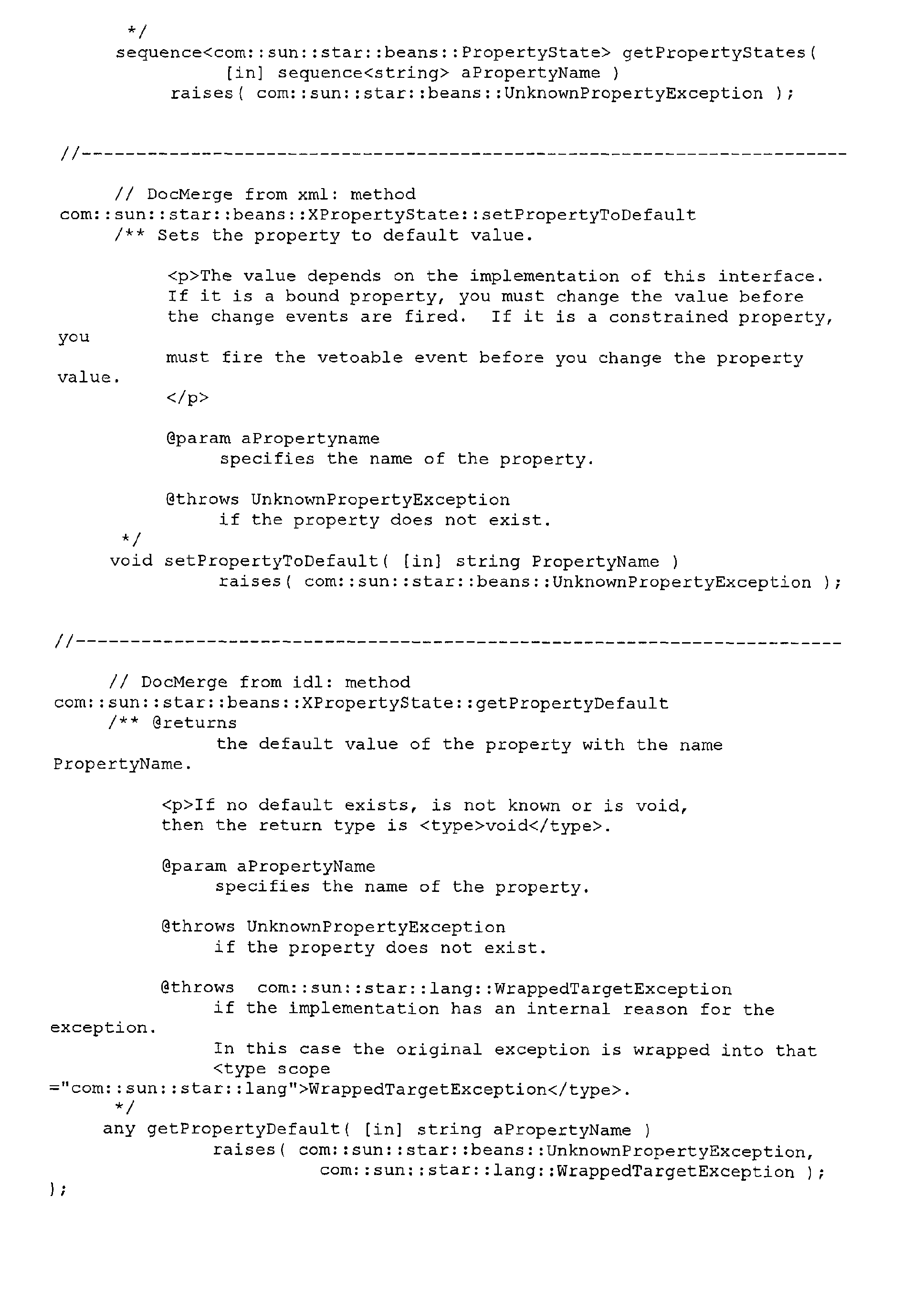

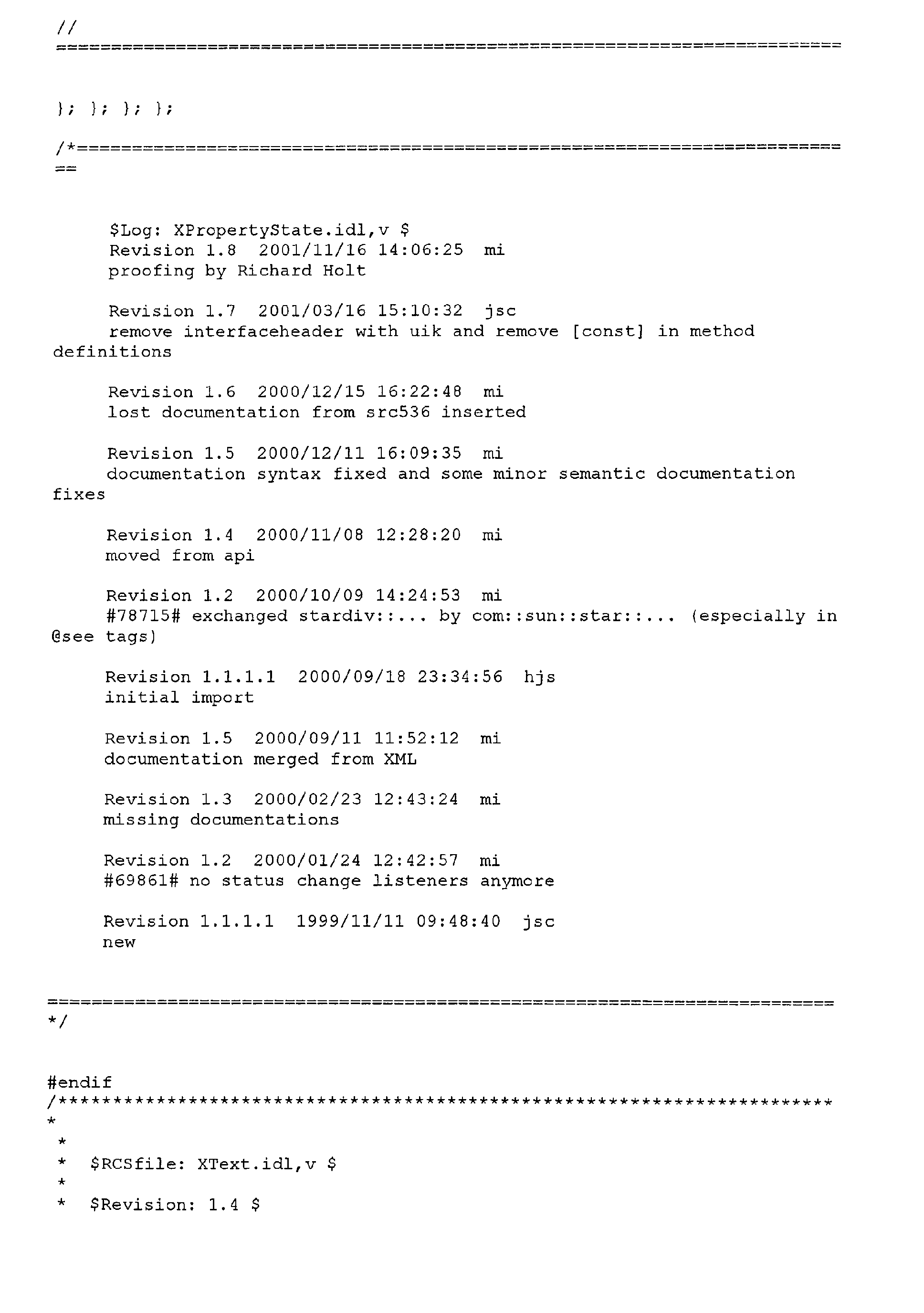

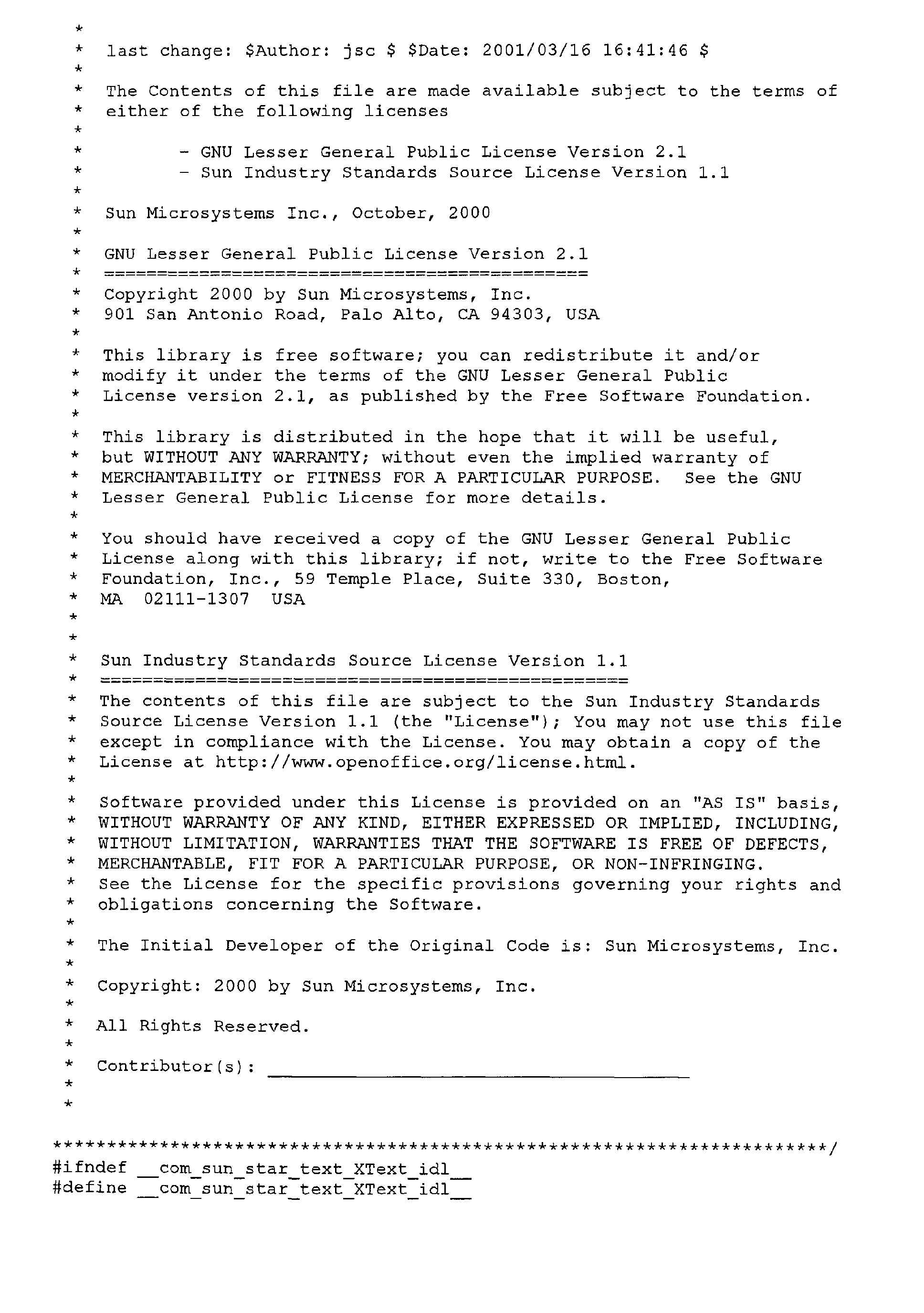

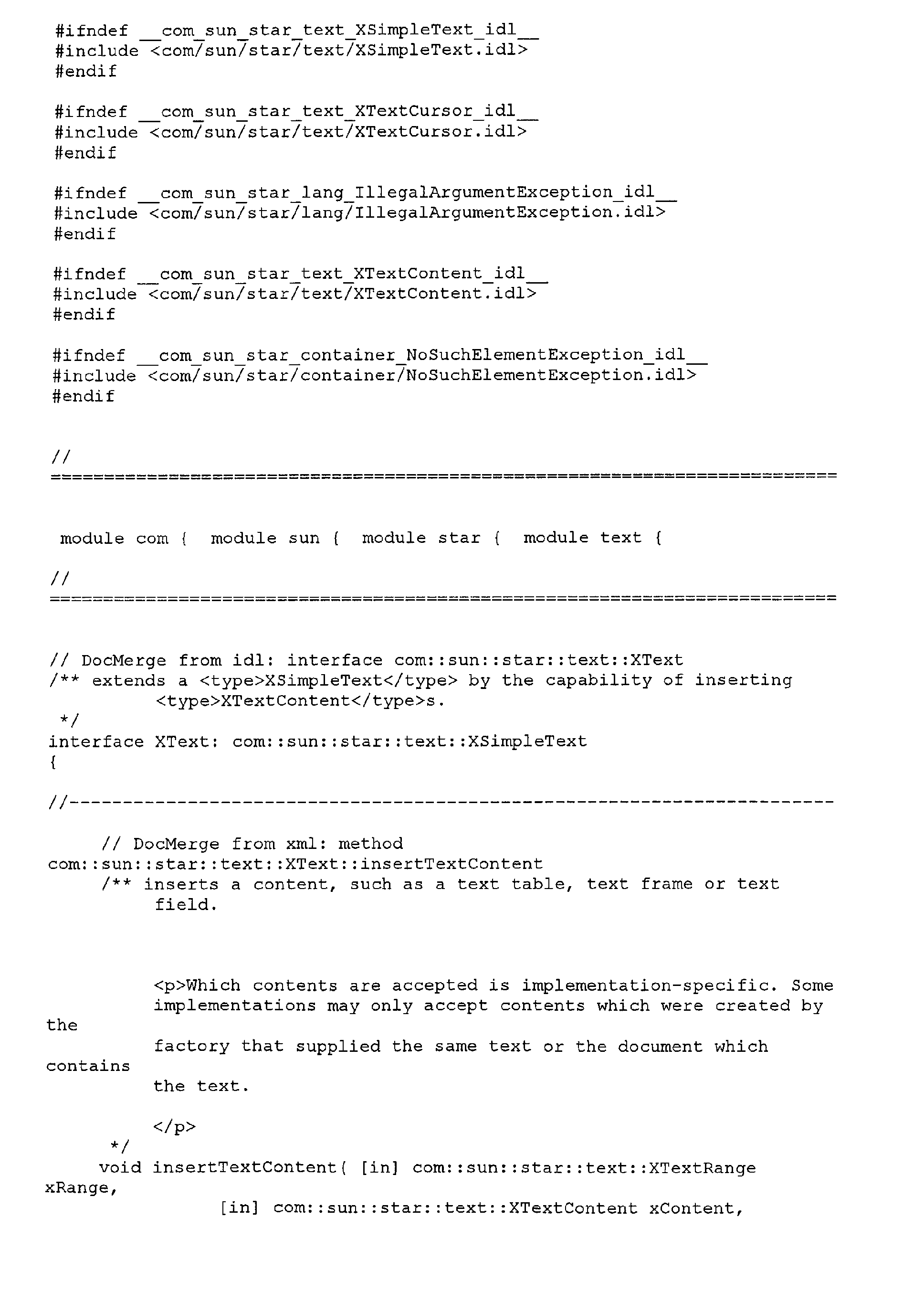

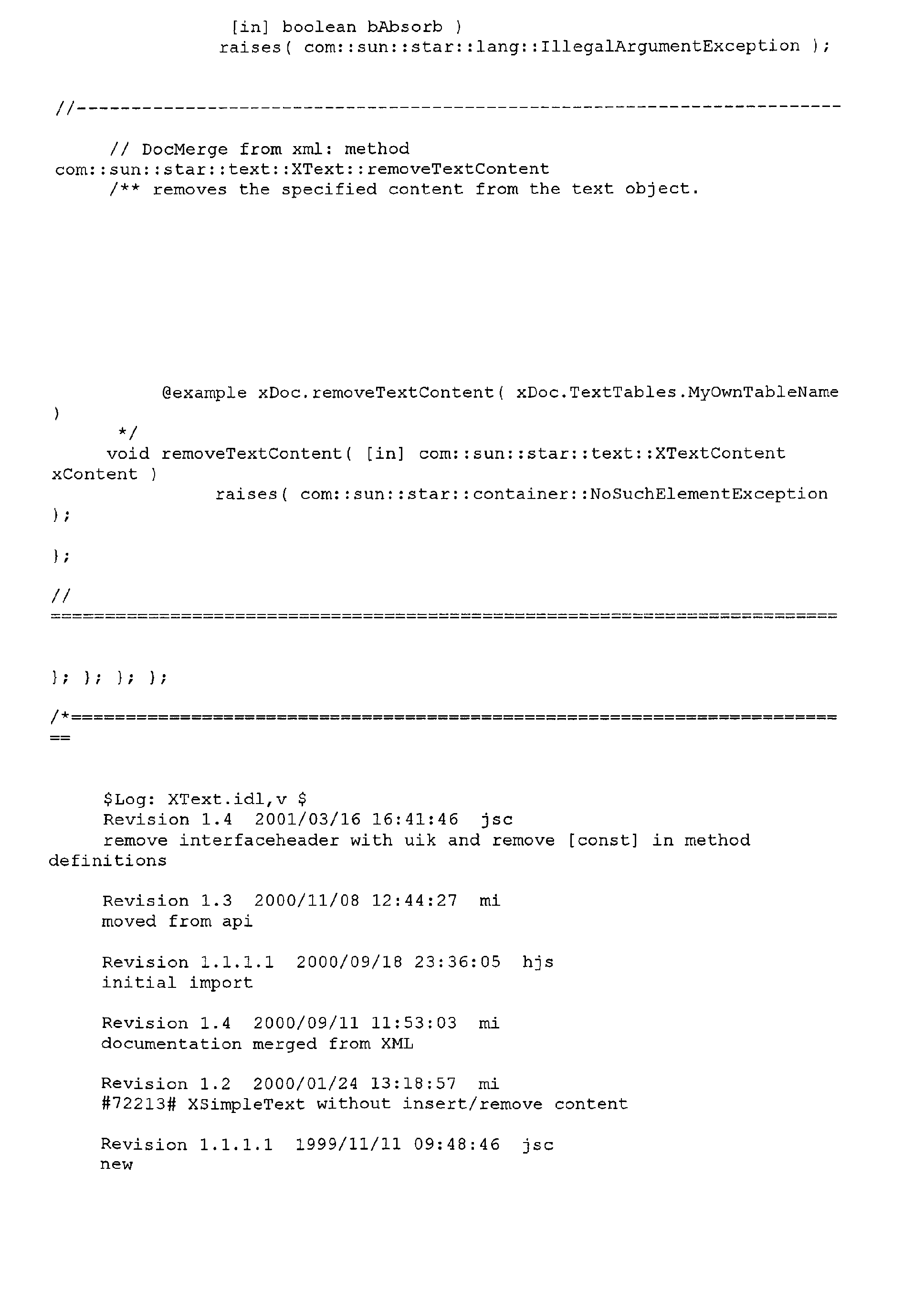

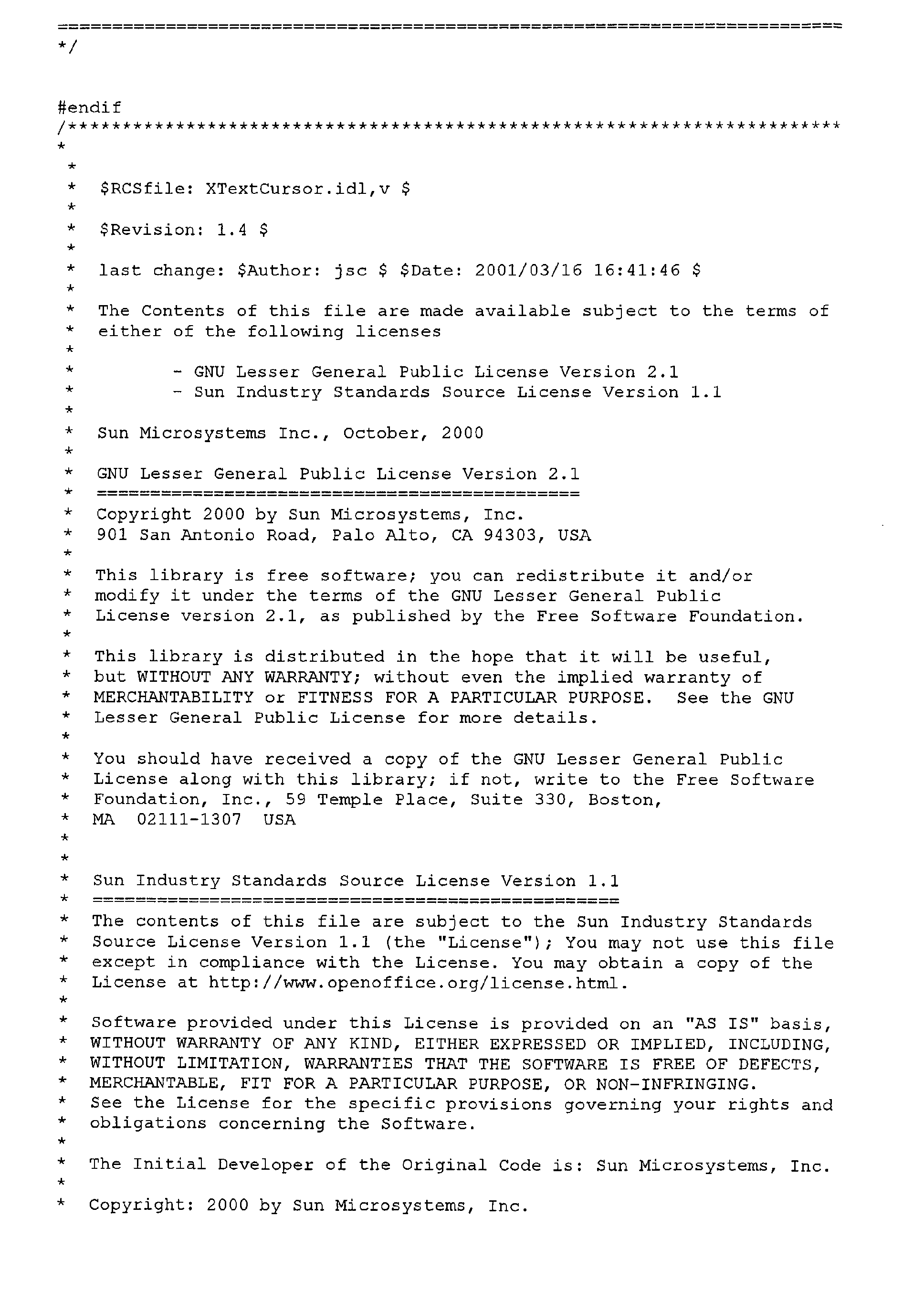

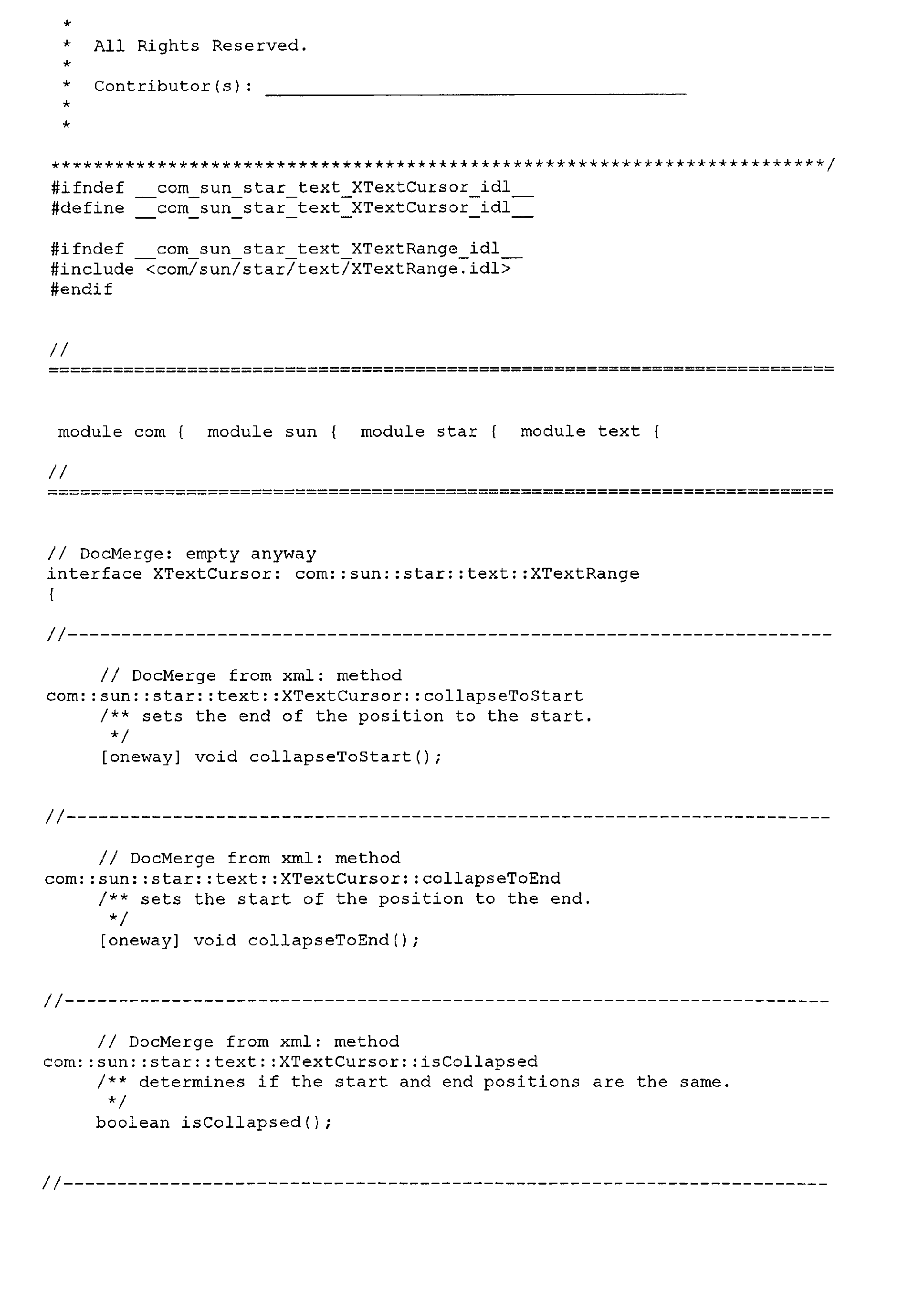

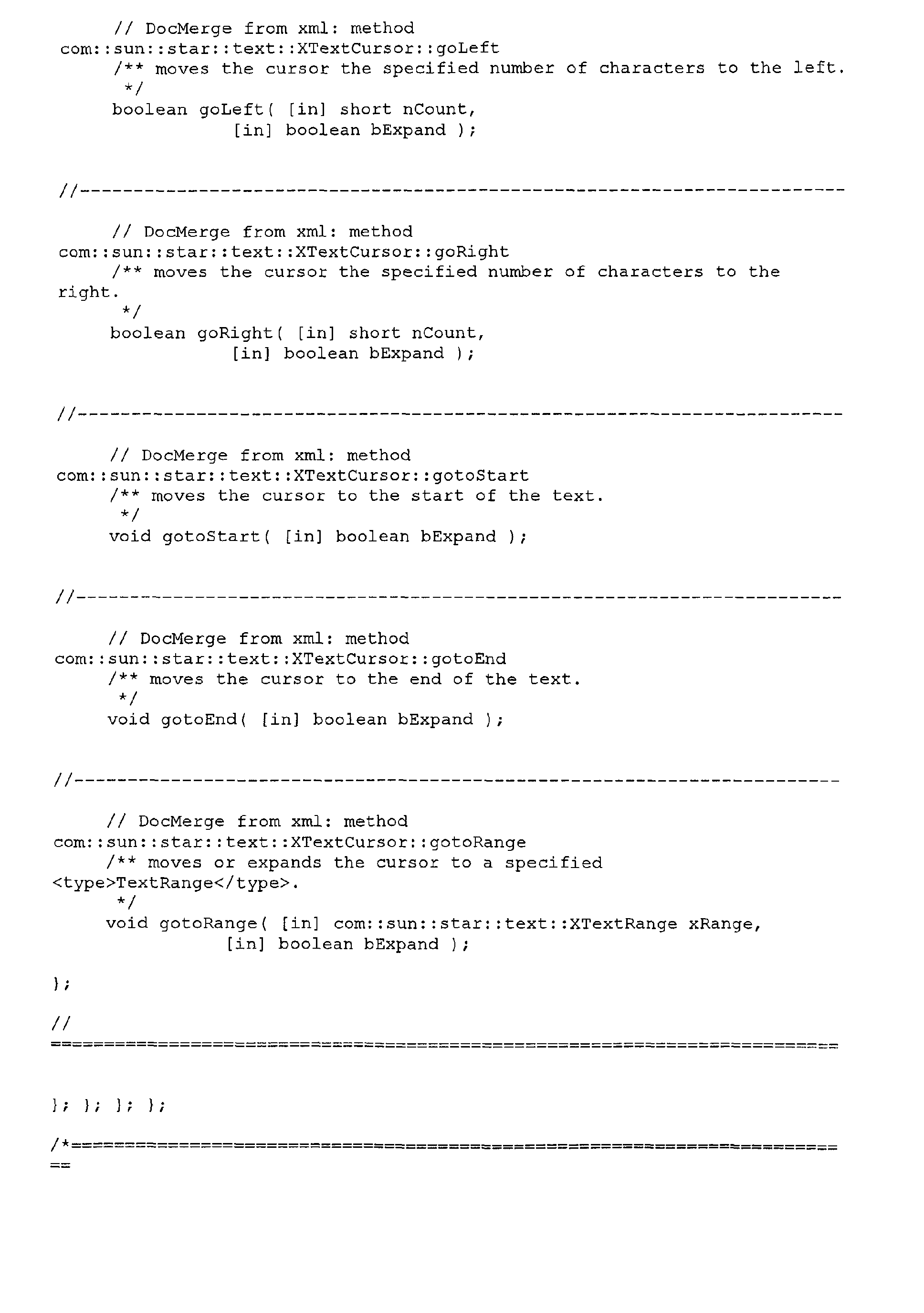

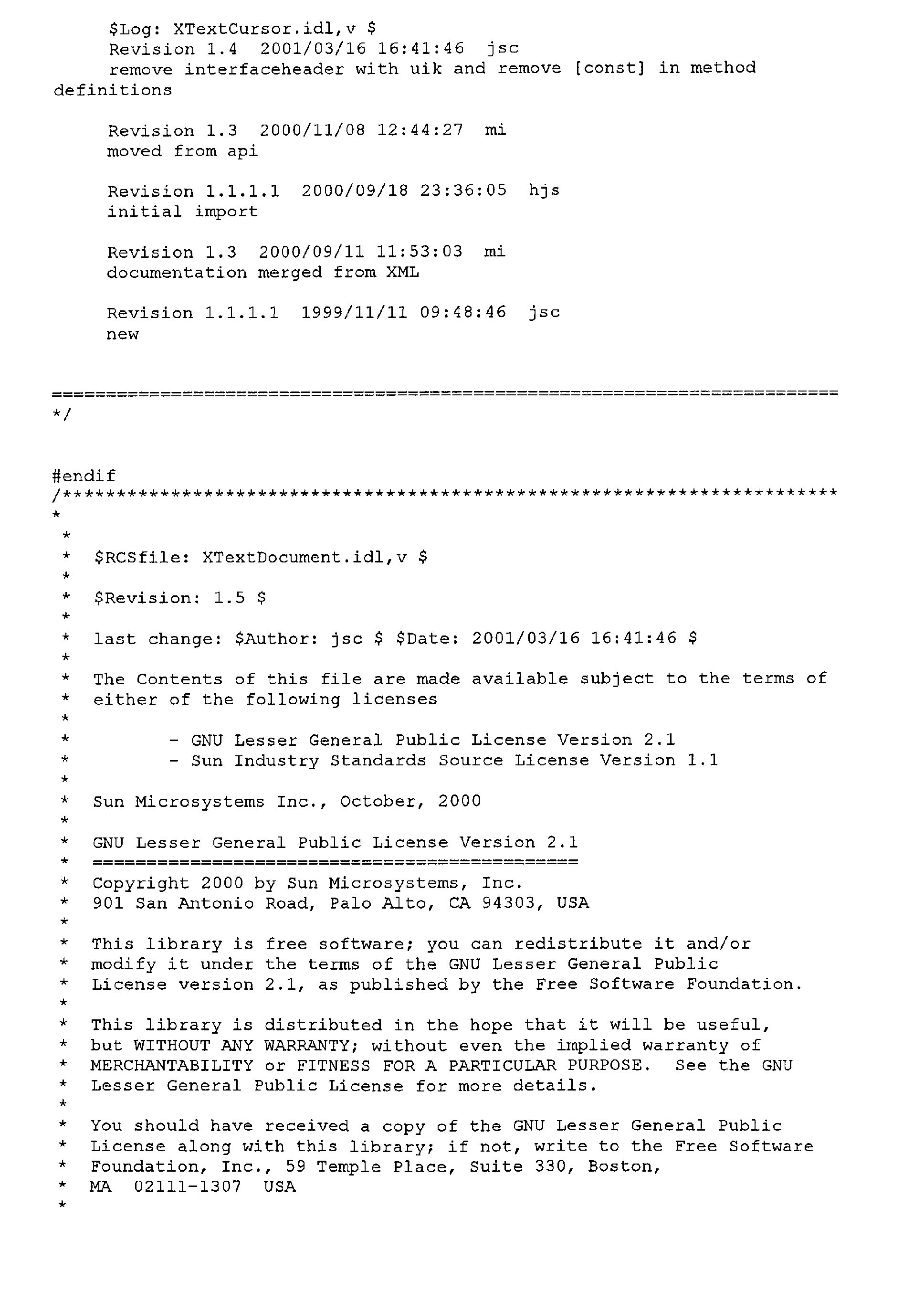

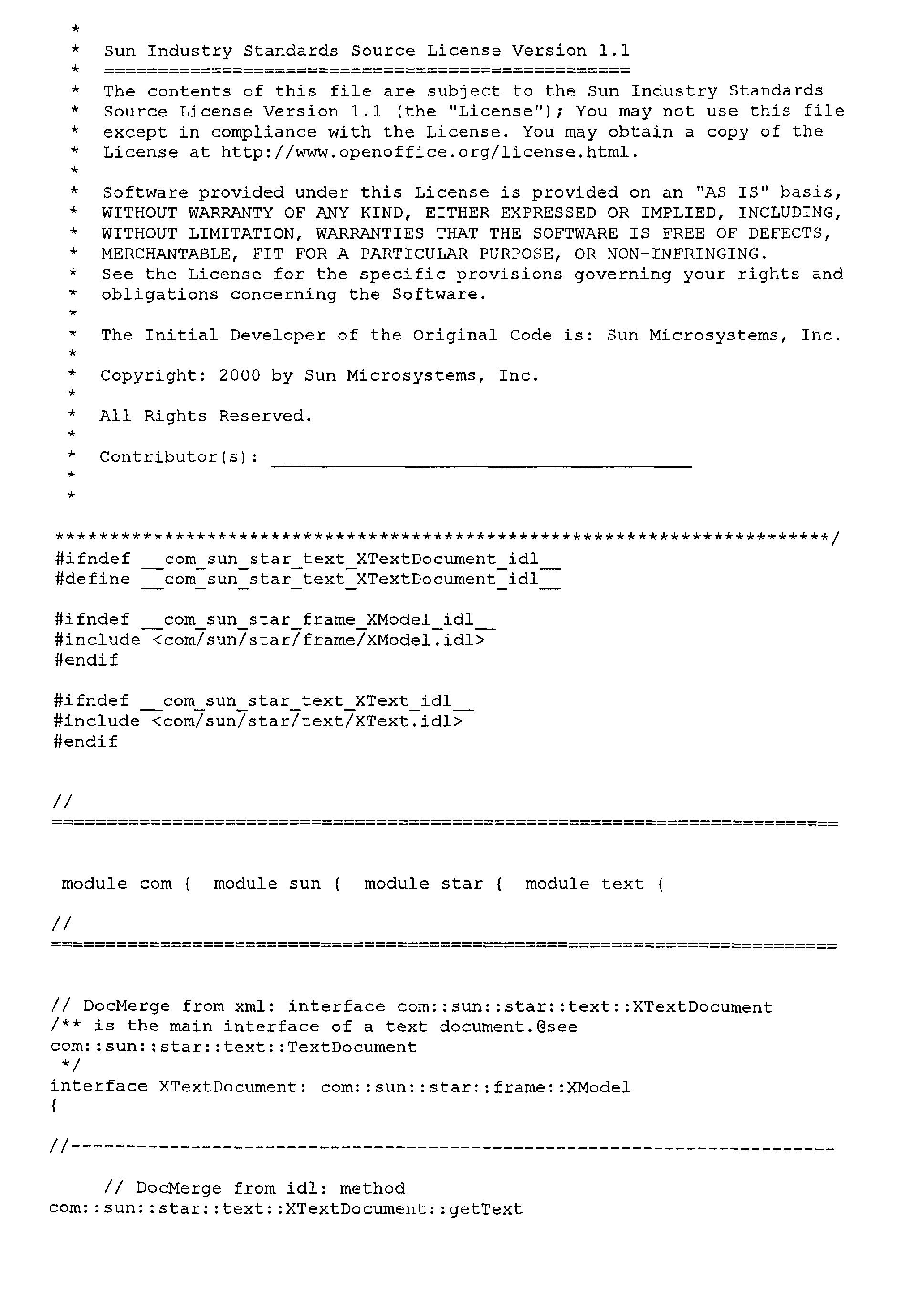

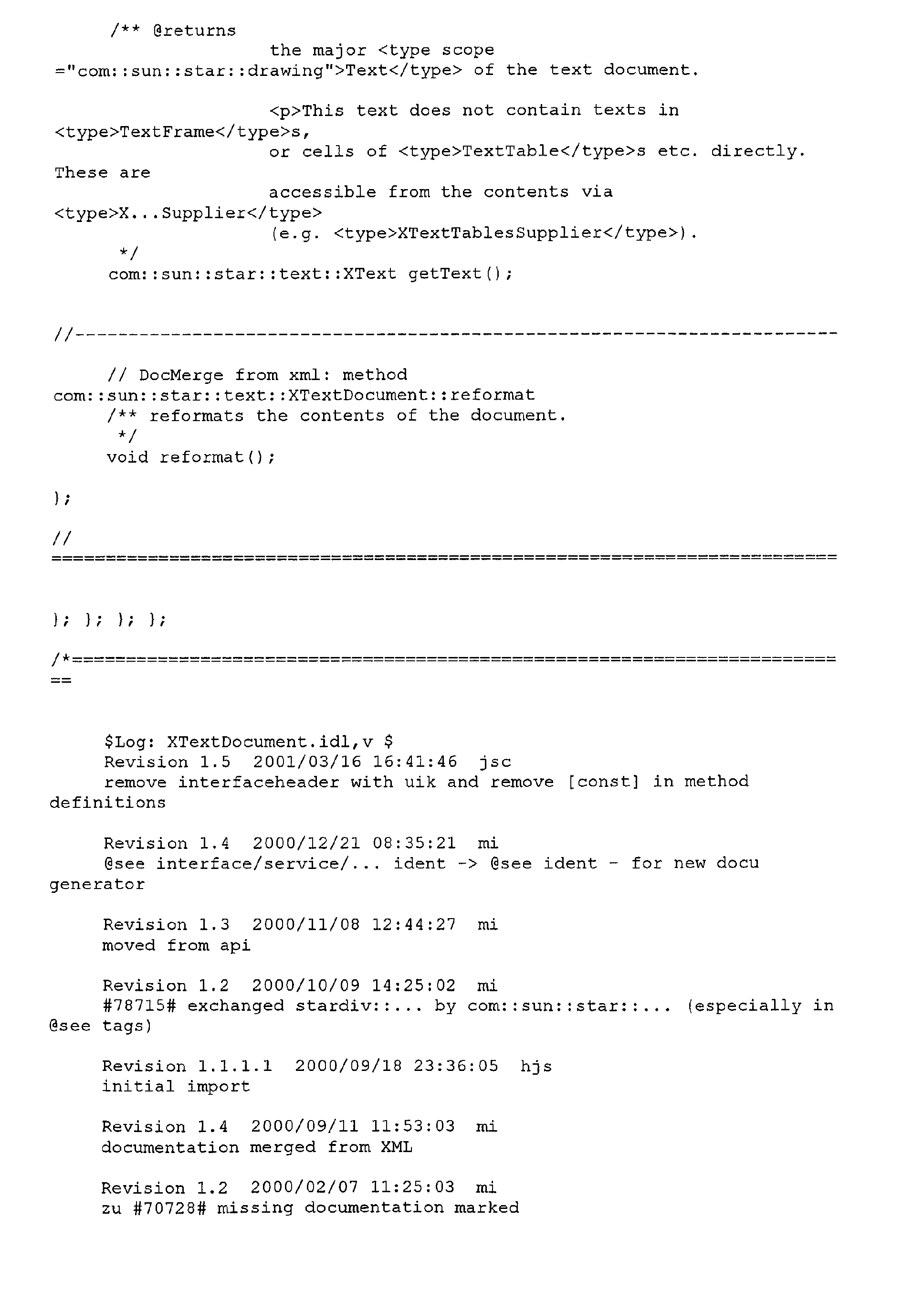

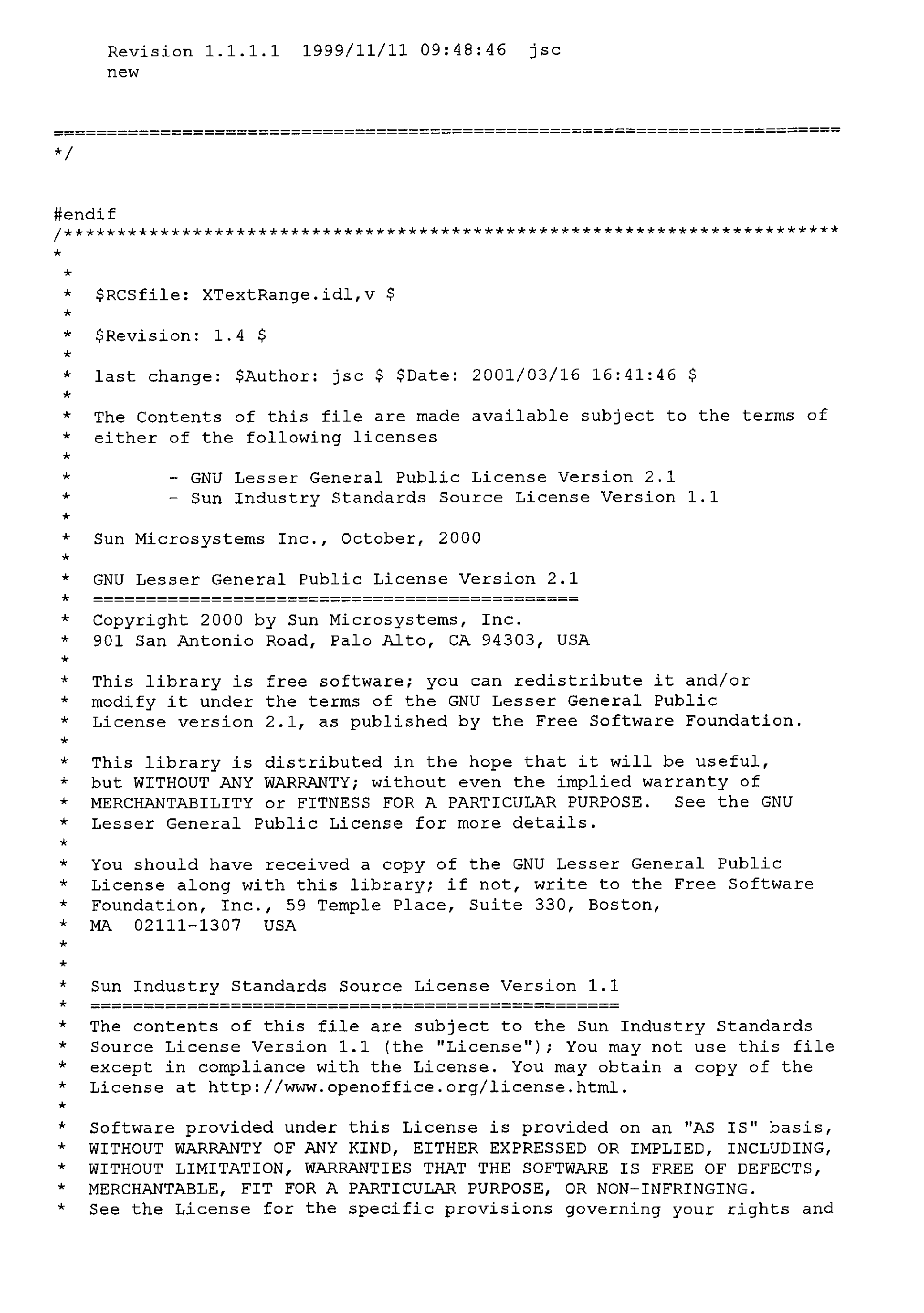

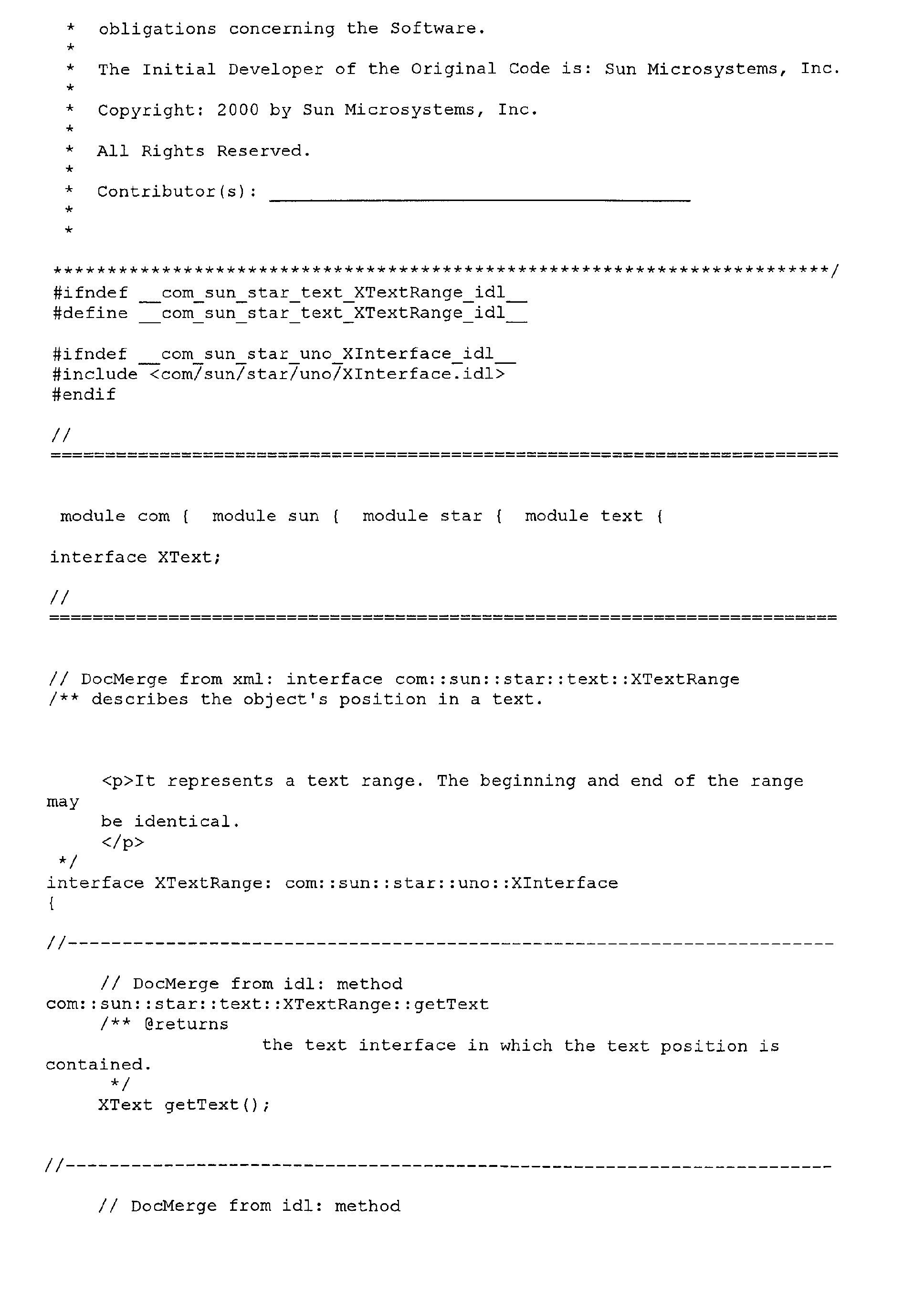

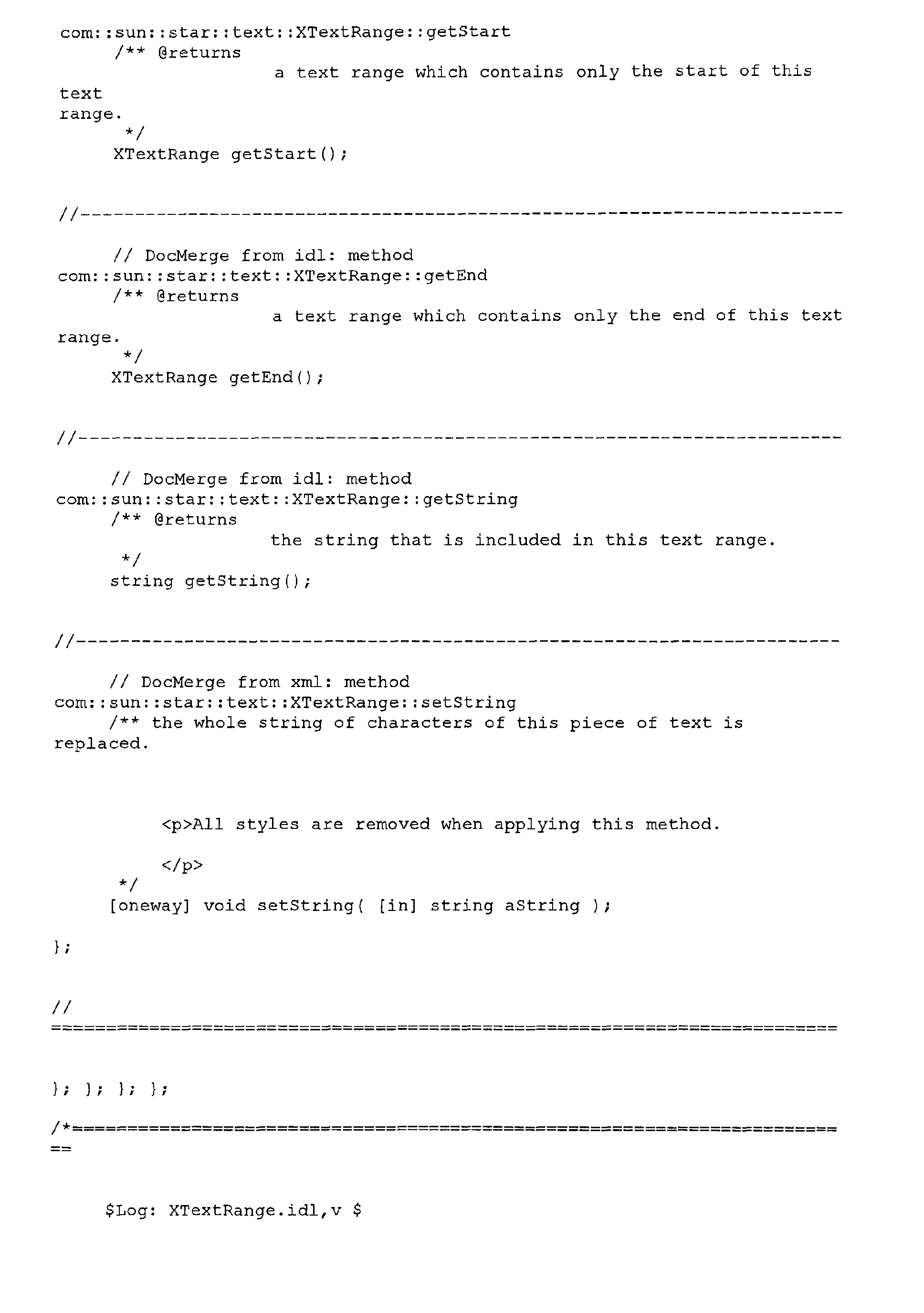

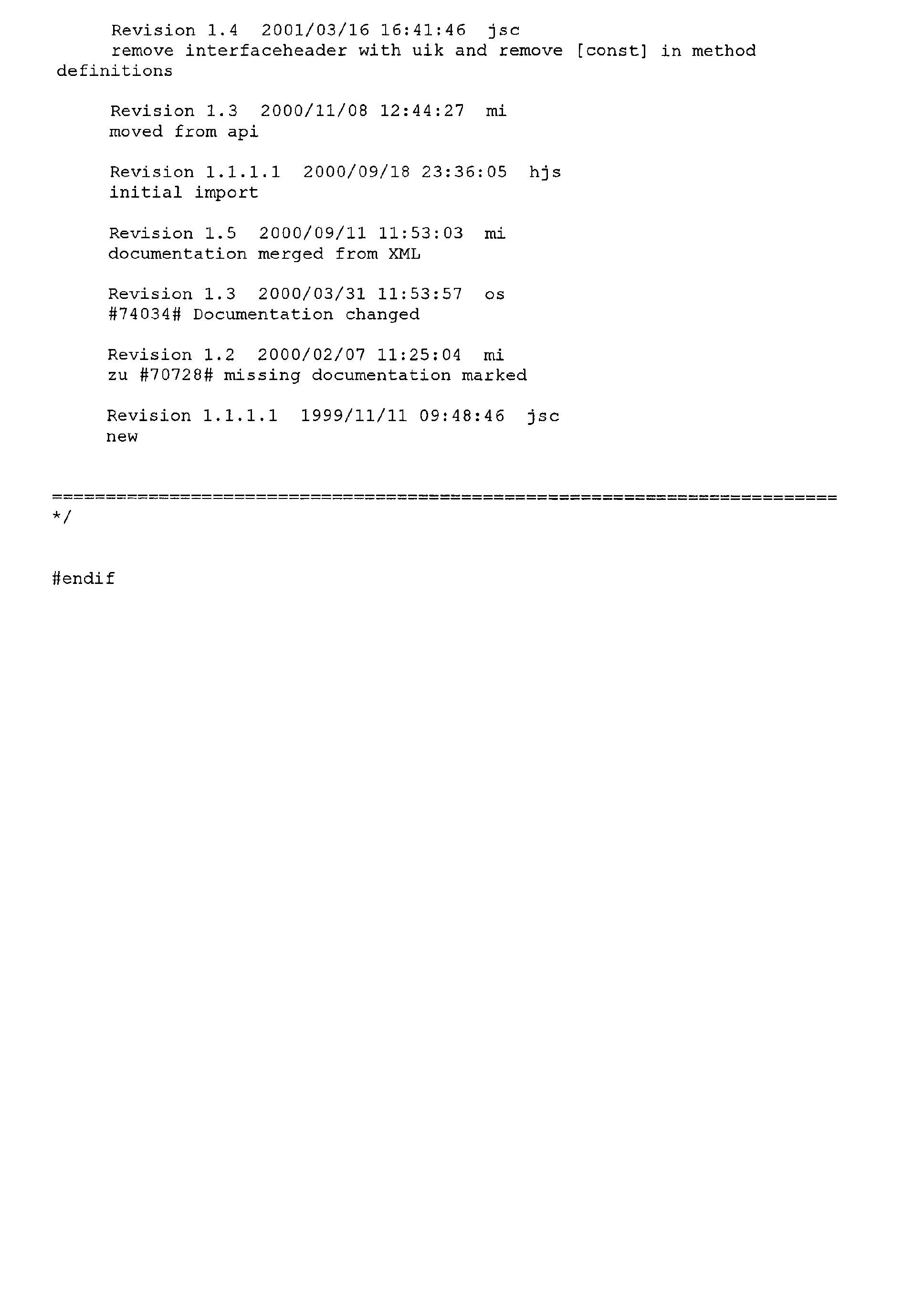

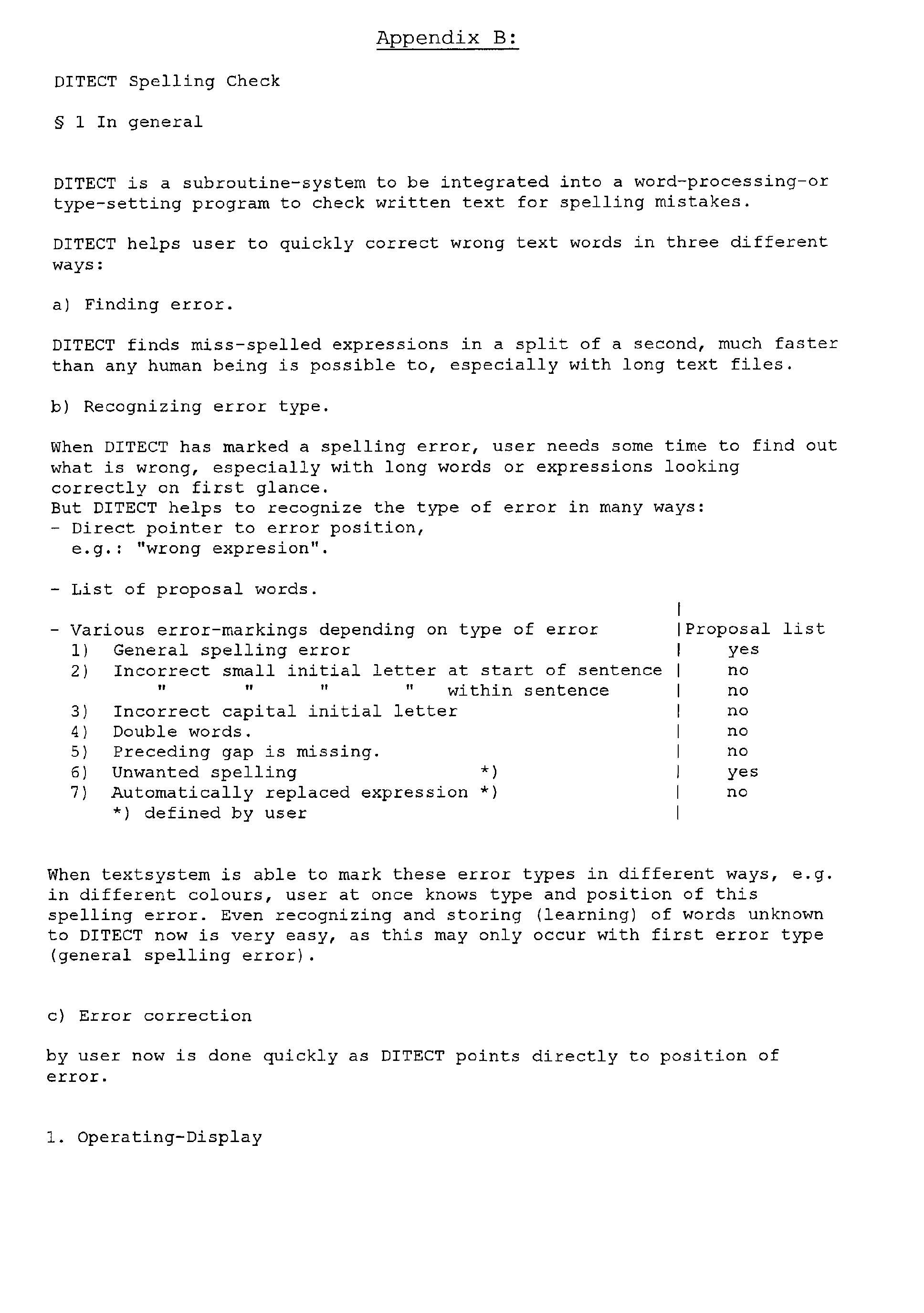

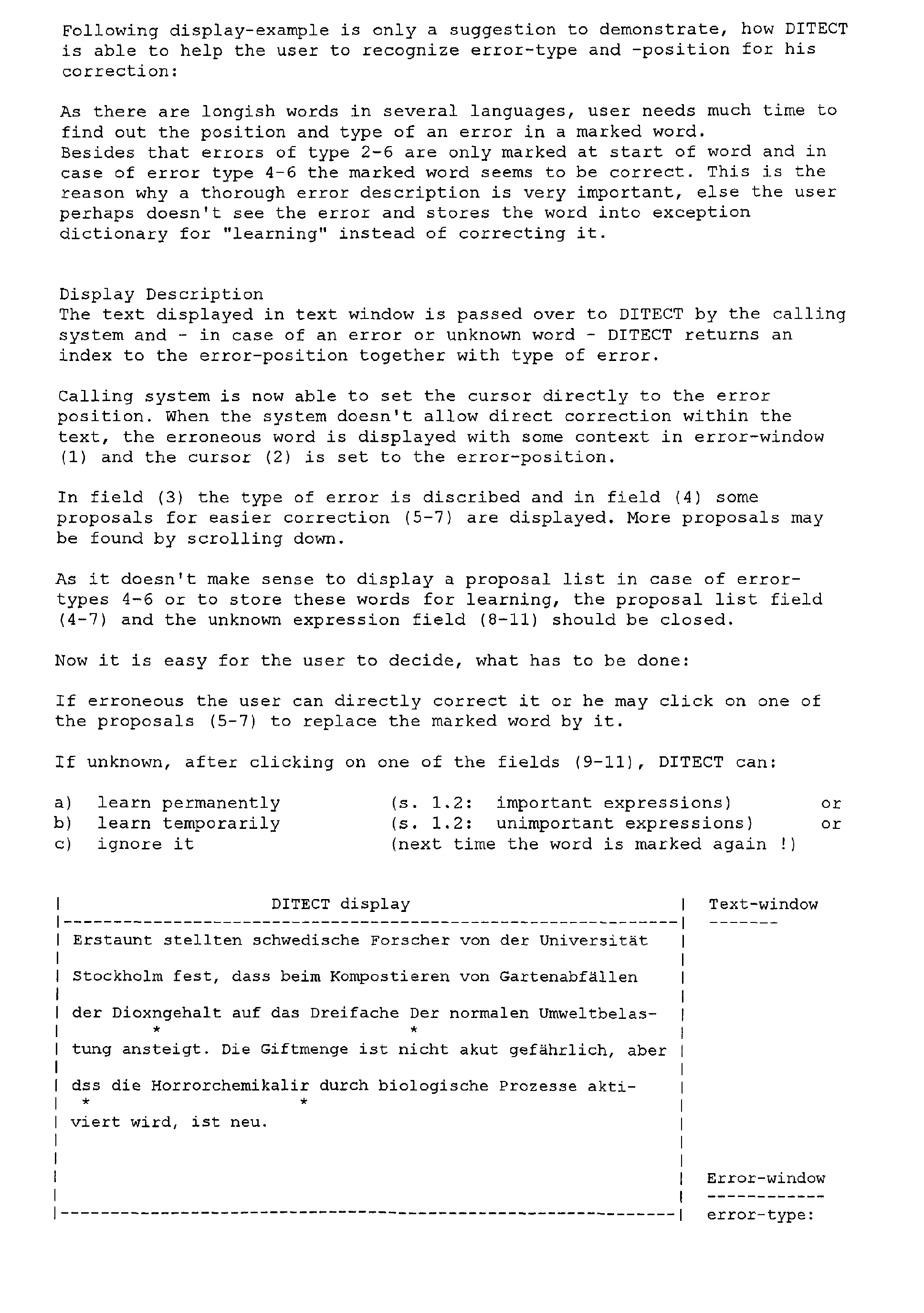

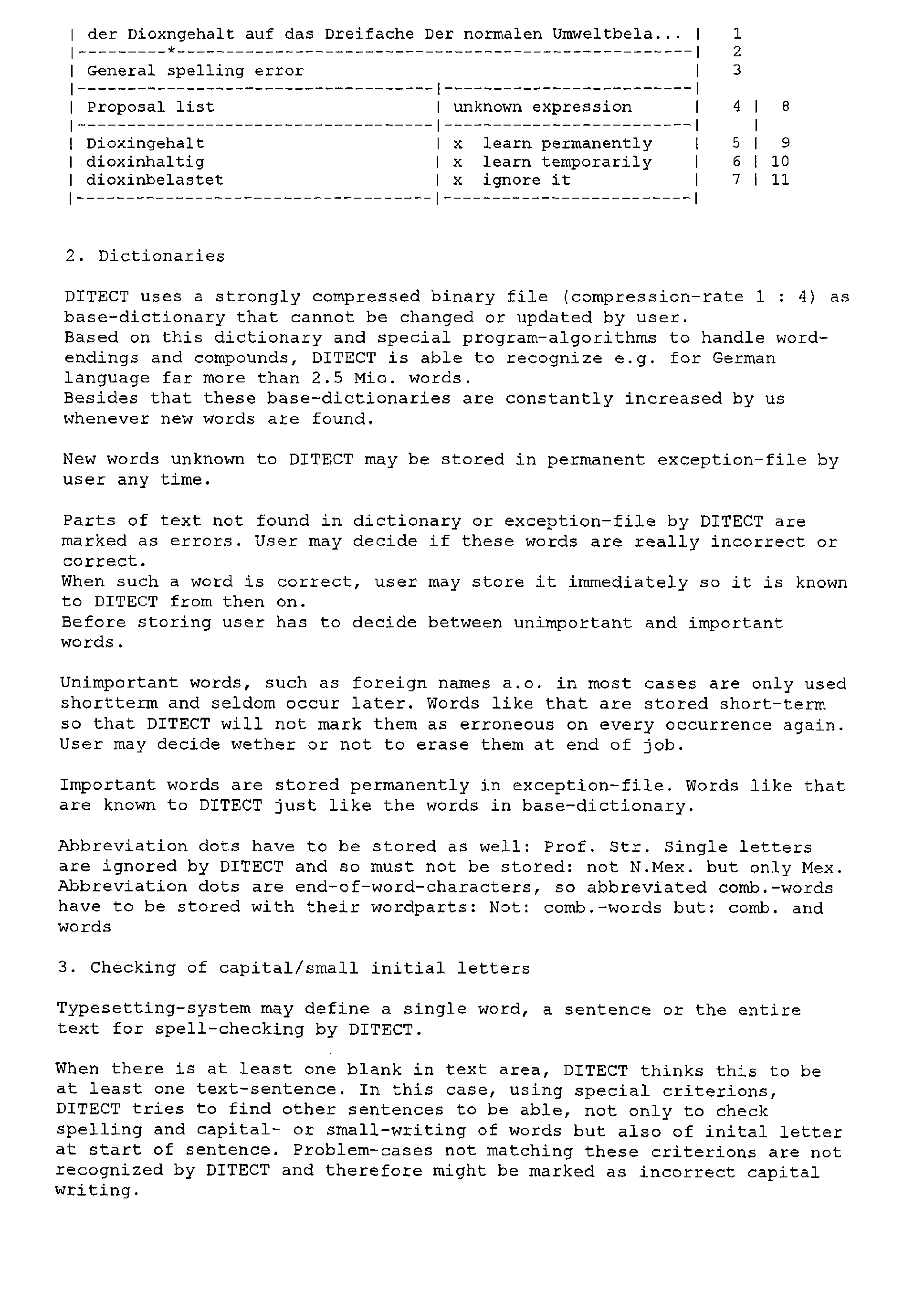

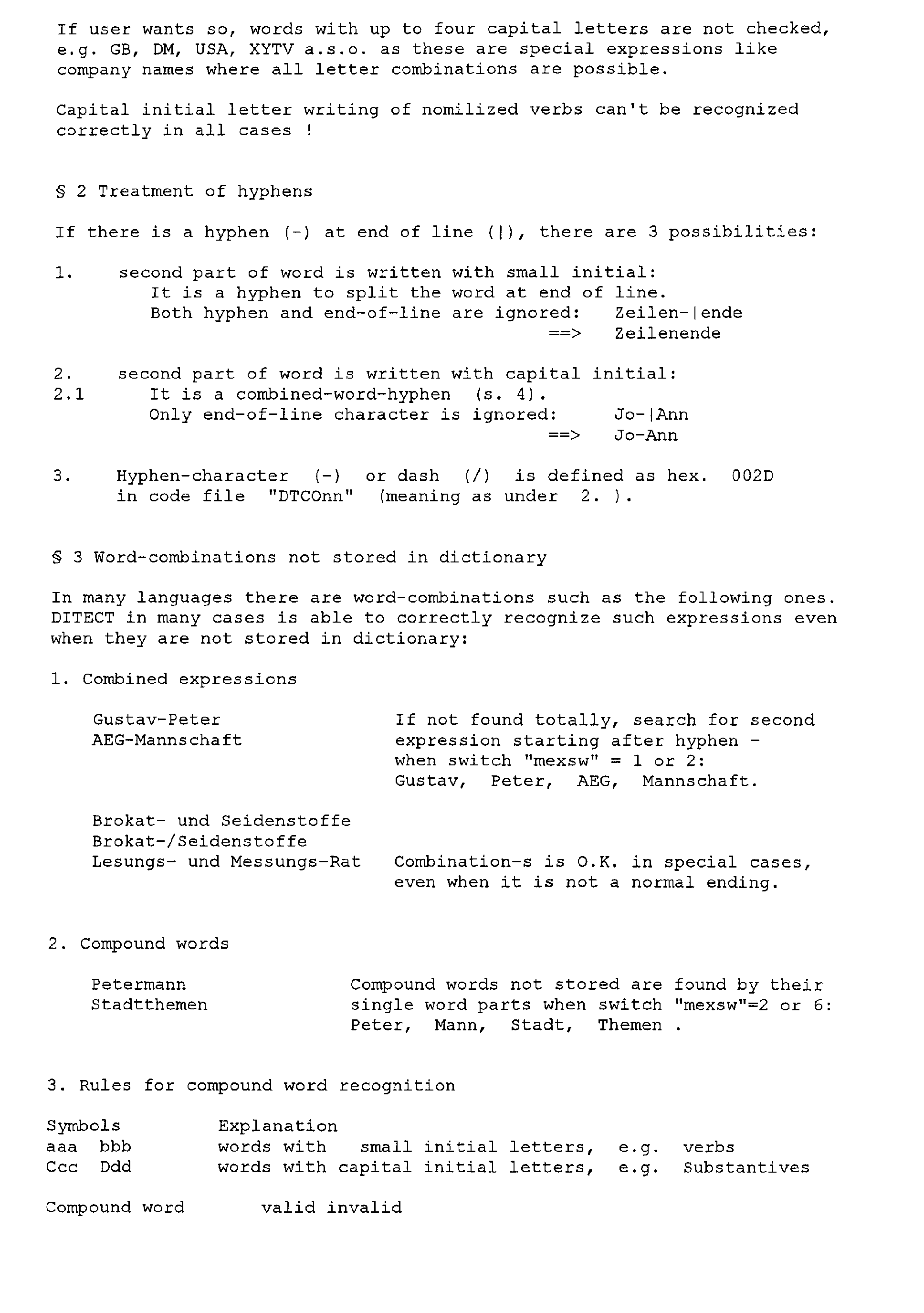

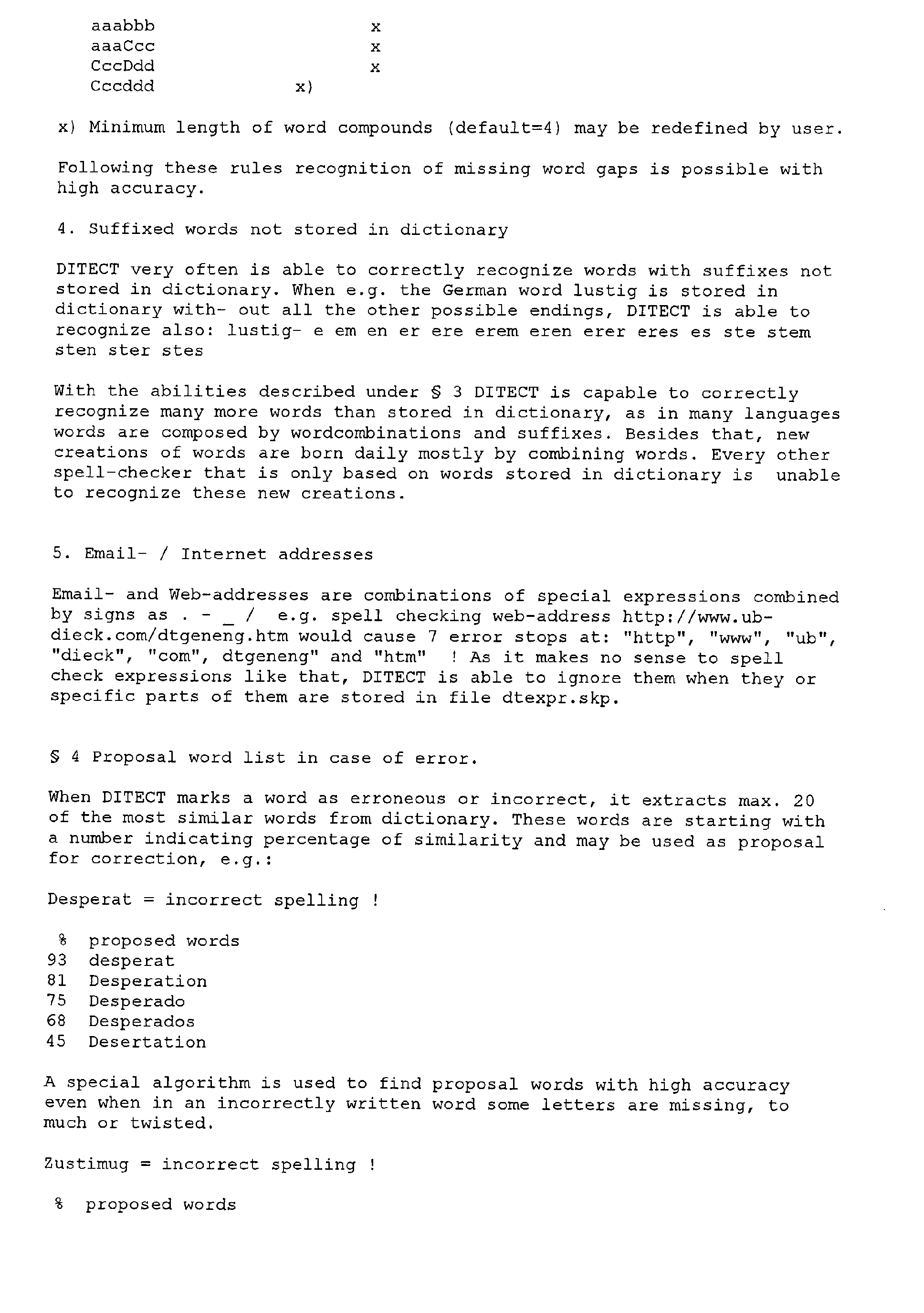

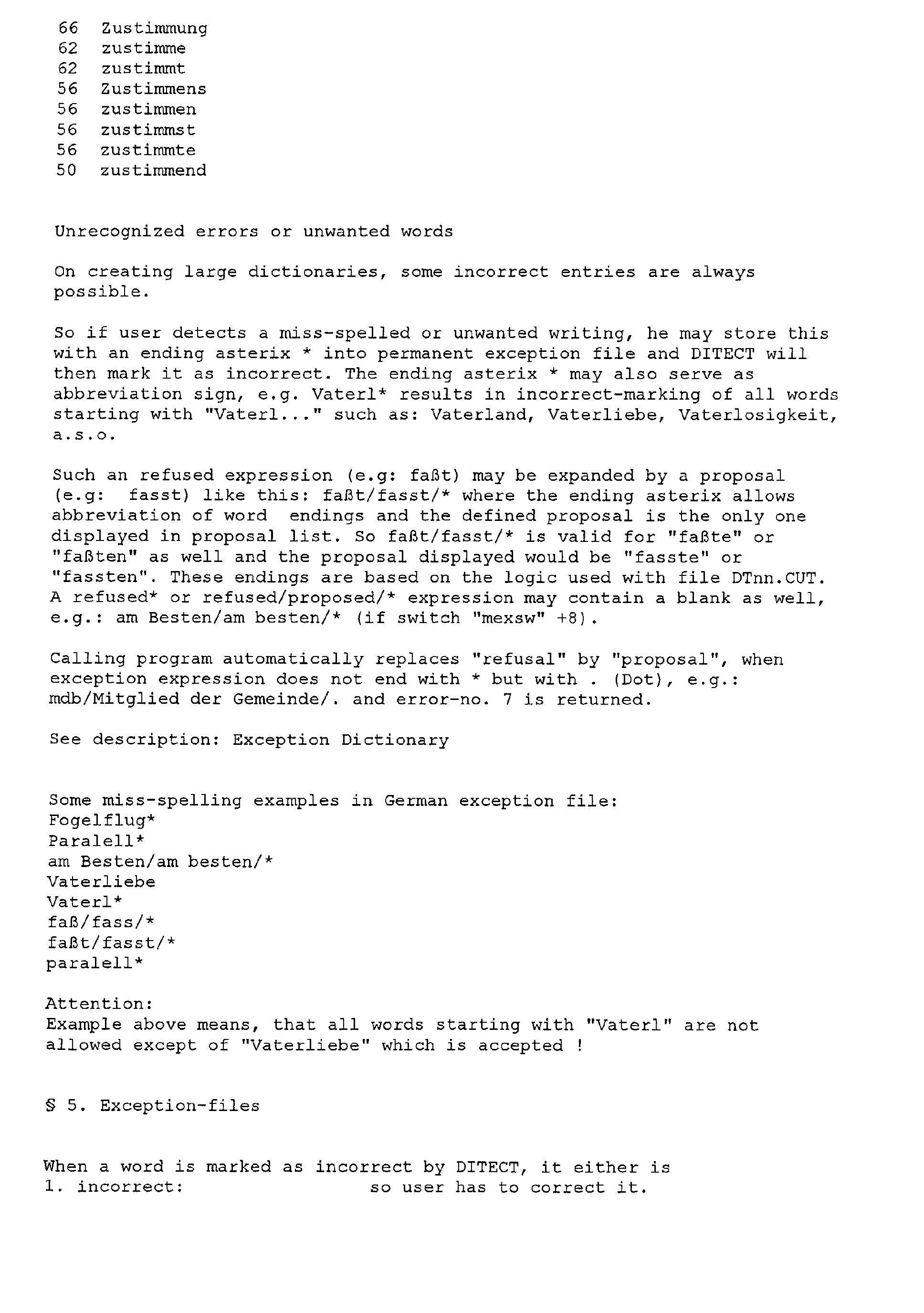

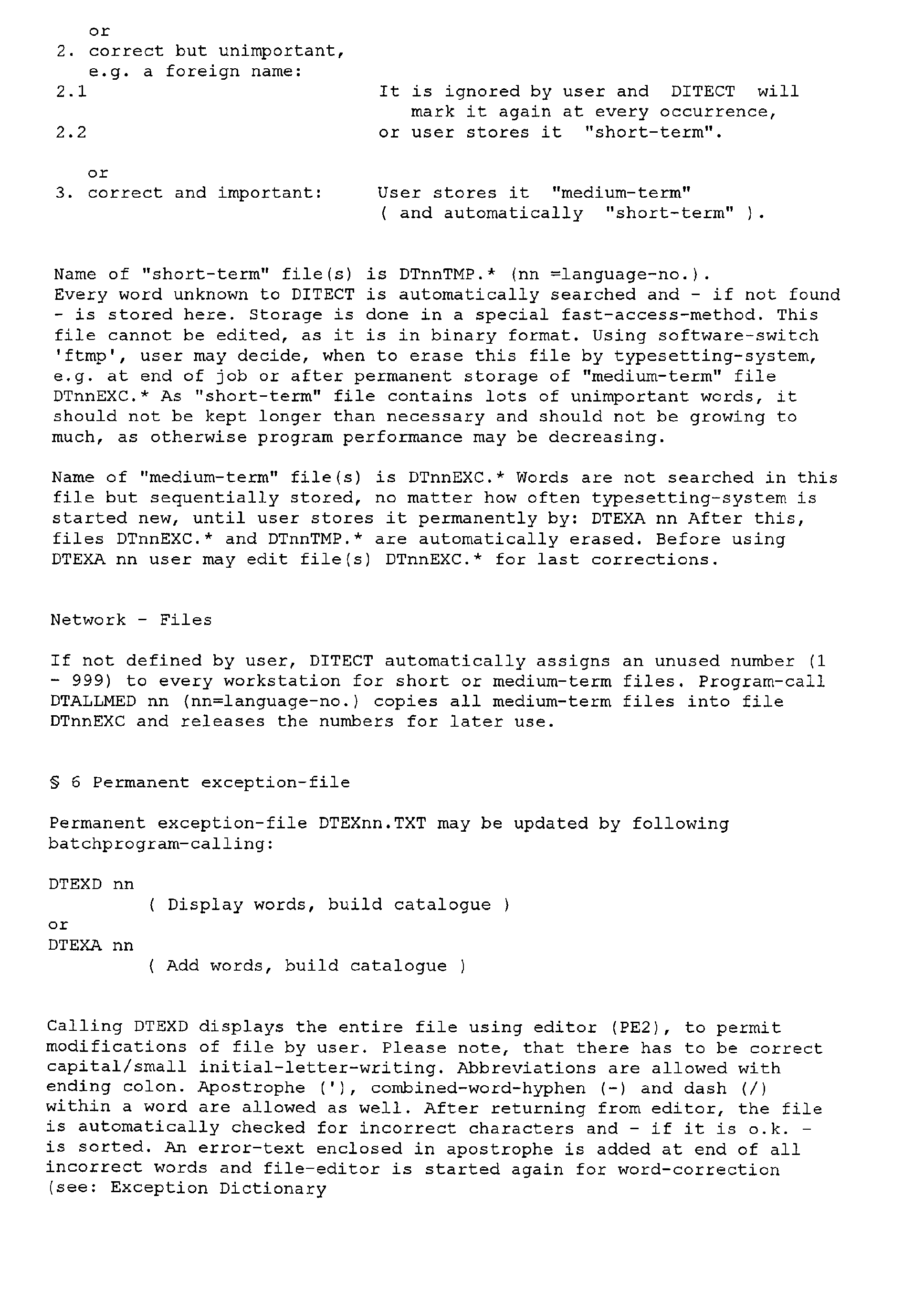

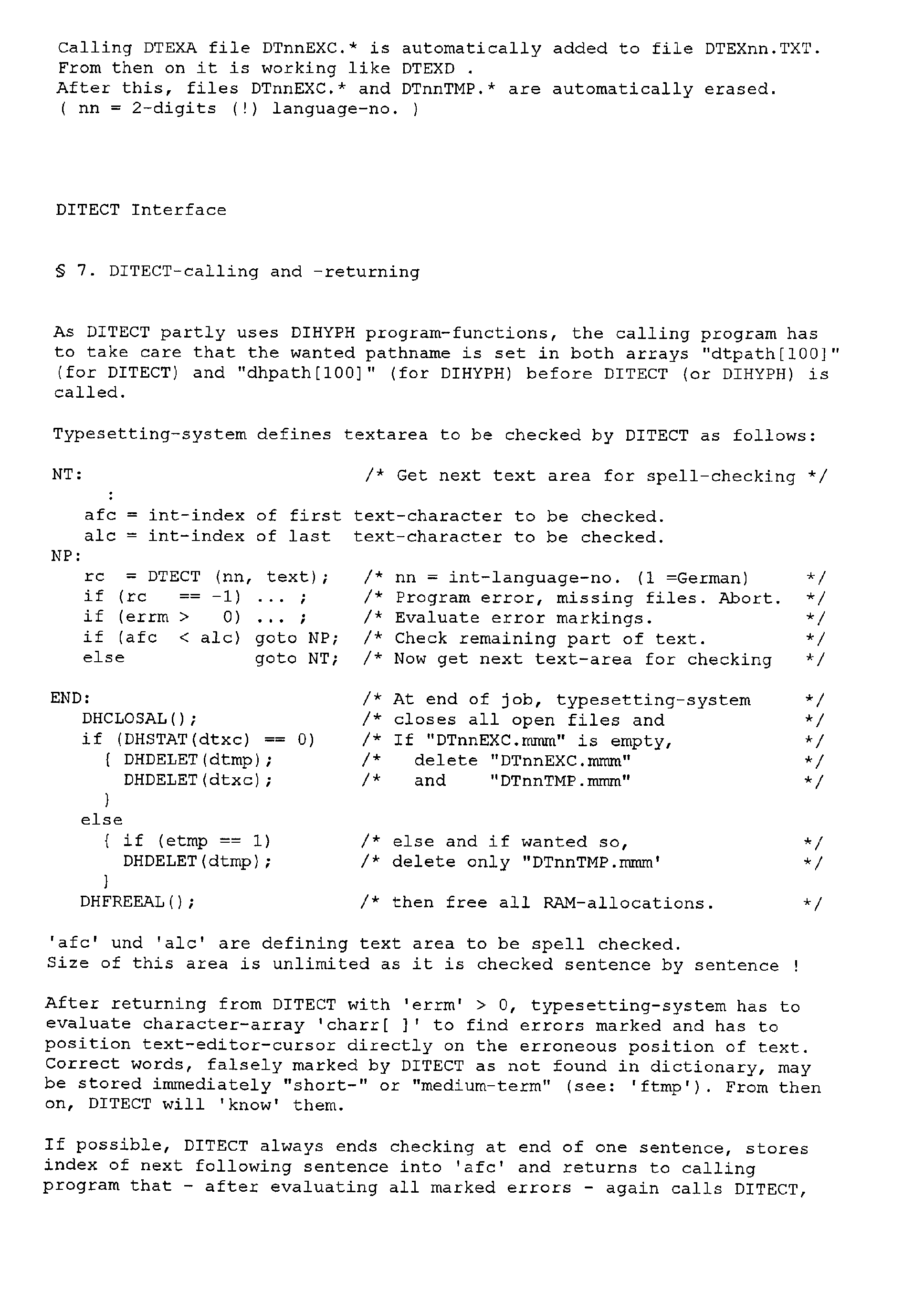

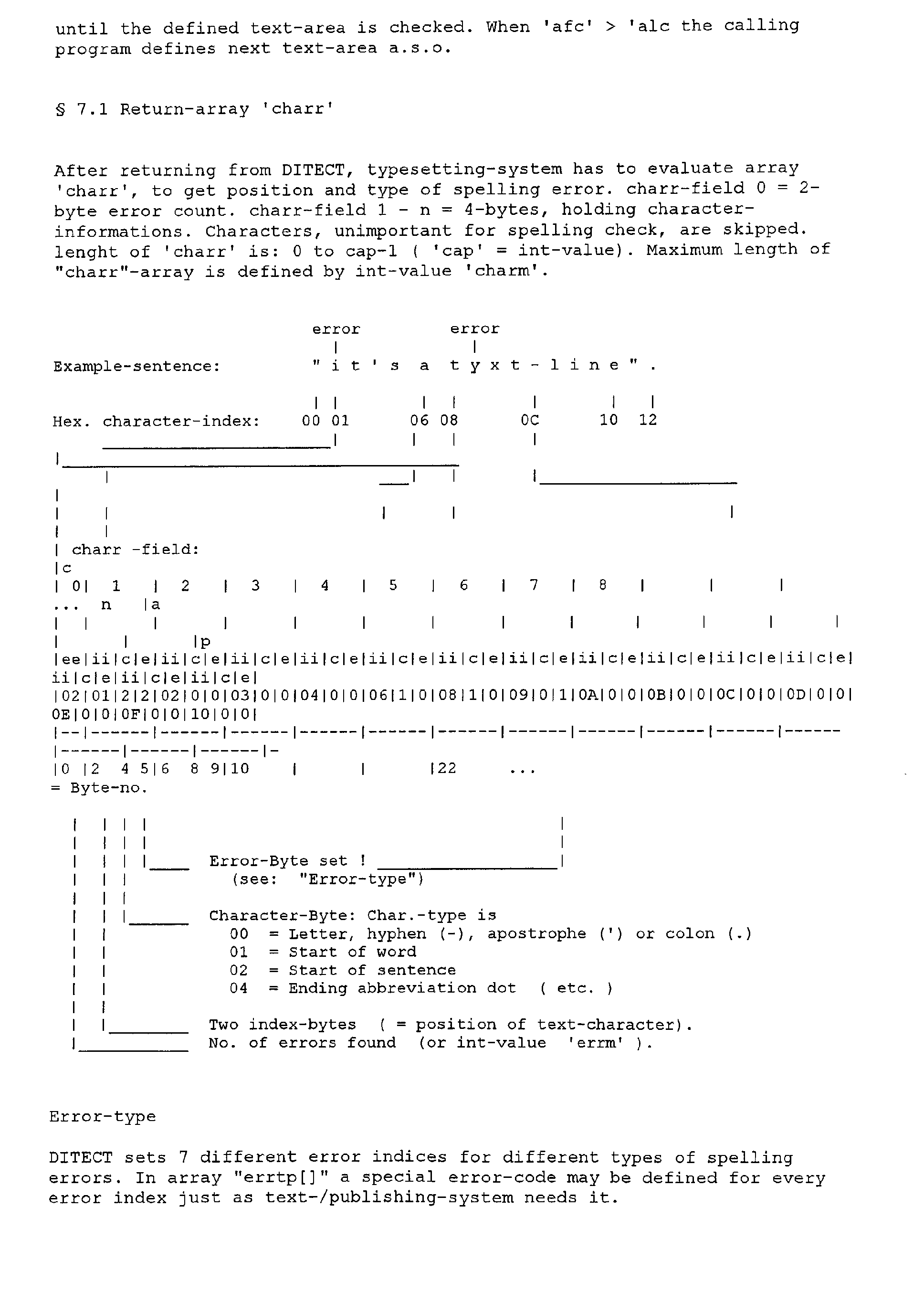

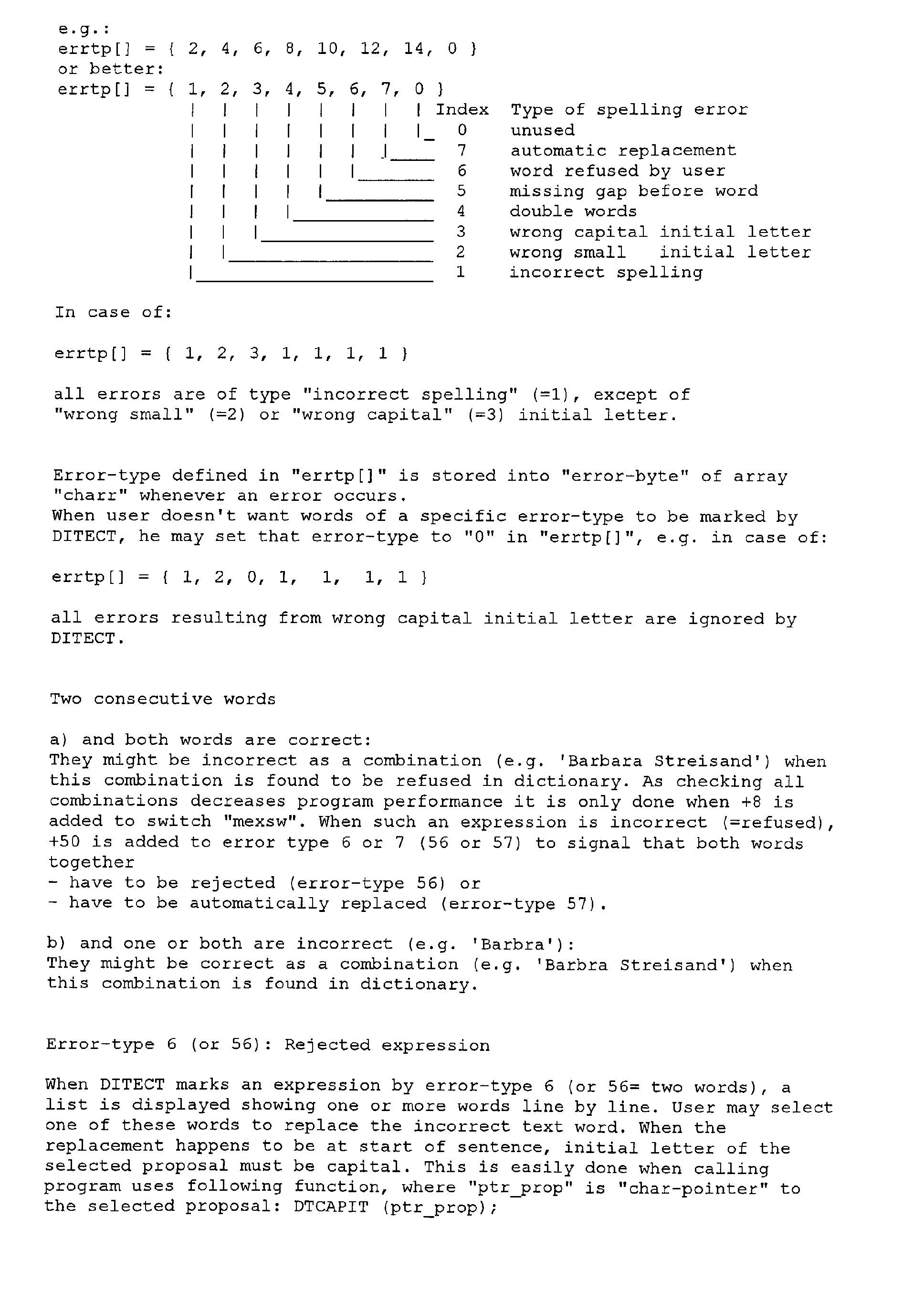

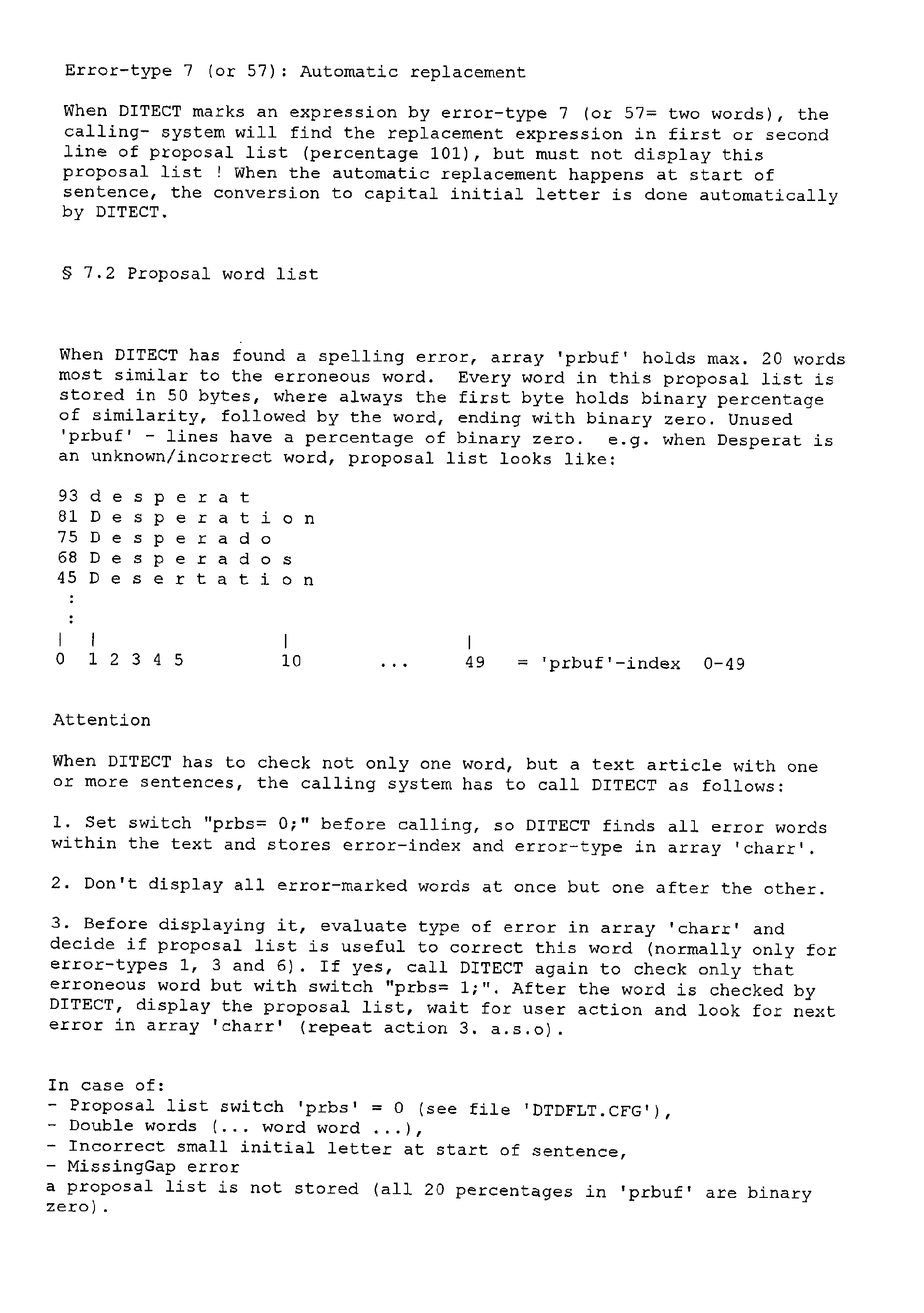

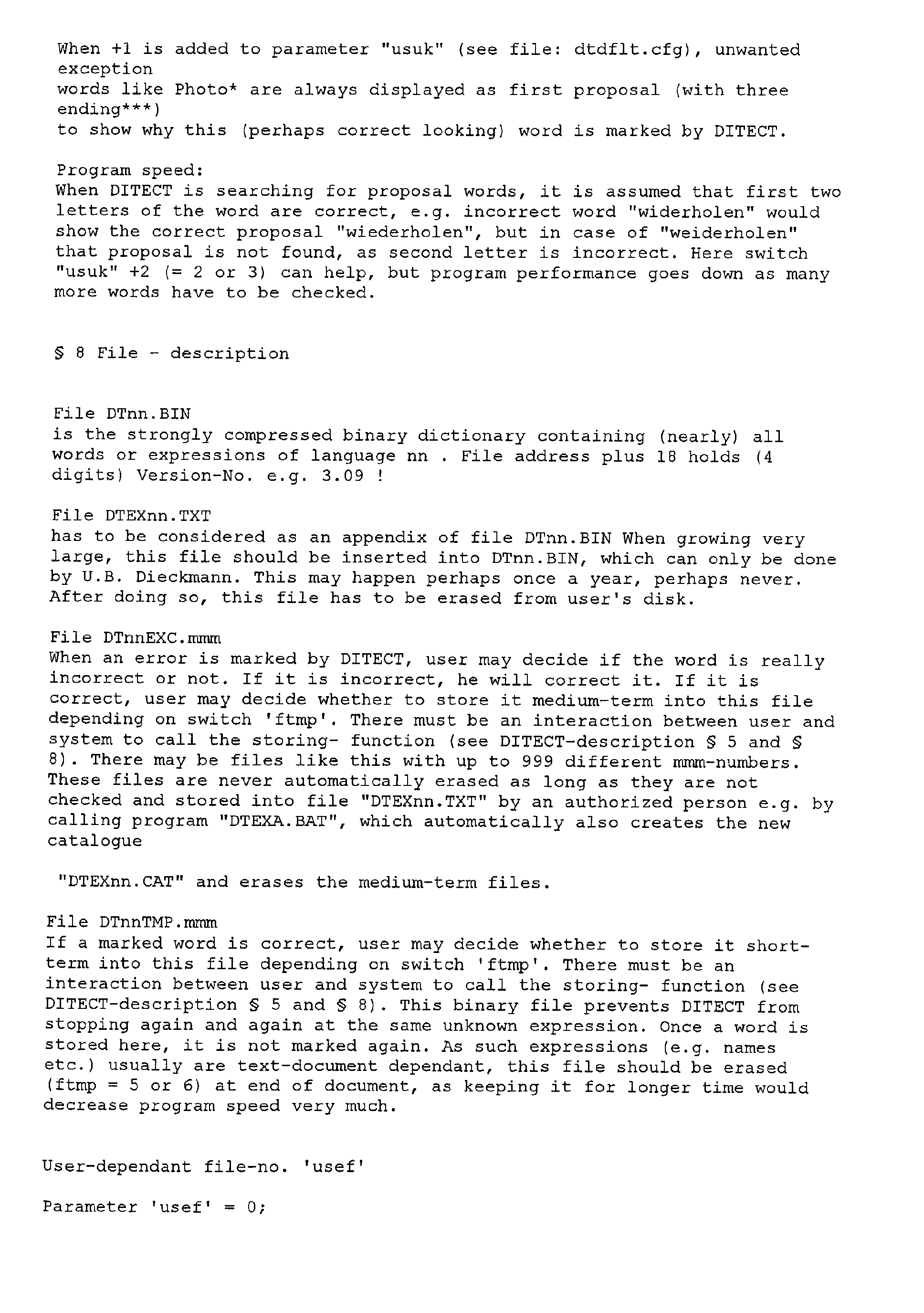

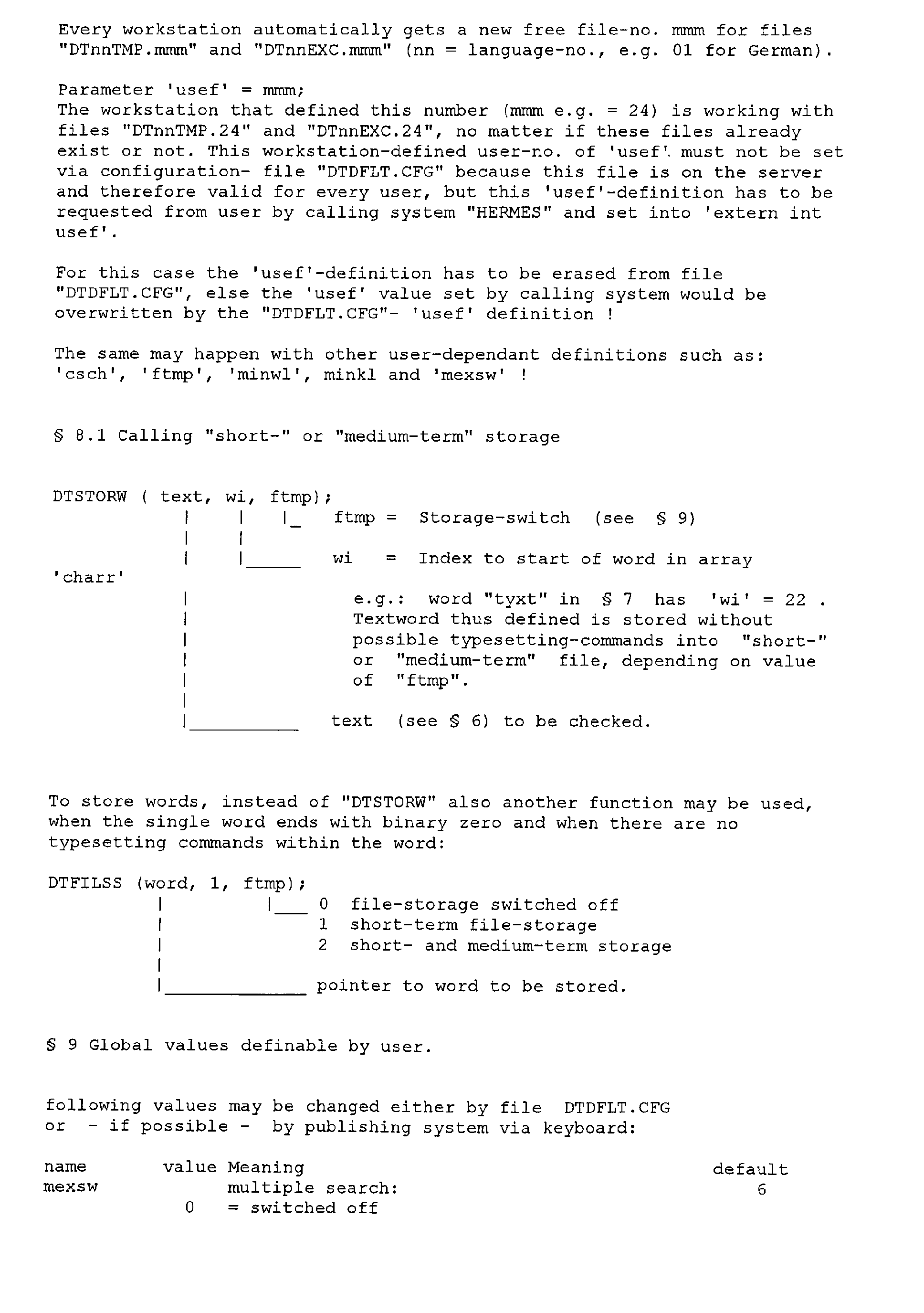

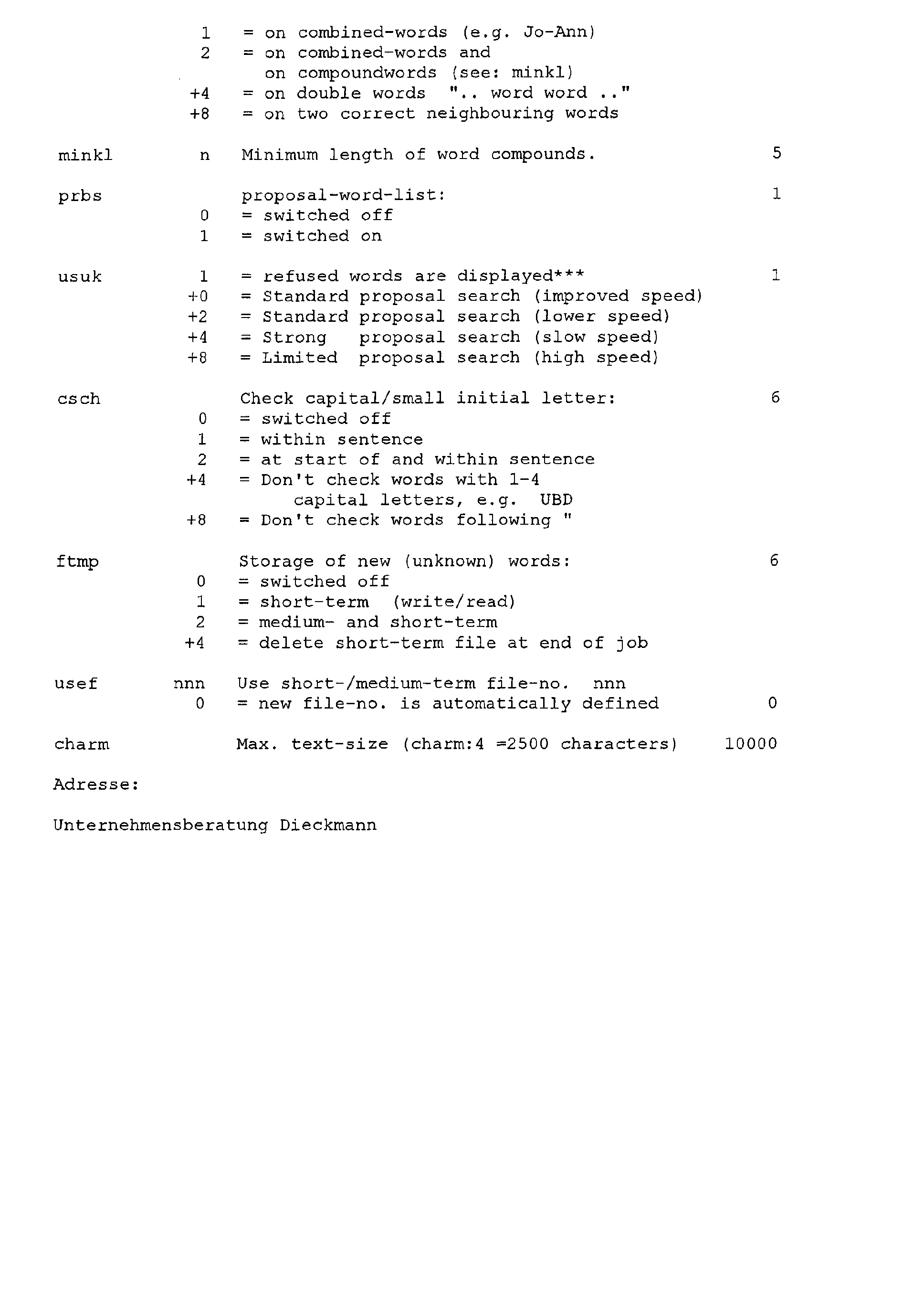

## Claims

1. A method in a data processing system for processing text elements, the data processing system having three programs, a text manipulation program, a check manager program, and a text element checking program, each program being separate from the others, the method being performed by the check manager program comprising the steps of:
receiving at least one text element from the text manipulation program; and
sending the at least one text element to the text element checking program to identify whether the at least one text element conforms to predetermined linguistic rules.

2. The method of claim 1, wherein each of the three programs runs as a separate process and communicates across process boundaries to the other of the three programs.

3. The method of at least one of the claims 1 and 2, wherein at least two of the programs communicate to each other using inter-process communications.

4. The method of at least one of the claims 1 to 3, wherein the predetermined linguistic rules comprise at least one element of the group consisting of:
- spell checking rules;
- grammar checking rules;
- hyphenation checking rules;
- rules for translating the text element to another language; and
- rules for finding a synonym for the text element.

5. The method of at least one of the claims 1 to 4, further comprising the step of receiving a result from the text element checking program indicating that the text element conforms to the predetermined linguistic rules.

6. The method of at least one of the claims 1 to 5, further comprising the step of receiving a result from the text element checking program indicating that the text element does not conform to the predetermined linguistic rules.

7. The method of claim 6, wherein the result comprises an indication that the text element requires modification.

8. The method of at least one of the claims 6 and 7, wherein the result comprises at least one suggestion for modifying the text element.

9. The method of at least one of the claims 6 to 8, further comprising the step of requesting the first program to modify the text element responsive to the received result.

10. The method of at least one of the claims 1 to 9, further comprising the step of: receiving a request from the text manipulation program to perform automatic text element processing, wherein the check manager program requests the first program to modify the text element responsive to a received result from the text element checking program without requiring a user input to approve the modification.

11. The method of at least one of the claims 1 to 10, further comprising the step of:
receiving a request from the text manipulation program to perform manual text element processing, wherein the check manager program requests the text manipulation program to modify the text element responsive to a result received from the text element checking program and to a user input approving the modification.

12. The method of at least one of the claims 1 to 11, wherein the at least one text element comprises a plurality of paragraphs each having at least one text element; and wherein sending the at least one text element to the text element checking program comprises sending one paragraph at a time to the text element checking program to identify whether the at least one text element of the paragraph conforms to predetermined linguistic rules.

13. The method of at least one of the claims 1 to 12, wherein the at least one text element comprises a plurality of sentences each having at least one text element; and wherein sending the at least one text element to the text element checking program comprises sending one sentence at a time to the text element checking program to identify whether the at least one text element of the sentence conforms to predetermined linguistic rules.

14. The method of at least one of the claims 1 to 13, wherein the at least one text element is a word.

15. The method of at least one of the claims 1 to 14, including receiving information on a required type of linguistic rules to be applied from the text manipulation program; and selecting at least one of a plurality of text checking programs based on the required type of linguistic rules.

16. The method of at least one of the claims 1 to 15, wherein the text checking program handles a user dialogue for controlling an interactive processing of text elements.

17. The method of at least one of the claims 1 to 16, wherein the information on the required type of processing further includes at least one of:
- a language identifier;
- a request for automatic processing; and
- a request for interactive processing of text elements.

18. A program having instructions adapted to cause data processing means to carry out the method of at least one of the claims 1 - 17.

19. A computer readable medium, in which a program is embodied, where the program is to make a computer execute the method of at least one of the claims 1 - 17.

20. A data processing system for processing text elements, the data processing system having three programs, a text manipulation program, a check manager program, and a text element checking program, each program being separate from the others, the check manager program comprising:
means for receiving at least one text element from the text manipulation program; and
means for sending the at least one text element to the text element checking program to identify whether the at least one text element conforms to predetermined linguistic rules.

21. The data processing system of claim 20, wherein each of the three programs runs as a separate process and communicates across process boundaries to the other of the three programs.

22. The data processing system of at least one of the claims 20 and 21, wherein at least two of the programs communicate to each other using inter-process communications.

23. The data processing system of at least one of the claims 20 to 22, wherein the predetermined linguistic rules comprise at least one element of the group consisting of:
- spell checking rules;
- grammar checking rules;
- hyphenation checking rules;
- rules for translating the text element to another language; and
- rules for finding a synonym for the text element.

24. The data processing system of at least one of the claims 20 to 23, further comprising:
means for receiving a result from the text element checking program indicating that the text element conforms to the predetermined linguistic rules.

25. The data processing system of at least one of the claims 20 to 24, further comprising:
means for receiving a result from the text element checking program indicating that the text element does not conform to the predetermined linguistic rules.

26. The data processing system of claim 25, wherein the result comprises an indication that the text element requires modification.

27. The data processing system of at least one of the claims 25 and 26, wherein the result comprises at least one suggestion for modifying the text element.

28. The data processing system of at least one of the claims 25 to 27, further comprising:
means for requesting the first program to modify the text element responsive to the received result.

29. The data processing system of at least one of the claims 20 to 28, further comprising: means for receiving a request from the text manipulation program to perform automatic text element processing, wherein the check manager program requests the first program to modify the text element responsive to a received result from the text element checking program without requiring a user input to approve the modification.

30. The data processing system of at least one of the claims 20 to 29, further comprising:
means for receiving a request from the text manipulation program to perform manual text element processing, wherein the check manager program requests the text manipulation program to modify the text element responsive to a result received from the text element checking program and to a user input approving the modification.

31. The data processing system of at least one of the claims 20 to 30, wherein the at least one text element comprises a plurality of paragraphs each having at least one text element; and wherein sending the at least one text element to the text element checking program comprises sending one paragraph at a time to the text element checking program to identify whether the at least one text element of the paragraph conforms to predetermined linguistic rules.

32. The data processing system of at least one of the claims 20 to 31, wherein the at least one text element comprises a plurality of sentences each having at least one text element; and wherein sending the at least one text element to the text element checking program comprises sending one sentence at a time to the text element checking program to identify whether the at least one text element of the sentence conforms to predetermined linguistic rules.

33. The data processing system of at least one of the claims 20 to 32, wherein the at least one text element is a word.

34. The data processing system of at least one of the claims 20 to 33, including
a secondary storage device having at least one text element;
a memory comprising the three programs; and
a processing unit that runs the three programs.

35. The data processing system of at least one of the claims 20 to 34, including a data structure, wherein the check manager program accesses the data structure and wherein the data structure has a plurality of entries, each entry comprising:
a first storage area that stores a current text element received from the text manipulating program; and
a plurality of second storage areas that each store one of a plurality of suggested replacement text elements corresponding to the current text element, the plurality of suggested replacement text elements received from the text element checking program responsive to the current text element not conforming to predetermined linguistic rules.

36. The data processing system of at least one of the claims 20 to 35, including means for receiving information on a required type of linguistic rules to be applied from the text manipulation program; and selecting at least one of a plurality of text checking programs based on the required type of linguistic rules.

37. The data processing system of at least one of the claims 20 to 36, wherein the text checking program is adapted to handle a user dialogue for controlling an interactive processing of text elements.

38. The data processing system of at least one of the claims 20 to 37, wherein the information on the required type of processing further includes at least one of:
- a language identifier;
- a request for automatic processing; and
- a request for interactive processing of text elements.

39. A data processing client for processing text elements, including a check manager program cooperating with a text manipulation program and a text element checking program, each program being separate from the others, the data processing client comprising:
means for receiving at least one text element from the text manipulation program; and
means for sending the at least one text element to the text element checking program to identify whether the at least one text element conforms to predetermined linguistic rules.

40. The data processing client of claim 39, further comprising:
means for receiving a result from the text element checking program indicating that the text element conforms to the predetermined linguistic rules.

41. The data processing client of at least one of the claims 39 and 40, further comprising:
means for receiving a result from the text element checking program indicating that the text element does not conform to the predetermined linguistic rules.

42. The data processing client of at least one of the claims 39 to 41, further comprising:
means for requesting the text manipulation program to modify the text element responsive to the received result.

43. The data processing client of at least one of the claims 39 to 42, further comprising: means for receiving a request from the text manipulation program to perform automatic text element processing, wherein the check manager program requests the first program to modify the text element responsive to a received result from the text element checking program without requiring a user input to approve the modification.

44. The data processing client of at least one of the claims 39 to 43, further comprising:
means for receiving a request from the text manipulation program to perform manual text element processing, wherein the check manager program requests the text manipulation program to modify the text element responsive to a result received from the text element checking program and to a user input approving the modification.

45. The data processing client of at least one of the claims 39 to 44, wherein the text manipulation program is located the data processing client.

46. The data processing client of at least one of the claims 39 to 45, including a data structure, wherein the check manager program accesses the data structure and wherein the data structure has a plurality of entries, each entry comprising:
a first storage area that stores a current text element received from the text manipulating program; and
a plurality of second storage areas that each store one of a plurality of suggested replacement text elements corresponding to the current text element, the plurality of suggested replacement text elements received from the text element checking program responsive to the current text element not conforming to predetermined linguistic rules.

47. The data processing client of at least one of the claims 39 to 46, including means for receiving information on a required type of linguistic rules to be applied from the text manipulation program; and selecting at least one of a plurality of text checking programs based on the required type of linguistic rules.

48. The data processing client of at least one of the claims 39 to 47, wherein the text checking program is adapted to handle a user dialogue for controlling an interactive processing of text elements.

49. The data processing client of at least one of the claims 39 to 48, wherein the information on the required type of processing further includes at least one of:
- a language identifier;
- a request for automatic processing; and
- a request for interactive processing of text elements.
